# EUROPEAN PATENT APPLICATION

(11) **EP 4 841 429 A1**
(43) Date of publication of application: **18.11.2026**
(21) Application number: 25202586.1
(22) Date of filing: 16.09.2025
(51) Int. Cl.: G06F 8/33, G06N 3/0475, G06N 20/00

(54) **COMPUTER-BASED AGENT**

(30) Priority: 16.05.2025 US 202563807265 P; 30.07.2025 US 202519285312; 30.07.2025 US 202519285215; 30.07.2025 US 202519285259
(71) Applicant: Palantir Technologies Inc., Aventura, Florida 33180 (US)
(72) Inventor: SHANKAR, Ankit, Denver, 80202 (US); SU, Emily, Denver, 80202 (US); KINDBLOM, Marie, Denver, 80202 (US)
(74) Representative: Jolliffe, Jack Louis

(57) **Abstract**

A system may receive user input(s) via a graphical user interface (GUI), defining one or more context items. The system may provide, in the GUI, editable representations of the context item(s). The system may generate prompts for a large language model (LLM) including the context item(s), provide the prompts to the LLM, and receive LLM responses. The system may provide, in the GUI, editable representations of the response(s), wherein the response(s) comprise at least one additional context item. The system may receive additional user input(s) via the GUI, indicating modification(s) to the context item(s) via an associated editable representation. User interaction with the representations may automatically and retroactively modify context items previously fed to the LLM. The system may automatically provide the modified context item(s) to the LLM.

## Description

### TECHNICAL FIELD

The present disclosure relates to systems and techniques for managing computational resources which may involve utilizing computer-based models. More specifically, the present disclosure relates to computerized systems and techniques for managing computational resources of artificial intelligence powered agents.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Computers can be programmed to perform calculations and operations utilizing one or more computer-based models. For example, computer-based agents (e.g., artificial intelligence ("AI")-powered agents) can be deployed by computing systems to solve various problems.

### SUMMARY

The systems, methods, and devices described herein each have several aspects, no single one of which is solely responsible for its desirable attributes. Without limiting the scope of this disclosure, several non-limiting features will now be described briefly.

Conventional systems typically hide the complexity of the inputs that are provided by a computerized system to an AI model, such as a large language model ("LLM"). For example, computerized systems often perform preprocessing on user input to expand said input, rewrite said input, and/or add context to said input before feeding the input to the LLM. Consequently, many systems avoid surfacing these transformed inputs to avoid user confusion and/or cognitive overload when users interact with said systems. However, prompting an LLM to generate useful (e.g., accurate, relevant) responses may be difficult with existing systems and techniques. This can be especially true when constructing complex prompts that include a variety of inputs provided by the user and/or by the computerized system, to an LLM in the course of executing a task pipeline to fulfill a user request. The lack of transparency in the inputs that are provided to an LLM can exacerbate this issue, as a user may be unable to identify why an LLM is producing inaccurate responses and/or encountering errors and/or where such errors are originating, such as a particular context item that may be steering the LLM in an unwanted direction. In some cases, errors encountered by an LLM during one phase of a task execution pipeline may propagate to later phases, further reducing the accuracy of LLM responses. Consequently, conventional systems may suffer from poor compute efficiency (e.g., high processing loads, high storage requirements, and/or high compute overhead) as users (typically through trial and error) construct a variety of prompts in the hope of obtaining accurate LLM responses, which can quickly consume large portions of an LLM's token window and/or result in a large quantity of LLM calls.

Advantageously, and according to various implementations, systems, methods, and associated functionality of the present disclosure (generally referred to herein as the "system"), can increase the accuracy (e.g., relevancy) of LLM responses. The system may surface editable representations of the various inputs (that are provided to an LLM) in a humanfriendly format such that a user can readily understand the content of the inputs that are provided to said LLM. In this way, a user can monitor and/or identify when, where, and why an LLM is producing inaccurate outputs, such as when context provided to the LLM is missing certain data items and/or includes incorrect data items. Additionally, the user may modify context items provided to the LLM to advantageously steer the LLM to generate more accurate outputs that align with user requests. In this way, the system can improve compute efficiency, such as by reducing processing loads, storage requirements, and/or compute overhead when interacting with LLMs. For example, by transparently surfacing inputs provided to an LLM in easy-to-understand formats and facilitating modifications to said inputs, the system can reduce the number of times that an LLM is called, reduce the token size of prompts passed into the LLM, and/or reduce the number of intermediate outputs required to arrive at an accurate final output.

Various combinations of the above and below recited features, embodiments, implementations, and aspects are also disclosed and contemplated by the present disclosure.

Additional implementations of the disclosure are described below in reference to the appended claims, which may serve as an additional summary of the disclosure.

In various implementations, systems and/or computer systems are disclosed that comprise one or more computer-readable storage mediums or devices comprising, configured to store, and/or storing program instructions, and one or more processors configured to execute the program instructions to cause the systems and/or computer systems to perform operations comprising one or more aspects of the above- and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising one or more computer-readable storage mediums or devices, and/or one or more computer-readable storage mediums or devices, are disclosed, wherein the computer-readable storage mediums comprise, are configured to store, and/or store program instructions, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings, wherein:
FIG. 1A is a block diagram illustrating an example agent system in an example computing environment, according to various implementations of the present disclosure.
FIG. 1B is a block diagram illustrating an example agent service, according to various implementations of the present disclosure.
FIG. 2A is a block diagram illustrating an object-centric conceptual data model, according to various implementations of the present disclosure.
FIG. 2B is a block diagram illustrating an example data object, in accordance with various implementations of the present disclosure.
FIG. 3 is a flow diagram illustrating an example process associated with one or more computer-based agents performing one or more tasks, in accordance with various implementations of the present disclosure.
FIGS. 4, 5, 6A-6B, 7, and 8A-8K illustrate example user interfaces associated with one or more agents performing one or more tasks and related functionality, in accordance with various implementations of the present disclosure.
FIG. 9 is a flow diagram illustrating an example process associated with computer-based agent context editing, in accordance with various implementations of the present disclosure.
FIGS. 10A-10C are flow diagrams illustrating examples processes associated with computer-based agent tool validation and approval, in accordance with various implementations of the present disclosure.
FIG. 11 is a flow diagram illustrating an example process associated with computer-based agent task management, in accordance with various implementations of the present disclosure.
FIG. 12 is a block diagram illustrating an example computer system useable with the various implementations of the present disclosure.

### DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be conducted in a manner that achieves or optimizes one advantage or group of advantages as taught herein without necessarily achieving other aspects or advantages as may also be taught or suggested herein.

### Overview

To facilitate an understanding of the systems and methods discussed herein, several terms are described below and throughout this specification. These terms, as well as other terms used herein, should be construed to include the provided descriptions, the ordinary and customary meanings of the terms, and/or any other implied meaning for the respective terms, wherein such construction is consistent with context of the term. Thus, the descriptions below do not limit the meaning of these terms, but only provide example descriptions.

The term "computer-based agent" (or "agent," "LLM-based agent," "AI-based agent," and/or "AI agent"), as used in the present disclosure, can refer to a computational decision-making computer-based entity that is designed to be specialized at solving data analysis tasks, such as analytical and/or computational tasks or problems, and/or a computer-based entity that can execute certain tools to solve specific tasks or problems. Agent evaluations, as described herein, are a type of data analysis task. The data analysis tasks or problems that a particular agent can solve can include simple (e.g., sending a single request to a large language model ("LLM") service) or more complex tasks (e.g., chaining a set of tools behind each other in a dynamic fashion to solve a complex problem). For example, a complex data analysis task or problem can include generating a software program as requested by a user query. According to various implementations, a computer-based agent can include a system (e.g., one or more computer-based and/or software systems) in which one or more LLMs dynamically and/or iteratively direct the processes, tasks, tool usage, and/or the like, of the agent and/or one or more LLMs. A computer-based agent can include a system (e.g., one or more computer-based and/or software systems) in which one or more LLMs and/or the agent maintains control over how the agent accomplishes one or more tasks. An agent that involves and/or includes an LLM can be referred to herein as a "LLM-based agent," and an agent that involves and/or includes a computer-based model and/or AI model (e.g., including LLMs) can be referred to herein as an "AI-based agent." In various implementations, an agent can be defined and/or configured by a combination of building blocks including one or more of: (1) agent logic: a core programmatic definition on how this specific agent should interact with the available tools, configurations, and the user; (2) tools: a defined set of tools available for the specific agent; (3) guardrails: a security mechanism to control the interaction of the agent with the system, such as permissions regarding ontology access; and (4) agent storage (herein also referred to as "agent memory"): a data store and/or memory space allowing an individual agent to keep track of relevant information (e.g., messages and accessories) during and across runs. Further details on computer-based agents are described in U.S. Pat. App. Pub. No. 2025/0110786, published April 3, 2025, and titled "AGENT OPS FRAMEWORK," the entire contents of which is hereby incorporated herein by reference in its entirety.

A "software application" (or "application") can be any computer-executable program or group of programs, scripts, routines, and/or the like, designed to perform specific tasks for users. The tasks performed can range from productivity functions, such as document processing, email management, and spreadsheet management, to entertainment, such as gaming and media playback, or other types of tasks. A software application may be built to run on various platforms, including desktop computers, mobile devices, servers, web browsers and/or the like, and they can interact with the underlying operating system to utilize hardware resources and provide a user interface for interaction. A software application may be developed using programming languages and frameworks that are suited to the target platform. A software application can be used to perform various actions (e.g., send or unsend an email, edit or update a document, or the like) on various data objects of data object types (e.g., a document data object, a log data object, an email data object, or the like).

The term "configuration" (or "settings"), as used in the present disclosure in relation to an agent, can refer to a configuration and/or specification of aspects of an agent related to the agent's operation, functionality, and/or the like. For example, a configuration can include a version-controlled specification of information and/or pointers to the building blocks of an agent and/or versions of the building blocks. For example, an agent can be configured to a specific configuration of settings that associates the agent with a specific ontology, an LLM, one or more tools, one or more accessories, and/or the like.

The term "coordinator" (or "agent coordinator"), as used in the present disclosure, can refer to an entity that manages interactions among other entities (e.g., agents). For example, the term "agent coordinator" can refer to an entity that manages interactions among agents deployed by an agent system. The agent coordinator may serve a role similar to a control tower to ensure agents act in coordination with each other in an intentional manner. For example, an agent coordinator may supervise handoffs of problems, tasks, or sub-tasks among agents to ensure handoffs are robustly performed and do not interfere with processing of other tasks or sub-tasks. In various implementations, an agent coordinator may be a type and/or implementation of an agent, and/or an agent may serve as its own agent coordinator.

The term "tool," as used in the present disclosure, can refer to a specific capability that is available to an agent to solve a given problem. In its core, a tool may be mostly responsible for performing a deterministic action. A tool may allow an agent to interact with the operational system, an ontology, internal databases and system, and/or external systems. A tool can be any set of logic or rules that can be provided to an agent for the agent's use, such as to obtain additional information by generating a request for access to additional data via a plug-in. Thus, a tool can be used by an agent to generate requests (that may be fulfilled by the system) to perform operations such as querying datasets, processing data including filtering or aggregating data, writing to datasets (e.g., adding or updating rows of a table, editing or updating an object type, updating parameter values for an object instance, generating a new object instance), implementing integrated applications (e.g., an email or SMS application), communicating with external application programming interfaces (APIs), and/or any other functions that communicate with other external or internal components. Example tools include ontology function tool, date/time tool, query objects tool, calculator tool, apply action tool, and/or the like. In various implementations, tools can include an LLM, another agent, and/or the like. Tools, or the set of logic they comprise for performing one or more operations, may be defined by a system, external database, ontology, and/or a user.

"Tool information" can include information associated with a tool that is available to an agent and/or provided to an LLM, and is descriptive of and/or usable to implement the tool functionality. Tool information can indicate how data is structured, such as in an ontology. Tool information can indicate properties associated with a particular data object type, such as a data object type associated with a selected tool. Tool information can include instructions for implementing a tool. Tool information can include instructions for generating a tool call to use the tool, including instructions for formatting a tool call. In some implementations, tool information can comprise tool implementation examples for executing one or more tool operations which can include pre-defined examples, user-selected examples, user-generated examples, and/or examples that are automatically dynamically configured based on context. In various implementations, tool information can include tool definitions, which may describe the function(s) of the tool and how to execute the tool. For example, the tool definition can indicate inputs (e.g., datasets) required to call the tool. In various implementations, tool information can include tool parameters (e.g., tool settings) that dictate tool behavior. For example, this can include whether the system (e.g., an agent) can autoexecute a tool call, or whether the agent requires user authorization to execute a tool call.

The term "run," (or "task run") as used in the present disclosure, can refer to a set of operations of an agent system in performance of a task, such as one or more invocations and/or interactions with an LLM and/or data source (and/or the like). An individual run can refer to a full interaction of the user with the agent system, or a user session operated by the user. Information associated with a run can be stored by an agent system, for example as a data object defined by an ontology, to facilitate automation orientation and/or co-pilot orientation. Information associated with a run can include the initial prompt provided by the agent to an LLM, subsequent prompts received from a user and/or generated by the agent, starting and end timestamps of the individual run, status (e.g., completed, succeeded, failed, or the like) of the individual run, timelines of occurrence of events while the agent executing the individual run, intermediate results generated by the agent, child-agents to which the agent handoffs tasks, number of errors committed by the agent when utilizing some tools, or the like.

The term "accessory," as used in the present disclosure, can refer to any information, for example computer-readable information, which may be useful or necessary for agents to process tasks. An accessory may be known to be correct to an agent system. Accessories may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. An accessory may be permissioned and/or subject to various security constraints such that the accessory may be accessible to some agents but inaccessible to other agents. Accessories may be generated or created by agents during processing tasks but may also be provided by users based on demands of users. Example accessories may include: (a) the calculated sum of items in an inventory, (b) an identification (ID) of a document containing needed information, (c) a result of a system operation, such as creation of a new user. Accessories may be stored as Objects in an ontology or may be stored in other data formats. Accessories can include artifacts, knowledge, examples, and/or queries, such as verified artifacts, knowledge, examples, and/or queries. Accessories may be multimodal. Accessories can be of simple types, such as string, double, integer, or the like, and can also be of more complex types, such as images, data frames, sound files, or the like. Accessories can be created by agents and/or by users of an agent system. For example, as part of executing a run, an agent may utilize a set of tools to create new accessories. As another example, before starting a run, users can select relevant existing accessories and/or create new accessories that contain relevant information for the specific problems to be solved. An agent system can track a lineage of an accessory to know, for example, which accessories were used by which tools to create the accessory. In various implementations, an accessory may be a tool that is accessible by the system (e.g., accessible by an agent) in response to a tool call, or include a tool. In various implementations, an accessory can include context.

The term "model," as used in the present disclosure, can include any computer-based models of any type and of any level of complexity, such as any type of sequential, functional, or concurrent model. Models can further include various types of computational models, such as, for example, artificial neural networks ("NN"), language models (e.g., large language models ("LLMs")), artificial intelligence ("AI") models, machine learning ("ML") models, multimodal models (e.g., models or combinations of models that can accept inputs of multiple modalities, such as images and text), and/or the like. A "nondeterministic model" as used in the present disclosure, is any model in which the output of the model is not determined solely based on an input to the model. Examples of nondeterministic models include language models such as LLMs, ML models, and the like.

A "language model" is any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, and/or the like). A language model may generate many combinations of one or more next words (and/or sentences) that are coherent and contextually relevant. Thus, a language model can be an advanced artificial intelligence algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

A "Large Language Model" ("LLM") is any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. LLMs may work by taking an input text and repeatedly predicting the next word or token (e.g., a portion of a word, a combination of one or more words or portions of words, punctuation, and/or any combination of the foregoing and/or the like). An LLM may be of any type, including a Question Answer ("QA") LLM that may be optimized for generating answers from a context, a multimodal LLM/model, a diffusion-based LLM/model, any combination of the foregoing or the like, and/or the like. An LLM (and/or other models of the present disclosure) may include, for example, a NN trained using self-supervised learning and/or semi-supervised learning, a feedforward NN, a recurrent NN, and/or the like. An LLM (and/or other models of the present disclosure) may further include, for example, attention-based and/or transformer architecture or functionality.

While certain aspects and implementations are discussed herein with reference to use of a language model, LLM, and/or AI, those aspects and implementations may be performed by any other language model, LLM, AI model, generative AI model, generative model, ML model, NN, multimodal model, diffusion-based model, other algorithmic processes, and/or any combination of the foregoing or the like. Similarly, while certain aspects and implementations are discussed herein with reference to use of a ML model, language model, or LLM, those aspects and implementations may be performed by any other AI model, generative AI model, generative model, NN, multimodal model, diffusion-based model, other algorithmic processes, and/or any combination of the foregoing or the like.

In various implementations, the LLMs and/or other models (including ML models) of the present disclosure may be locally hosted, cloud managed, accessed via one or more Application Programming Interfaces ("APIs"), and/or any combination of the foregoing and/or the like. Additionally, in various implementations, the LLMs and/or other models (including ML models) of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

Examples of models, language models, and/or LLMs that may be used in various implementations of the present disclosure include, for example, Bidirectional Encoder Representations from Transformers (BERT), LaMDA (Language Model for Dialogue Applications), PaLM (Pathways Language Model), PaLM 2 (Pathways Language Model 2), Generative Pre-trained Transformer 2 (GPT-2), Generative Pre-trained Transformer 3 (GPT-3), Generative Pre-trained Transformer 4 (GPT-4), Claude, Gemini, LLaMA (Large Language Model Meta AI), and BigScience Large Open-science Open-access Multilingual Language Model (BLOOM).

"User input" (or "natural language input," "user query", "user operation," and/or the like) can be any inputs and/or operations performed by one or more users to user interface(s) and/or other user input devices associated with a system. Such user inputs can include a term, phrase, question, query, and/or statement written in a human language (e.g., English, Chinese, Spanish, and/or the like) that is provided by a user, such as via a keyboard, mouse, touchscreen, voice recognition, and/or other input device. User input can include a task to be performed, such as by an agent and/or LLM, in whole or in part. User input can include a request for data, such as data accessed and/or processed by one or more services. User input can indicate one or more tools associated with the user request or task which may facilitate performing the task. User input can indicate one or more data object types associated with a tool. User input can indicate one or more actions associated with a tool. User input can include a user selection of a format for a response from an agent and/or LLM. User input can include a user-defined variable to which a response may be saved.

A "data processing service" (or "service" or "plug-in") can be any software and/or computer-based service that receives and/or responds to requests for data and/or data processing. Such a service may be accessible via an API that is exposed to an agent, an agent system, other remote systems, and/or the like, and can allow data processing requests to be received via, e.g., API calls from those systems (e.g., an agent). Such a service may be implemented as a plug-in. A few examples of services or plug-ins include a table search service, a filter service, an object search service, a text search service, or any other appropriate search service, indexing services, services for formatting text or visual graphics, services for generating, creating, embedding and/or managing interactive objects in a graphical user interface, services for caching data, services for writing to databases, LLM services, or any other data retrieval, processing, and/or analysis function and/or the like.

A "prompt" (or "natural language prompt" or," "model input")," and/or the like) can be, for example, a term, phrase, question, and/or statement written in a human language (e.g., English, Chinese, Spanish, and/or the like), and/or other text string, that may serve as a starting point for a language model and/or other language processing. A prompt may include only a user query or may be generated based on a user query, such as by a prompt generation module (e.g., of a document search system) that supplements a user query with instructions, examples, and/or information that may improve the effectiveness (e.g., accuracy and/or relevance) of an output from the language model. The supplement to the user query can include the files stored in the memory bank. For example, the files in the memory bank can include ontology documentation, which can be based on documentation template and information indicative of an ontology. A prompt may be provided to an agent (which can include an LLM), which the agent can use to generate a response (or "model output"). The agent can generate the response by causing generation and execution of one or more search queries.

A "search query" can be, for example, an input and/or item of instruction recognizable and/or usable by an agent to determine how to interact with tools. The agent can generate the response by causing generation of the search query, which can include portions of the prompt provided to the agent, and causing execution of the search query to access data objects of the data object types defined by the ontology documentation. The search query can act as an action plan, and/or be used to determine an action plan, that provides steps on how the agent can solve the data analysis tasks or problems provided in the prompt. The agent can generate one or more search queries to solve the data analysis tasks or problems. If the output of the search query does not result in solving the data analysis tasks or problems or if there is an unexpected error result (such as a result differing from the action plan), then the result can be used in causing generation of another search query. The result and computational process caused by the agent can be displayed to the user, such as for troubleshooting. In some instances, the system can adjust what is displayed to the user to be a term, phrase, question, and/or statement written in a human language (e.g., English, Chinese, Spanish, and/or the like), and/or other text string.

"Context" (or "context items") can be any information associated with user inputs, prompts, responses, and/or the like that are generated and/or communicated to/from the user, the agent system, an agent, the LLM, the data processing services, and/or any other device or system. For example, context may include a conversation history of all of the user inputs, prompts, search queries, tool usage, and responses of a user session. Context may be provided to an agent and/or an LLM to help an LLM understand the meaning of and/or to process a prompt, such as a specific piece of text within a prompt. Context can include information associated with a user, user session, or some other characteristic, which may be stored and/or managed by a context module. Context may include all or part of a conversation history from one or more sessions with the user (e.g., a sequence of user prompts and orchestrator selector responses or results, and/or user selections (e.g., via a point and click interface or other graphical user interface). Thus, context may include one or more of: previous analyses performed by the user, previous prompts provided by the user, previous conversation of the user with the language model, schema of data being analyzed, a role of the user, a context of the data processing system (e.g., the field), and/or other contextual information.

A context module may provide all or only a relevant portion of context to a selection module for use in selecting one or more data processing services and/or service orchestrators (e.g., configured to generate requests to data processing services) for use in generating a properly formatted service request. Context can include tool information. Context can include tool implementation examples. In various implementations, context may include identification of services and parameters of prior operations, but not underlying data that was accessed or retrieved by the service (e.g., use of graph visualization service and graph parameters without indicating the data illustrated in the graph). In various implementations, context may include some or all of the underlying data accessed or retrieved by the service.

An "ontology" can include stored information that provides a data model for storage of data in one or more databases and/or other data stores. For example, the stored data may include definitions for data object types and respective associated property types. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions, or indications of associated functions, associated with data object types, which functions may be executed when a data object of the associated type is accessed. An ontology may constitute a way to represent things in the world. An organization may use an ontology to model a view on what objects exist in the world, what their properties are, and how they are related to each other. An ontology may be user-defined, computer-defined, or some combination of the two. An ontology may include hierarchical relationships among data object types. An organization may use an ontology to model a view of, or provide a template for, what objects exist in the world, what their properties are, and how they are related to each other.

A "data object" (or "object" or "data object instance") can be a data container for information representing a specific thing in the world that has a number of definable properties. For example, a data object can represent an interaction (e.g., recording events occurred during the interaction) between a user and an agent system. A data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object. The object's attributes (also referred to as "contents") may be represented in one or more properties. Attributes may include, for example, metadata about an object, such as a geographic location associated with the item, a value associated with the item, a probability associated with the item, an event associated with the item, and so forth. A data object may be of a data object type, where the data object is stored in a database that is associated with an ontology that defines the data object type.

A "data object type" (or "object type") can be a type of a data object (e.g., person, event, document, and/or the like). Data object types may be defined by an ontology and may be modified or updated to include additional object types. A data object definition (e.g., in an ontology) may include how the data object is related to other data objects, such as being a sub-data object type of another data object type (e.g., an agent may be a sub-data object type of a person data object type), and the properties the data object type may have.

"Ontology documentation" can be, for example, instructions, examples, and/or information that may improve the effectiveness (e.g., accuracy and/or relevance) of the agent, and/or that can supplement the user query to generate a prompt. Ontology documentation can be based on a documentation template and/or information indicative of an ontology. Information indicative of the ontology can include indications of definitions of data object types of the ontology. According to various implementations, the documentation template may or may not be tied to any particular ontology. For example, the documentation template may be ontology-agnostic. However, in various implementations, the ontology documentation can be formed, using the documentation template, to be specific to a particular ontology by specifying the documentation template with the information indicative of the ontology.

For example, the documentation template can include instructions on how to access properties of a data object type, such as but not limited to, property names, property objects, and property types for each property associated with the data object type. This documentation template for properties of a data object type can also access these property values in particular formats, such as a markdown format. The information indicative of the ontology can be used to specify a desired ontology that the documentation template can be used to focus onto. For example, the information indicative of the ontology can include the list of data object types defined by an ontology. Accordingly, the ontology documentation for properties can be specific to the data object types defined by the ontology and provide instructions on how to access properties associated with each of those specific data object types. The documentation template can include, but is not limited to, information on how to access and/or search an ontology, example values for data object types and properties, and/or the like. The ontology documentation can include some or all of the information provided by the documentation template, which, in various implementations, may be specified to be particular to a desired ontology.

A "data store" can be any computer-readable storage medium and/or device (or collection of data storage mediums and/or devices). Examples of data stores include, but are not limited to, optical disks (e.g., CD-ROM, DVD-ROM, and the like), magnetic disks (e.g., hard disks, floppy disks, and the like), memory circuits (e.g., solid state drives, randomaccess memory (RAM), and the like), and/or the like. Another example of a data store is a hosted storage environment that includes a collection of physical data storage devices that may be remotely accessible and may be rapidly provisioned as needed (commonly referred to as "cloud" storage). According to various implementations, any data storage, data stores, databases, and/or the like described in the present disclosure may, in various implementations, be replaced by appropriate alternative data storage, data stores, databases, and/or the like.

A "database" can be any data structure (and/or combinations of multiple data structures) for storing and/or organizing data, including, but not limited to, relational databases (e.g., Oracle databases, PostgreSQL databases, MySQL databases, and the like), non-relational databases (e.g., NoSQL databases, and the like), in-memory databases, spreadsheets, comma separated values (CSV) files, eXtensible markup language (XML) files, TeXT (TXT) files, flat files, spreadsheet files, and/or any other widely used or proprietary format for data storage. Databases are typically stored in one or more data stores. Accordingly, each database referred to herein (e.g., in the description herein and/or the figures of the present application) can be understood as being stored in one or more data stores. Additionally, although the present disclosure may show or describe data as being stored in combined or separate databases, in various implementations such data may be combined and/or separated in any appropriate way into one or more databases, one or more tables of one or more databases, and/or the like. According to various implementations, any database(s) described in the present disclosure may be replaced by appropriate data store(s). Further, data source(s) of the present disclosure may include one or more databases, one or more tables, one or more data sources, and/or the like, for example.

"Memory" can be information stored in a database, data store, and/or the like, based on current and/or prior runs by an agent. An agent may read from memory files during performance of a project or data analysis task. For example, the system can include more frequently updated short-term memory (which can be contextual to a current project), and less frequently updates long-term memory (which can be the agent's understanding of novel architectures and system patterns across projects). The more frequently updated memory, which can usually be associated with a particular project, task, or data analysis task, may be referred to as "project specific memory" ("PSM") or short-term memory. The less frequently updated memory, which can be used, accessed, updated, and/or the like, by multiple agents and across projects, tasks, or data analysis tasks, may be referred to as "shared based memory" ("SBM") or long-term memory. Short-term memory may generally be associated with performance of a particular project or task, while long-term memory may generally be associated with multiple projects or tasks. Or in other words, knowledge and/or insights that may generally be useful across multiple projects or tasks may be stored in long-term memory. Based on a particular task, the files within the memory initialized and added to a directory by the agent can differ. Because long-term memory may be substantially more voluminous than short-term memory, the agent may only read relevant parts of long-term memory during performance of a project or task. Relevant parts of long-term memory may be determined using LLM-based analysis, semantic search, and/or the like. The memory of the system can include compounding. Compounding describes the accumulation and/or consolidation of knowledge and insights as learnings across multiple tasks, and can be enabled by storing of such knowledge and insights in one or more shared memory files, and reading such knowledge and insights from the one or more memory files. Advantageously, the learnings of one agent can be shared with all other agents by compounding the learnings into memory files in a shared long-term memory.

Conventional systems typically hide the complexity of the inputs that are provided by a computerized system to an AI model, such as an LLM. For example, computerized systems often perform a variety of preprocessing on user input to expand said input, rewrite said input, and/or add context to said input before feeding the input to the LLM. Consequently, many systems avoid surfacing these transformed inputs to avoid user confusion and/or cognitive overload when users interact with said systems. However, prompting an LLM to generate useful (e.g., accurate, relevant) responses may be difficult with existing systems and techniques. This can be especially true when constructing complex prompts that include a variety of inputs provided by a user and/or a computerized system, such as various datasets, code repositories, databases, functions, tools and related tool information, tool calls, other context, other useful information, and/or the like that may be utilized by an LLM in the course of executing a task pipeline to fulfill a user request. The lack of transparency in the inputs that are provided to an LLM can exacerbate this issue, as a user may be unable to identify why an LLM is producing inaccurate responses and/or encountering errors and/or where such errors are originating, such as a particular context items (e.g., a tool) that may be steering the LLM in an unwanted direction. In some cases, errors encountered by an LLM during one phase of a task execution pipeline may propagate to later phases, further reducing the accuracy of LLM responses. Consequently, conventional systems may suffer from poor compute efficiency (e.g., high processing loads, high storage requirements, and/or high compute overhead) as users (typically through trial and error) construct a variety of prompts in the hope of obtaining accurate LLM responses, which can quickly consume large portions of an LLM's token window and/or result in a substantial quantity of LLM calls.

Advantageously, and according to various implementations, systems, methods, and associated functionality of the present disclosure (generally referred to herein as the "system"), can increase the accuracy (e.g., relevancy) of LLM responses. The system may surface editable representations of the various inputs (that are provided to an LLM) in a humanfriendly format such that a user can readily understand the content of the inputs that are provided to said LLM. In this way, a user can monitor and/or identify when and why an LLM is producing inaccurate outputs, such as when context provided to the LLM is missing certain data items and/or includes incorrect data items. Additionally, the user may modify context items provided to the LLM to advantageously steer the LLM to generate more accurate outputs that align with user requests. For example, a user may interact with editable representations of the context items to modify one or more portions of the context items, which modified context items may be automatically fed to the LLM. Modification of context can include providing context items with missing information (e.g., a missing resource identifier), correcting incorrect information included in a context item (e.g., a tool definition describes an incorrect object type), removing incorrect information from a context item, removing certain context altogether, adding context, replacing certain context with more useful context, and/or the like. In this way, the system can improve compute efficiency, such as by reducing processing loads, storage requirements, and/or compute overhead when interacting with LLMs (or other AI models). For example, by transparently surfacing inputs provided to an LLM in easy-to-understand formats and facilitating modifications to said inputs, the system can reduce the number of times that the system calls an LLM, reduce the token size of prompts passed into the LLM, and/or reduce the number of intermediate outputs required to arrive at an accurate final output.

In various implementations, user modification of context items can retroactively modify context items previously fed to the LLM. In this way, the system can modify the conversation history of the LLM (e.g., modify the state that is passed into the LLM when the LLM is called). Since the entire state of the LLM is typically passed into the LLM each time it is called, retroactive modification of context can modify that state and/or context of the LLM such that LLM responses are more accurately aligned with user queries. Furthermore, because context information can be retroactively modified, the LLM can be provided with suitable context information without performing additional computing operations to re-generate the context information in accordance with the modified context information.

Additionally, the system can provide one or more computer-based agents to handle tasks or sub-tasks associated with a user request. in various implementations, agents can perform tasks associated with modifying context items, validating tools, executing tools calls, and managing various tasks. For example, agents can automatically modify context items (e.g., in response to user interaction with editable representations) and provide the modified context items to the LLM. In some examples, agents can analyze context items to determine whether additional information is required to utilize the context items, such as analyzing a tool definition to determine whether additional information is needed to execute a tool call. In some examples, tools can be configured (e.g., via tool parameters) to be automatically executed by the agent. In some examples, agents can analyze LLM outputs to determine notification conditions that may require user review or approval prior to further processing, such that the user may address potential risks for LLM error or LLM hallucination. Alone or in combination, these various aspects of the present disclosure can further increase the accuracy of LLM and/or agent operations and responses, while also reducing computational loads, storage requirements, and/or compute overhead of computerized systems (and/or agents) that interact with LLMs (or other AI models).

### Agent Configurations

Computer-based agents deployed in an agent system (or AI system) may be configurable based on various settings or parameters. Agents in the system may share one or more common building blocks (e.g., an agent logic that defines how agents operate and/or interact with each other, tools, and/or users) but may be configured to various configurations by the system and/or users. In some implementations, an agent can be configured or reconfigured to be associated with various ontologies, large language models (LLMs), tools, accessories, storages, or the like. For example, a first configuration of an agent may associate the agent with a first set of ontologies, LLMs, tools, accessories, and storages and a second configuration of the agent may associate the agent with a second set of ontologies, LLMs, tools, accessories, and storages. The system may flexibly (e.g., based on user demands) reconfigure an agent from one configuration to another configuration. Advantageously, reconfigurable agents enable the system to swap or switch agent configurations to achieve various objectives. For example, the system may feed the same input(s) to two agents that are configured the same except LLMs utilized by the two agents to evaluate or benchmark performances of the LLMs. As another example, when an agent is tasked to solve a problem related to a new subject matter, the system and/or users may reconfigure the agent to utilize an ontology that is created or updated based on the new subject matter.

In some implementations, configurations of an agent can be version controlled by the system. For example, the system may assign version numbers (e.g., a string of text) to corresponding configurations of agents and keep track of configurations of agents using version numbers. More specifically, a first configuration of an agent may be assigned or identified by a first version number and a second configuration of the agent may be assigned or identified by a second version number. Additionally and/or optionally, the system may assign identification numbers (IDs) to components (e.g., one or more ontologies, LLMs, tools, and storages) of configurations of agents. For example, a first LLM and a first ontology in a first configuration of a first agent may be assigned a first LLM ID and a first ontology ID, and a second LLM and a second ontology in a second configuration of a second agent may be assigned a second LLM ID and a second ontology ID. Advantageously, version controlled configurations and/or IDs assigned to components of configurations may allow the system robustly and effectively track operations of agents, adapt agents among various configurations, or contrast strengths and weakness of an agent when operating under disparate configurations. In various implementations, the system may utilize pointers to access or point to an ontology, LLM(s), tool(s), accessory, storage(s), or one or more configurations associated with the agent.

Additionally, the system may generate and maintain a log to record events, timelines, received inputs, or generated outputs while an agent processes tasks. The log may describe events that occurred while the agent processes tasks and corresponding timestamps, inputs received from users and/or the system, and/or results generated by the agent while processing tasks. In various implementations, the log may record number of errors committed by the agent while processing tasks. Advantageously, the log may allow the system or users to effectively monitor or evaluate performances of agents for taking appropriate measures (e.g., re-train an agent for processing a particular type of task in response to monitoring a high error number from the agent while processing the particular type of task).

### Agent Handoffs

Agents may be configured to coordinate with each other to process tasks collaboratively. In some implementations, agents may coordinate with other agents by handing off tasks (e.g., a partially completed task) to other agents that are suitable or specialized in performing a next step in the tasks. For example, when an agent determines that a task which the agent is processing requires specialized capability, for example in terms of a particular ontology, LLM, tools, accessories, agent storage, or other aspects of an agent, the agent may handoff some or all of the task to another agent that has been trained or tested to efficiently solve the task. For example, a first agent may comprise settings including a first configuration that indicates or specifies that it is suitable or specialized in performing a first type or first group of tasks and less specialized in performing at least a second type or second group of tasks. For example, a second agent may comprise settings including a second configuration that indicates or specifies that it is suitable or specialized in performing the second type or second group of tasks and, possibly, that it is less specialized in performing at least the first type or first group of tasks. The first and second configurations may be provided in metadata or other formats stored by, or at least accessible to, the first and second agents. The term less specialized may refer to an agent being capable of performing a type of task but in a less processing efficient manner than a more specialized agent, for example because it requires extra data or a manual intervention by a user. For example, for a video processing task involving both video and audio content, a first agent may comprise a first configuration that indicates that it is more capable of, or specialized for, performing image and video processing tasks (e.g., because it comprises or has access to various types of image-based models, libraries, and/or codecs) but less capable of, or specialized for, performing related audio processing tasks relative to a second agent. For example, the second agent may have a configuration that indicates that it has access to various types of audio-based models, libraries and./or codecs that means that the second agent will be able to handle the audio processing in a more computationally efficient manner than the first agent which handles the image/video processing tasks better than the second agent. For example, the first agent may know in advance, or have access to, the configuration of the second agent, and can determine based on, for example, the metadata of said configuration that it should hand-off the audio processing task (or sub-task) to the second agent. The resulting processed video and audio data can be merged or combined by either the first agent, the second agent or a third agent. Other use cases can be envisaged other than video and/or audio processing, for example tasks involving two or more sub-tasks that involve different types of processing. These tasks may involve languagebased tasks and sub-tasks, examples of which are given below.

In various implementations, an agent may handoff some (e.g., sub-tasks) or all of a task to one or more child agents which may specialize in processing specific types of tasks or sub-tasks. The parent-child agent relationship can be configurable. For example, an agent can be configured to have child agent(s), and the child agent(s) may be explicitly specified in a configuration of the agent, where a configuration of the child agent(s) may also explicitly specify the agent as a parent agent. As such, the parent-child agent relationship(s) can be bi-directional. An agent can be a parent of another agent, and can also be a child of still another agent. Advantageously, handing off tasks to child agents provides multiple improvements over utilizing a single and large agent to process tasks. For example, handing off sub-tasks to child agents that have been proven to process the sub-tasks efficiently enables the system to effectively process requests from users to return accurate and reliable results. Handing off tasks may further reduce the update or maintenance cost of agents of the system because updates on or migration of agents can be targeted and tailored toward subsets of agents of the system.

When an agent (or coordinator, as discussed further below) determines that handoff of a sub-task to a child agent should occur, the agent (and/or coordinator) may identify information to provide to the child agent to aid in performance of the sub-task. For example, an agent may select one or more accessories (e.g., pieces of information) that are useful for the child agent to process the sub-task, and share the one or more accessories with the child agent. The agent may determine whether an accessory can be shared with the child agent based on permission of users or the system. An accessory, once shared by the agent to the child agent, may provide useful information to the child agent in processing a task or a sub-task more efficiently without the need to discover, generate, or obtain the accessory by the child agent itself.

The system may further allow various types of handoffs depending on use cases or tasks submitted by users. For example, the system may allow blocking handoffs, where an agent may handoff a task to a child agent, pauses until receiving a result from the child agent, and then proceeds after receiving the result. As another example, the system may allow parallel handoffs, where an agent may handoff tasks in parallel to multiple child agents, and, without waiting for results from the child agents, continues to process other tasks or sub-tasks that the agent is processing without handing off. Advantageously, various handoffs schemes enable the system to more flexibly and efficiently utilize agents to process tasks based on characteristics of the tasks. In various implementations, the system may limit number of handoffs associated with task(s) or sub-task(s). For example, for some types of tasks, the system may limit the handoffs of the task that may occur at most twice (e.g., an agent can handoff the task to two child agents) or other numbers. Advantageously, limiting number of handoffs on some or all types of tasks may increase security of the system and reduce likelihood of extensive looping of tasks that could occur if a set of tasks are attempting to incrementally optimize an output.

### Agent Accessories

Accessories are information that may be useful or necessary for agents to process tasks. Accessories may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. An accessory may be permissioned and/or subject to various security constraints such that the accessory may be accessible to some agents but inaccessible to other agents. Accessories may be generated or created by agents during processing tasks but may also be provided by users based on demands of users. For example, when an agent is tasked to perform statistical analysis on production data of a production facility to provide recommendation on how to increase production volume, the user may provide a spreadsheet or other data files that include production data as an accessory for the agent to process the task. Alternatively and/or optionally, accessories may be generated, discovered, synthesized, or created by agents while processing certain tasks. For example, while processing a task that needs to take into account particular information, an agent searched through on-line databases to identify a document containing the particular information and saved the particular information along with a document ID of the document as an accessory. Additionally and/or optionally, accessories may be created by agents using tools while processing tasks. For example, an accessory may be a result generated by an agent while processing a task, where the result may be utilized by the agent or other agents for processing other tasks.

To use accessories for processing tasks, agents may store accessories in memory (e.g., agent storages). To access accessories, agents may utilize pointers that point to locations in the memory where desired accessories are stored. In various implementations, accessories may be stored as data objects that are defined in one or more ontologies. An accessory can be multi-modal (e.g., including both textual and video information). An accessory can also come in different forms and types. For example, an accessory may include strings, double integers, integers, images, data frames, sound files, or the like. An agent may share accessories with other agents if sharing is permitted under the permission of the system. For example, the agent may grant other agents access to an accessory that is stored in a storage associated with the agent and provide a pointer to the accessory to other agents. Advantageously, when utilized by an agent, accessories may enrich knowledge base of the agent or increase potency of the agent.

In various implementations, the system can track a lineage of an accessory to track a basis for a generated accessory and/or whether the accessory is further utilized to generate other information. For example, the system can record a lineage of an accessory, where the lineage shows what tool(s) are utilized to generate the accessory. The lineage of the accessory may include metadata that can enable users or the system to efficiently track from where the accessory comes into being and where the accessory is used, such as which agents or tasks use the accessory (which may be one or more versions of an accessory).

In various implementations, lineages of accessories may be presented to users through interactive graphical representations that include nodes (e.g., representing accessories) and/or edges (e.g., representing connections between accessories) of graphical user interfaces (GUIs). Advantageously, the lineage of an accessory enables the system to more efficiently verify or evaluate the usefulness of the accessory. Once an accessory is stored in an agent storage, the system may further evaluate correctness or accuracy of information contained in the accessory. For example, if an agent or the system determines that the accessory contains accurate information, the agent or the system may keep the accessory in an agent storage. But if the agent or the system determines that the accessory contains inaccurate information, the agent or the system may update the accessory and/or delete the accessory from the agent storage.

Additionally and/or optionally, the system may impose a time-to-live constraint on an accessory based on characteristics of the accessory. For example, an accessory that is solely useful for processing a specific task by a specific agent may have a shorter time-to-live, and may be deleted once the specific task has been processed. As another example, an accessory that may be useful for an agent to process various tasks or for other agents may have a longer time-to-live, and may persist after the agent completes tasks using the accessory. As still another example, an accessory that is provided by a user may persist throughout or beyond an individual run, where the individual run is a full interaction of the user with the system. Advantageously, imposing time-to-live constraints on accessories may allow the system to utilize storage resources more efficiently by freeing up storage capacity that otherwise would be occupied by accessories that are no longer useful to users or the system.

### Agent Coordinator

In various implementations, the system may utilize an agent coordinator to supervise handoffs of tasks or sub-tasks among agents to ensure handoffs are robustly performed and do not interfere with processing of other tasks or sub-tasks. For example, if an agent seeks to handoff a first task to a child agent which is processing a second task and the first task requires the child agent switches from a current configuration to a different configuration, the agent coordinator may determine the handoff may adversely impact performance of the child agent and intervene to redirect the handoff to another child agent that has immediate capacity (e.g., already configured to the different configuration) to process the first task. Additionally and/or optionally, the agent coordinator may mange handoffs among agents based on input(s) from user(s). For example, upon receiving an input from a user indicating that a task is to be terminated, the agent coordinator may instruct agents that are processing the task to pause and may block handoffs of sub-tasks of the task. Advantageously, more computing resources may be released to process tasks based on user needs.

In various implementations, an agent coordinator may facilitate communications among agents, and communications between agents and users or the system. In some examples, the agent coordinator may manage, and monitor operations performed by agents. For example, the agent coordinator may pause an agent if the agent coordinator determines that the agent is committing more errors while processing a task. As another example, the agent coordinator may restart an agent in response to receiving input(s) from a user. As yet another example, the agent coordinator may prevent unexpected input from feeding into an agent if the agent coordinator determines that the unexpected input may mislead the agent to improperly process a task.

Additionally, the agent coordinator may allow bidirectional communications between agents and users or the system. In various implementations, an agent may request additional information from a user or the system after the agent starts processing a request from the user. For example, the agent may request more user inputs from the user, such as a prompt or an accessory, through the agent coordinator. As another example, the agent may request the user to perform one or more actions on the system or other systems external to the system, such as requesting the user to enter entries in a system applications and products (SAP) ordering system before the agent can further proceed with a current task. Advantageously, the bidirectional communications facilitated by the agent coordinator allows users to more efficiently work with agents to meet demands of users.

### Agent Storage

An agent storage may be utilized by an agent to store data and/or information (e.g., accessories, tools, messages, program code, data files, tables, or the like) for processing tasks. For each agent, the system may allocate an agent storage, where an agent may store data and/or information used by the agent to process tasks. For example, an agent may store accessories that are generated by the agent in an agent storage associated with the agent and share pointers that pointed to the stored accessories to other agents such that other agents can access the stored accessories. As another example, the agent may generate or create new tools (e.g., a statistical analysis tool) for processing certain tasks to the agent storage. As yet another example, the agent may be tasked to write a program code (e.g., Python code). The agent may then utilize a tool to find an application programming interface (API) endpoint for generating the program code and store the program code in the agent storage. In various implementations, an agent may have full access to an agent storage allocated to the agent but may have limited access to agent storages of other agents. Based on permissions of the system, an agent or the system may grant another agent access to parts or all of the agent storage of the agent. For example, an agent may share accessories with a child agent to which the agent handoffs a task or a sub-task.

The agent can utilize the agent storage to store a directory associated with the memory bank for its run to perform a computational task. The directory can provide the agent with access to short-term memory files and long-term memory files stored in the memory bank, which can be stored within the agent system or externally. In some instances, some or all of the files associated with the directory can be stored in the agent storage. For example, in some instances, the short-term memory files can be stored in the agent storage to provide a cache that is accessible. The relevant long-term memory files associated with the computational task provided by the user query can be accessed by either a pointer through the directory, or by saving a copy to the agent storage as short-term memory.

To efficiently utilize an agent storage, an agent may have one or more retention policies that allow the agent to remove outdated data and/or information from the agent storage. For example, the agent may have a message retention policy based on which the agent may determine whether some messages are outdated or no longer useful and can be removed from the agent storage. The message retention policy or any other data retention policies of the agent may be configurable. For example, the agent may configure its message retention policy to one of keep_initial_and_last_n, remove_by_drop, remove_and_add_summary, and the like.

Additionally, an agent may designate some of data and/or information stored in an agent storage to appropriate retention durations based on various criteria. In various implementations, the agent may determine that information contained in an accessory is true for a limited amount of time and assign a shorter time-to-live on the accessory stored in the agent storage. For example, the agent may determine that information contained in the accessory no longer holds true after a currently processed task is completed. Once completing the task, the agent may remove the accessory from the agent storage to release spaces of the agent storage. Removing outdated accessories, messages, and/or other data stored in the agent storages enables agents to more efficiently utilized available and constrained storage resources to preserve capacity for storing useful data and/or information in agent storages.

### Example User Interface Features

The system may further allow users to interact with the system through one or more user interfaces (e.g., a graphical user interface ("GUI") or other types of user interfaces) to allow users to configure agents, interact with agents, and verify results generated by agents. In various implementations, users may configure an ontology, an LLM, tools, accessories, an agent storage, or other aspects of an agent through operating on a user interface. For example, a user may configure which tools (e.g., a calculator or other tools) the agent can utilize to process tasks. The user may also configure types of child-agents to which the agent may handoff tasks or sub-tasks, and maximum number of handoffs (e.g., a handoff depth) that can be utilized by the agent. Additionally and/or optionally, the user may configure types of LLMs and/or machine learning (ML) models accessible to the agent through the user interface. The user interface may further allow users to view and track various configurations (e.g., through version control mechanisms noted above) that are available to configure an agent or child-agents of the agent. Advantageously, a user may preserve a specific configuration of an agent that is tested to be effective for solving a specific type of problems while experimenting new configurations based on minor or minimal adjustments to the specific configuration without losing the efficacy of the specific configuration.

In various implementations, a user may evaluate or verify results generated by agents through manipulating a user interface provided by the system. In some examples, the user interface may present information related to an individual run. For example, the information related to the individual run may include the initial prompt and subsequent prompts received by the agent from the user, starting and end timestamps of the individual run, status (e.g., completed, succeeded, failed, or the like) of the individual run, timelines of occurrence of events while the agent executing the individual run, intermediate results generated by the agent, child-agents to which the agent handoffs tasks, number of errors committed by the agent when utilizing some tools, or the like. Advantageously, the system may allow users to more efficiently evaluate or verify performances of agents through, for example, reviewing steps or actions taken by an agent to process a task.

Additionally, user interfaces of the system may present information related to accessories utilized by agents to process tasks. In various implementations, a user interface of the system may visualize relationships between accessories utilized by one or more agents for solving some problems. For example, the user interface may present an interactive graphical representation of accessories used by an agent. More specifically, the interactive graphical representation may represent accessories as nodes and relationships of accessories as edges. For example, the interactive graphical representation may visualize a first accessory utilized by an agent to process a task as a first node, visualize a second accessory utilized by the agent to process the task as a second node, and show that the first node is connected to the second node through an edge, where the edge indicates that the second accessory is generated based on the first accessory. Advantageously, the graphical representation of accessories enables users to efficiently review and track what accessories are utilized by agents to process tasks and how an accessory is related to another. Additionally and/or optionally, the system may allow a user to create one or more accessories by operating on user interface(s) provided by the system, where the created accessories may be passed to agents by the system for processing tasks submitted by the user.

### Example Large Language Model Functionality

The system and/or agents of the system may employ one or more LLMs to provide various services. In various implementations, agents may receive user requests to process various types of tasks, such as automatically generating texts to summarize a set of documents, conducting analysis based on data contained in articles, tables, spreadsheets, or the like, scheduling distribution of materials based on supply chain constraints and requirements from demand sides, or the like. For example, agents may allow users to query internal or third-party data using an LLM (e.g., a QA (question and answer) LLM) that is trained to generate answers from user queries. In various implementations, the LLMs utilized by the system and/or the agents may be locally hosted, cloud managed, accessed via one or more Application Programming Interfaces ("APIs"), and/or any combination of the foregoing and/or the like. Data that may be processed by agents through using the LLMs may include any type of electronic data, such as text, files, documents, books, manuals, emails, images, audio, video, databases, metadata, positional data (e.g., geo-coordinates), sensor data, web pages, time series data, and/or any combination of the foregoing and/or the like.

As noted above, the system may provide the flexibility of easily swapping between various language models employed by agents to provide various services through configuring agents. For example, the system may swap an LLM (e.g., switching between GPT-2 to GPT-3) for analyzing information to provide recommendations (e.g., to which distribution centers shipment orders should be placed) based on analyses. Such model swapping flexibility provided by the system may be beneficial in various aspects, such as experimentation and adaptation to different models based on specific use cases or requirements, providing versatility and scalability associated with services rendered by the system.

In various implementations, the system and/or agents of the system can incorporate and/or communicate with one or more LLMs to perform various functions, such as executing similarity searches to search for data. The communication between the system and the one or more LLMs may include, for example, a context associated with an aspect or analysis being performed by the system, a user-generated prompt, an engineered prompt, prompt and response examples, example or actual data, and/or the like. For example, the system and/or agents may employ an LLM, via providing an input to, and receiving an output from, the LLM. The output from the LLM may be parsed and/or a format of the output may be updated to be usable for various aspects of the system.

### Example Features Related to Data Objects

The system may employ database(s) that uses ontology and data objects to store, represent and/or organize data utilized by the system. The system may capture and synchronize data or information associated with a run (e.g., a full interaction of a user with the system) into an ontology associated with a database. As such, data utilized by the system may be organized and linked to relevant context for providing a comprehensive knowledge base for evaluation, verification, and analysis.

In various implementations, a body of data may be conceptually structured according to an object-centric data model represented by the ontology. The ontology may include stored information providing a data model for storage of data in the database. The ontology may be defined by one or more object types, which may each be associated with one or more property types. At the highest level of abstraction, data object may be a container for information representing things in the world. For example, data object can represent a document or other data source such as an e-mail message, a news report, or a written paper or article. Additionally, data object can represent an entity such as a person, a place, an organization, a market instrument, or other noun. Data object can further represent an event that happens at a point in time or for a duration. Each data object may be associated with a unique identifier that uniquely identifies the data object within the database of the system.

In various implementations, the system may utilize an "interaction data object" to store information and/or data associated with a run of a user in a database of the system for various purposes. The interaction data object may include data objects or may be linked to data object(s) that represent documents, data sources, timestamps of events (e.g., when one or more user queries of the user are received and/or responded), profiles of the user, or the like that are associated with a user interaction. For example, initial and subsequent prompts from the user and/or steps taken by agents utilized to fulfill objectives of the user can be stored by the system using the interaction data object and/or data objects associated with the interaction data object for later evaluation. The system may utilize the interaction data object and/or additional data objects to automatically generate evaluation reports for various purposes, such as evaluating the performances of agents. Advantageously, interaction data objects stored in the database of the system may enable information associated with the user interaction to be easily reviewable. The system may further utilize information stored using the interaction data object and/or other data objects to evaluate if agents are not processing tasks efficiently.

### Example System and Related Computing Environment

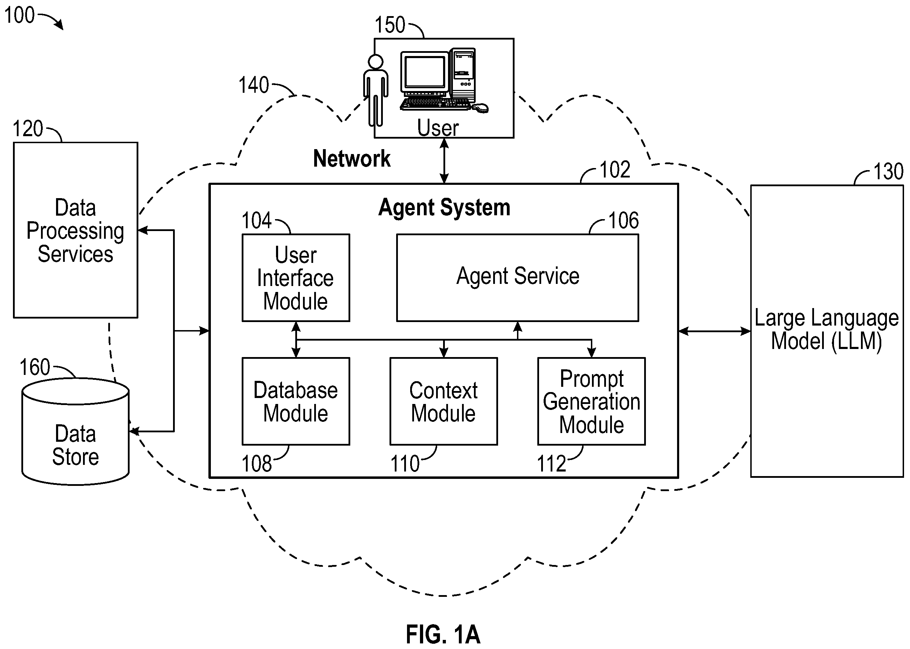

FIG. 1A illustrates an example computing environment 100 including an example agent system 102 in communication with various devices to respond to user inputs. The example computing environment 100 includes an agent system 102, a data processing service 120, an LLM 130, a network 140, user 150, and a data store 160. In the example of FIG. 1A, the agent system 102 comprises various modules, including a user interface module 104, an agent service 106, a database module 108, a context module 110, and a prompt generation module 112. In various implementations, the agent system 102 may include fewer or additional components. In various implementations, the system 102 can comprise the system of the present disclosure, in whole or in part. In various implementations, the system 102, and/or various aspects or components of the system 102, may be considered part of, or comprise, the system of the present disclosure. The system of the present disclosure, in various implementations, may include additional features, aspects, components, and/or functionality.

In various implementations, one or more of the user interface module 104, database module 108, context module 110, prompt generation module 112, data services 120, LLM 130, and/or data store 160 may be comprised, in whole or in part, by the agent service 106. In various implementations, the agent service 106 and one or more of the user interface module 104, database module 108, context module 110, prompt generation module 112, data services 120, LLM 130, and/or data store 160 may be part of a common system and/or computing environment. For example, one or more of the user interface module 104, database module 108, context module 110, prompt generation module 112, data services 120, LLM 130, and/or data store 160 may be outside of the agent service 106, but may be accessible by the agent service 106 in the ordinary course of performing one or more operations, such as described further herein.

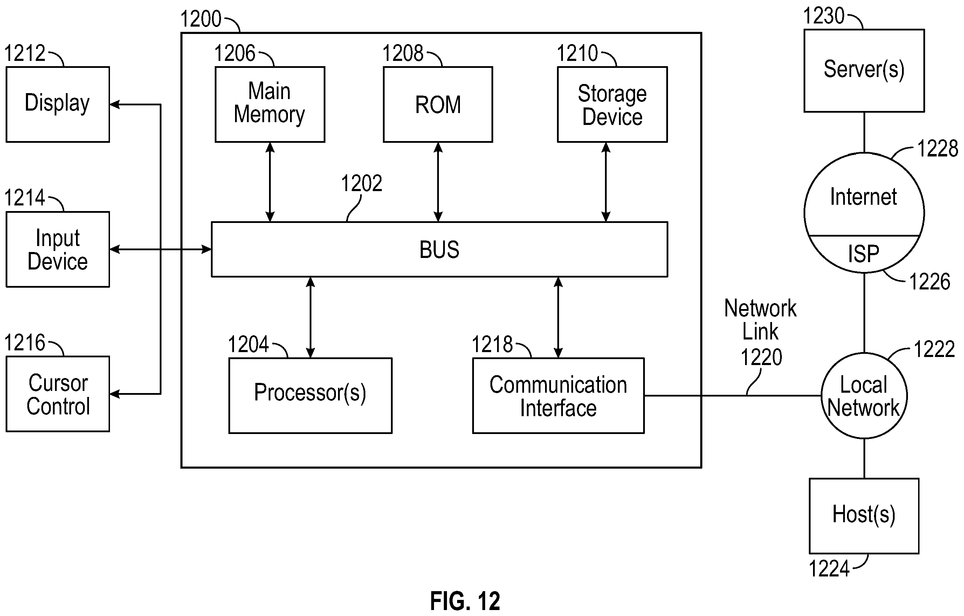

The operations of system 102, including user interface module 104, agent service 106, database module 108, context module 110, and/or prompt generation module 112 can be performed by one or more hardware processors operating under control of computer-executable program instructions which can be stored on non-transitory computer readable media, as shown and/or described in FIG. 12. The system 102, including user interface module 104, agent service 106, database module 108, context module 110, and/or prompt generation module 112, can include and/or be implemented in one or more computing devices including one or more hardware processors such as shown and/or described in FIG. 12.

In the example of FIG. 1A, the various systems, devices, and/or components are in communication via a network 140. The network 140 can include one or more communications networks. The network 140 can include a plurality of computing devices configured to communicate with one another. The network 140 can include routers. The network 140 can include the Internet. The network 140 can include a cellular network. The network 140 can include any combination of a local area network ("LAN") and/or a wide area network ("WAN"), or the like. Accordingly, various computing devices can communicate with one another directly or indirectly via any appropriate communications links and/or networks, such as network 140 (e.g., one or more communications links, one or more computer networks, one or more wired or wireless connections, the Internet, any combination of the foregoing, and/or the like). In various implementations, modules of the illustrated components may communicate via an internal bus and/or via the network 140.

Communication over the network 140 can include a variety of communication protocols, including wired communication, wireless communication, wire-like communication, far-field communication (such as transferring energy via electromagnetic radiation (e.g., radio waves)). Example communication protocols can include Wi-Fi, Bluetooth^{®}, ZigBee^{®}, Z-wave^{®}, cellular telephony, such as long-term evolution (LTE) and/or 1G, 2G, 3G, 4G, 5G, and/or the like, infrared, satellite transmission, proprietary protocols, combinations of the same, and the like.

The user interface module 104 is configured to generate user interface data that may be rendered for a user 150, such as to receive an initial user input, as well as later user input that may be used to initiate further data processing. As described hereinabove, the user input can include a term, phrase, question, query, and/or statement written in a human language (e.g., English, Chinese, Spanish, and/or the like), a request for data, a task to be performed, information associated with a task to be performed, one or more tools (e.g., a query object tool, an apply action tool, and/or the like), one or more tool types (e.g., an object type, an action type, and/or the like), other context, and/or other information. The agent system 102 (e.g., agent service 106) can receive user input from the user 150 via the user interface module 104. For example, the user 150 may provide a user input indicating a natural language request for one or more tasks to be performed and/or problems to be solved by the agent system 102.

In various implementations, the user interface module 104 allows the user 150 to configure agents, interact with agents, and verify results generated by agents in the agent service 106. The user 150 may configure an ontology, an LLM, tools, accessories, the agent service 106 (and/or one or more aspects thereof), and/or other aspects of an agent through interacting with the user interface module 104. For example, the user 150 may configure which tools (e.g., a calculator or other tools), AI models, and/or data processing services an agent can utilize to process tasks. The user 150 may also configure types of child-agents (also referred to herein as "subagents") to which an agent may handoff tasks or sub-tasks, a maximum number of handoffs that can be utilized by an agent, and/or the like. Additionally and/or optionally, the user interface module 104 may further allow the user 150 to view and track various configurations (e.g., through version control mechanisms) that are available to configure an agent or child-agent(s) of the agent. Advantageously, the user 150 may preserve a specific configuration of an agent that is tested to be effective for solving a specific type of problem while experimenting with new configurations based on (minor or minimal) adjustments to the specific configuration without losing the efficacy of the specific configuration.

The user interface module 104, in various implementations, can generate user interface data to render in a graphical user interface (GUI) of one or more user devices 150. This can include one or more editable and/or non-editable representations of one or more context items (e.g., user input, prompts, responses, datasets, code repositories, functions, tools and/or related tool information, tool calls, other context, and/or the like) and/or other information that have been previously provided and/or that are potentially going to be provided to the agent service 106 and/or LLM 130. For example, user input can include user interaction(s) with the editable and/or non-editable representations, and user interaction(s) can indicate one or more context items to be provided to the agent service 106 and/or the LLM 130, and/or indicate a modification (e.g., deletion, update, edit, addition to, removal, and/or the like) to at least a portion of said one or more context items. The user interface module 104 can provide the agent service 106 with the one or more user inputs associated with the user interaction(s) with said representations, and in response the agent service 106 can execute one or more tasks and/or sub-tasks, such as to modify the one or more context items. The agent service 106, in various implementations, may automatically (e.g., without additional user interaction) modify the one or more context items and feed said one or more context items to the LLM 130. In some examples, user interaction with the editable and/or non-editable representations can indicate a retroactive modification to at least a portion of one or more context items previously provided to the agent service 106 and/or LLM 130. In this way, the user 150, via the agent service 106, may modify the history (e.g., conversation history) of the LLM 130. Accordingly, the user 150 can modify the state that is passed into the LLM 130 when the agent system 102 (e.g., the agent service 106) calls the LLM 130 in the course of resuming one or more tasks and/or subtasks, and/or performing subsequent tasks and/or subtasks. Where the context information comprises the conversation history, modifications to the conversation history can be provided to the LLM without performing the processing tasks required to undertake a new conversation in accordance with the modified conversation history. By retroactively modifying the context information, the state passed to an LLM can be modified with improved computational efficiency in comparison with methods in which tasks are re-computed with modified parameters.

The editable and/or non-editable representations can be and/or include any quantity and/or available type of visual indicia, including but not limited to, text phrases, graphical icons, menus, fields, links, switches, buttons, toggles, tabs, checkboxes, indicators, panels, cards, lists, tables, other graphical elements, and/or the like. In various implementations, the editable and/or non-editable representations may be configured to dynamically update in response to user interaction, and/or as the agent service 106 and/or LLM 130 performs one or more operations (e.g., outputs and/or executes subsequent tool calls).

In various implementations, the functionality discussed with reference to the user interface module 104, and/or any other user interface functionality discussed herein, may be performed by a device or service outside of the agent system 102 and/or the user interface module 104 may be outside the agent system 102. Example user interfaces are described in greater detail below.

The agent service 106 may include a plurality of agents that may be utilized by the agent system 102 to solve various problems or process various tasks received, via the user interface module 104, from the user 150. As noted above, agents in the agent service 106 may utilize LLMs and/or tools, and may coordinate with each other, to solve problems or process tasks, thereby increasing the efficiency and accuracy of the agent system 102 in processing user inputs from the user 150. Agents employed by the agent service 106 may be configurable based on various settings or parameters. Additionally, configurations of agents can be version controlled by the agent service 106.

Each of the agents may be configurable based on various settings. For example, an agent can be configured or reconfigured to be associated with various ontologies, large language models (LLMs), tools, accessories, storages, and/or the like. The agent service 106 may flexibly (e.g., based on user demands) reconfigure one or more agents from one configuration to another configuration. Advantageously, reconfigurable agents enable the agent service 106 to swap or switch agent configurations to achieve various objectives. For example, the agent service 106 may feed the same input(s) to a first and second agent, but swap LLMs utilized by the agents, such as to evaluate or benchmark performances of the LLMs. In some examples, when an agent is tasked to solve a problem related to a new subject matter, the agent service 106 and/or user 150 may reconfigure the agent to utilize an ontology that is created or updated based on the new subject matter.

In various implementations, the agent(s) in the agent service 106 may coordinate with each other to process tasks collaboratively. For example, a first agent may coordinate with a second agent by handing off tasks to the second agent, where the second agent is suitable or specialized in handling the tasks. More specifically, when the first agent determines that a task that the first agent is processing requires specialized capability, the first agent may handoff some or all of the task to the second agent that has tools or been trained or tested to efficiently solve the task. In various implementations, if the first agent determines that a task requires specialized capability, the first agent may spawn (e.g., create, generate, and/or the like) the second agent having the tools and/or training for the task. In various implementations, agents may hand off some (e.g., sub-tasks) or all of a task to one or more child agents, which may specialize in processing specific types of tasks or sub-tasks. Additionally, the parent-child agent relationship can be configurable by the agent service 106. For example, a first agent can be configured to have a second agent as a child agent, where the child agent may be explicitly specified in a configuration of the first agent. A configuration of the child agent may also explicitly specify the first agent as a parent agent. As such, the parent-child agent relationship(s) can be bi-directional. Advantageously, handing off tasks from agents to corresponding child agents can provide multiple improvements over utilizing a single and large agent to process tasks. For example, handing off sub-tasks to child agents that are trained to process the sub-tasks efficiently can enable the agent service 106 to efficiently process requests from the user 150, reducing computational load, storage requirements, and/or compute overhead in generating outputs, and/or increasing the accuracy of said outputs. Handing off tasks may further reduce the update or maintenance cost of agents employed by the agent service 106 because updates on or migration of agents can be targeted and tailored toward subsets of agents of the system.

In various implementations, the agent system 102 can onboard agents. For example, when providing a user input from the user 150, the agent system 102 can designate tasks to one or more agents of agent service 106 to accomplish the task.

The agent service 106 may generate and maintain a log to record events, timelines, received inputs, or generated outputs while agents process tasks or solve problems received from the user 150. In various implementations, agents employed by the agent service 106 may coordinate with other agents by handing off tasks to agents (e.g., child-agents) which are suitable or specialized in handling the tasks. If an agent determines to handoff a sub-task to a child agent (sometimes referred to herein as a "subagent"), the agent may choose to share knowledge with the child agent. For example, the agent may share an accessory with the child agent, where the accessory may be useful in processing the sub-task.

As described further hereinbelow, the agent service 106 may provide storage (e.g., agent storage) for agents to store and/or access accessories (e.g., tools and/or related tool information), other context, and/or other information useful for processing tasks or problems. The agent service 106 may further utilize an agent coordinator to supervise handoffs of tasks or sub-tasks among agents to ensure handoffs are robustly performed and do not interfere with processing of other tasks or sub-tasks. In various implementations, the agent coordinator of the agent service 106 may facilitate communications among agents, and communications between agents and users 150 or the system 102.

The agent service 106 enables agents to coordinate (e.g., handoff a task from one agent to another) with each other to effectively solve problems received from the user 150 in both time and resource efficient manners. Additionally, the agent service 106 allows agents to share information useful for processing tasks or solving problems effectively and reliably while respecting security and/or permissioning defined by the agent system 102 and/or the user 150. Further, through the assistance of the user interface module 104, the agent service 106 may allow the user 150 to track or monitor problem solving processes performed by agents employed by the agent service 106 to evaluate the soundness of steps taken or decisions made by agents. The agent service 106 may further allow the user 150 to configure agents based on various user objectives to enhance scalability and reusability of the agent system 102.

The database module 108 may be any type of data store and can store any data, data objects of data object types, or the like. The database module 108 is configured to store data/information that may be utilized by the agent system 102 and/or accessed or manipulated by the user 150, as described herein. The database module 108 can include data stored in data store 160, data transferred from data store 160, or access data stored in data store 160. The database module 108 can be indexed according to an ontology. Data that may be stored in the database module 108 may include any type of electronic data, such as text, files, documents, books, manuals, emails, images, audio, video, databases, metadata, positional data (e.g., geo-coordinates), sensor data, web pages, time series data, and/or any combination of the foregoing and/or the like. The ontology may constitute a way to represent things in the world. The ontology may be used by an organization to model a view on what objects exist in the world, what their properties are, and how they are related to each other. The ontology may be user-defined, computer-defined, or some combination of the two.

In the example of FIG. 1A, the user 150 (which generally refers to a computing device of any type that may be operated by a human user) may provide a user query, which can include a request to perform a computational task, to the agent system 102 indicating a natural language request for some data analysis to be performed or computational tasks and/or problems to be solved by the agent system 102. For example, the user query along with other context (e.g., other supplemental information or instructions), if any, may be provided through the user interface module 104 to the agent service 106. In various implementations, the user 150 may provide supplemental information (e.g., specifying some constraints on processing results to be generated by the agent service 106, selecting one or more object types to limit processing by the agent system 102 to only those selected object types, selecting one or more tools to limit tool calls by the agent service 106 to only those selected tools, and/or the like) to increase speed and relevance (e.g., accuracy) of results provided by the agent service 106 and/or agent system 102. In various implementations, the user 150 may not provide any information except an initial input.

The context module 110 is configured to maintain, select, and/or provide some or all relevant context associated with a user input, user session, multiple sessions of the user, and/or other context. The context module 110 may store context for various groups of users, e.g., user inputs from multiple users. The system 102, agent service 106, LLM 130, and/or other components of the system may make use of context in fulfilling their functions. Context may include, for example, all or part of a conversation history from one or more sessions with the user (e.g., a sequence of user inputs and responses or results), user selections (e.g., via a point and click interface or other graphical user interface), data processing services 120 implemented during the session, user-selected objects and any corresponding properties for those objects, any linked objects as defined by a relevant ontology, user-selected tools and any corresponding tool information, and/or the like. For example, if a most recent result returned to a user included a filtered set of "flight" objects, and a user types "send an email listing the flights to my manager," the system 102 may make use of the context of the filtered set of aircraft objects, as provided by the context module 110, and include a list of those objects in an email.

In various implementations, the user interface module 104 may suggest certain actions to the user (e.g., any actions described herein, or any other related actions) based on context provided by context module 110 (e.g., email the account manager of the account that is being displayed).

The prompt generation module 112 is configured to generate a prompt to a language model, such as LLM 130. In various implementations, the prompt generation module 112 may provide a query (e.g., an initial query) to the agent service 106, after which the agent service 106 may call the LLM 130 when performing a task. The prompt generation module 112 may generate a prompt based on any of data provided by the user interface module 104 (e.g., a user input, tool information, and/or the like), data provided by the context module 110 (e.g., conversation history and/or other contextual information), data provided by the agent service 106 (e.g., an agent output), and/or data provided by the LLM 130 (e.g., a response generated by the LLM). The prompt provided by the prompt generation module 112 can include user input and/or other context items such as may be accessed via the context module 110. The prompt can include text indicating the user input and/or other context items. In various implementations, the prompt provided by the prompt generation module 112 can include previous prompts and/or responses, such as may be generated during back-and-forth interactions with the LLM 130.

The agent system 102 (e.g., the agent service 106) may include and/or have access to the LLM 130 and/or other language model, and the LLM 130 may be fine-tuned or trained on appropriate training data (e.g., annotated data showing correct or incorrect pairings of sample natural language queries and responses). After receiving a user input, the agent system 102 may generate and provide, via the agent service 106 (e.g., using the prompt generation module 112), one or more prompts to the LLM 130, which may include one or more large language models trained to fulfill a modeling objective, such as task completion, text generation, summarization, and/or the like.

In various implementations, the agent service 106 may receive user input to process various types of computational tasks, such as image and/or audio processing tasks, machine controlling tasks, tasks involving automatically generating texts to summarize a set of documents, conducting analysis based on data contained in articles, tables, spreadsheets, scheduling distribution of materials based on supply chain constraints and requirements from demand sides, or the like. For example, the agent service 106 may allow users to query internal or third-party data using the LLM 130 (e.g., a QA (question and answer) LLM) that is trained to generate answers from user queries. In various implementations, the LLM 130 utilized by the agent service 106 may be locally hosted, cloud managed, accessed via one or more Application Programming Interfaces ("APIs"), and/or any combination of the foregoing and/or the like. Data that may be processed by the agent service 106 through using the LLM 130 may include any type of electronic data, such as text, files, documents, books, manuals, emails, images, audio, video, databases, metadata, positional data (e.g., geo-coordinates), sensor data, web pages, time series data, and/or any combination of the foregoing and/or the like.

In some implementations, the agent system 102 (e.g., the agent service 106) may be capable of interfacing with multiple LLMs. This allows for experimentation and adaptation to different models based on specific use cases or requirements, providing versatility and scalability to the system. In some implementations, the agent system 102 may interface with a second LLM 130 in order to, for example, solve a problem for the user 150, generate an input to a data processing service 120, or to generate some or all of a natural language prompt (e.g., generate a prompt for the first LLM 130).

The LLM 130 and various modules of the agent system 102, such as the agent service 106, may also communicate with one or more data processing services 120 in the course of fulfilling a user query and/or a task. The data processing services 120 may include any quantity of services (or "plug-ins") and any available type of service. For example, the services 120 may include one or more search services (e.g., a table search service, an object search service, a text search service, or any other appropriate search service), indexing services, services for formatting text or visual graphics, services for generating, creating, embedding and/or managing interactive objects in a graphical user interface, services for caching data, services for writing to databases, an ontology traversing service (e.g., for traversing an ontology or performing search-arounds in the ontology to surface linked objects or other data items), or any other services. For example, the agent service 106 may request for data processing services 120 to perform a specific process. In some implementations, tool information provided, via the agent service 106, in a prompt to the LLM 130 enables the LLM 130 to return a properly formatted request for further information from a plug-in, such as in the form of an API call to a data processing service. Thus, the LLM 130 may indirectly request (via the agent service 106) for data processing services 120 to perform a specific process. The output from the data processing service 120 may then be provided back to the agent service 106 for further processing of a task and/or to develop a final result to be provided to the user 150. In some implementations, the data processing services 120 may be a part of the agent system 102 (e.g., as part of a data processing services module of system 102). In some implementations, the data processing services 120 may be external to the agent system 102.

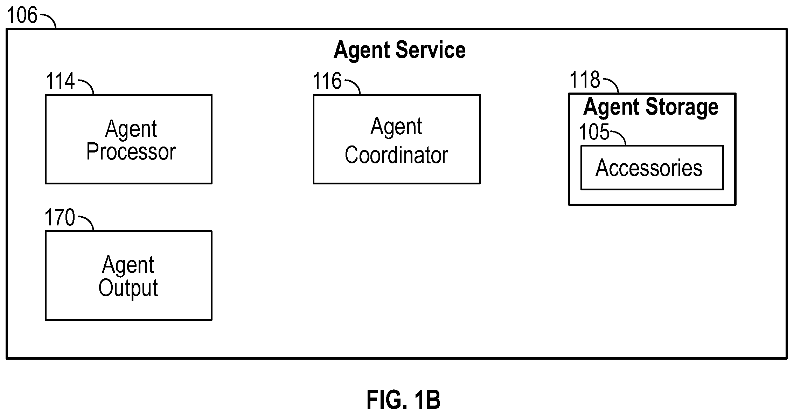

FIG. 1B illustrates an example embodiment of an example agent service 106. In various implementations, the agent service 106 can include an agent processor 114, an agent coordinator 116, an agent storage 118, and/or an agent output 170. In various implementations, the agent service 106 can include fewer or additional components. In various implementations, the agent service 106 and one or more of the agent processor 114, the agent coordinator 116, agent storage 118, and/or the agent output 170 may be part of a common system and/or computing environment. For example, the agent processor 114, the agent coordinator 116, agent storage 118, and/or the agent output 170 may be outside of the agent service 106, but may be accessible by the agent service 106 in the ordinary course of performing one or more operations, such as described further herein. The agent service 106, in various implementations, may include additional features, aspects, components, and/or functionality.

The agent service 106 (e.g., one or more agents) can use the agent processor 114 to perform one or more operations associated with one or more tasks indicated in a user input. In various implementations, one or more agents can use one or more agent processors 114 to coordinate with the data processing services 120 and/or LLM 130, such as to query the data processing services 120 and/or call the LLM 130. For example, the agent(s) may use the agent processor 114 to feed one or more prompts (e.g., such as may be generated using the prompt generation module 112) to the LLM 130. In some implementations, the agent processor 114 can retrieve data from and/or store data in the agent storage 118, database module 108, and/or data store 160. For example, the agent processor 114 can access one or more tools available to the agent system 102 to provide one or more agents with tools to execute one or more tasks.

The agent service 106 can use the agent coordinator 116 to supervise handoffs of tasks or sub-tasks among agents to ensure handoffs are robustly performed and do not interfere with processing of other tasks or sub-tasks. For example, if a first agent seeks to handoff a first task to a second agent that is processing a second task, and the first task requires the second agent to switch from a current configuration to a different configuration, the agent coordinator 116 may determine that the handoff may adversely impact performance of the second agent and intervene to redirect the handoff to another agent (e.g., a third agent) that has immediate capacity (e.g., already configured to the different configuration) to process the first task. In various implementations, the agent coordinator 116 can delegate which agents handle which tasks. The agent coordinator 116, in various implementations, may mange handoffs among agents based on input(s) from the user 150. For example, upon receiving an input from the user 150 indicating that a task is to be terminated, the agent coordinator 116 may instruct the agent(s) that are processing the task to pause and may block handoffs of sub-tasks associated with the task to be terminated. As such, compute resources may be released to process tasks based on the needs of the user 150.

In various implementations, the agent coordinator 116 may facilitate communications among agents and/or communications between agents and the user 150 and/or the agent system 102 (and/or components thereof). In some implementations, the agent coordinator 116 may manage and monitor operations performed by one or more. For example, the agent coordinator 116 may pause an agent if the agent coordinator 116 determines that the agent is committing errors while processing a task. In some examples, the agent coordinator 116 may restart an agent in response to receiving user input(s) from the user 150. In some examples, the agent coordinator 116 may prevent unexpected input from feeding into an agent if the agent coordinator 116 determines that the unexpected input may mislead the agent to improperly process a task.

In various implementations, the agent coordinator 116 may allow bidirectional communications between agents and the user 150 and/or the agent system 102 (and/or components thereof). For example, an agent may request additional information from the user 150 and/or the agent system 102, such as after the agent starts processing a request from the user 150. In some examples, the agent may request additional user inputs from the user 150, such as a prompt or context item (e.g., a tool) via the agent coordinator 116. In some examples, the agent may request the user 150 to perform one or more actions on the agent system 102 or other systems external to the agent system 102, such as requesting the user 150 to enter entries in a system applications and products (SAP) ordering system before the agent can further proceed with a current task. Advantageously, the bidirectional communications facilitated by the agent coordinator 116 allows the user 150 to more efficiently work with agents to meet demands of the user 150, thereby reducing overall computational load, storage requirements, and/or compute overhead of the system, and/or improving the accuracy of the task to be performed and/or problem to be solved by the agent.

The agent service 106, in various implementations, can utilize the agent storage 118 to store information useful for agents to process tasks or solve problems received from the user 150. In various implementations, the agent storage 118 may store accessories 105 that may be useful or necessary for agents to process tasks. As described hereinabove, accessories 105 may come in various forms and may include any types of electronic data, such as text, files, documents, books, manuals, emails, images, audio, video, databases, metadata, positional data (e.g., geo-coordinates), sensor data, web pages, time series data, context, and/or any combination of the foregoing and/or the like. Accessories 105 may be permissioned and/or subject to various security constraints such that the accessory may be accessible to some agents but inaccessible to other agents. In various implementations, accessories 105 can include one or more tools and/or related tool information accessible by the agent system 102 (e.g., the agent service 106), such as in response to a tool call.

Accessories may be provided by the user 150. For example, when an agent is tasked to perform image or audio processing on image or audio data, such as denoising or filtering, the user 150 may provide data indicative of filter parameters as a part of the accessories 105 for the agent to process the task. In some examples, when the agent is tasked to perform statistical analysis on sales data of the user 150 to provide recommendations on how to increase sales volume, the user 150 may provide a spreadsheet or other data files that include sales data as part of the accessories 105 for the agent to process the task.

Alternatively, additionally, and/or optionally, accessories 105 may be generated, discovered, synthesized, or created by agents while processing certain tasks. For example, while processing a task that requires particular information, an agent can search through one or more databases to identify a document containing the particular information and store (e.g., in the agent storage 118) said information along with a document identifier (ID) associated with the document as an accessory in the accessories 105. In some implementations, accessories 105 may be created by agents using tools while processing tasks. For example, an agent may execute a tool call and generate an output (e.g., one or more output datasets), and may output a subsequent tool call that requires the generated output as a tool input. The generated output from the first (and/or subsequent) tool calls may be stored (e.g., in agent storage 118) as accessories, which may be retrieved for further or additional processing of the same and/or other tasks and/or sub-tasks.

In various implementations, the agent storage 118 may impose a time-to-live constraint on the accessories 105 based on characteristics of the accessories 105. For example, an accessory that is solely useful for processing a specific task by a specific agent may have a shorter time-to-live, and may be deleted once the specific task has been processed. In some examples, an accessory that may be useful for an agent to process various tasks and/or useful to multiple agents may have a longer time-to-live, and may persist after one or more agents complete one or more tasks using the accessory. Advantageously, imposing time-to-five constraints on accessories 105 may allow the agent storage 118 to more efficiently utilize storage resources by freeing up storage capacity that otherwise may be occupied by accessories 105 that are no longer useful to the user 150 and/or the agent system 102.

As noted above, the accessories 105 can include one or more tools (and/or related tool information) accessible to the agent system 102 for processing various tasks, and/or outputs resulting from a tool call. For example, an agent may be tasked to write a program code (e.g., Python code). The agent may utilize a tool (e.g., stored in the agent storage 118) to find an API endpoint for generating the program code, and store the generated program code (e.g., in the agent storage 118).

In various implementations, the agent storage 118 may be partitioned and allocated to agents. For example, an agent may have full access to a portion of the agent storage 118 allocated to the agent, but may have limited or no access to portions of the agent storage 118 allocated to other agents. Based on permissioning of the agent system 102, an agent or the agent system 102 may grant a first agent access to a portion of or all of the agent storage 118 allocated to a second agent. For example, a first agent may share accessories 105 to a child agent to which the first agent has handed off a task or a sub-task.

In various implementations, the agent storage 118 can include one or more features and/or functions similar or identical to those of the database module 108 and/or data store 160. In various implementations, the database module 108 and/or data store 160 may be configured as the agent storage 118. In various implementations, the agent storage 118 can be comprised, in whole or in part, by the database module 108 and/or the data store 160, and accessed by the agent service 106.

The agent service 106 can produce one or more agent outputs 170 in the course of performing one or more tasks. For example, one or more agents can generate one or more outputs 170. The output 170 can be an intermediate output that may be further processed or used in performing subsequent tasks, and/or a final output. The agent service 106, in various implementations, can provide the output 170 to one or more agents, one or more AI models (e.g., LLM 130), one or more data services 120, and/or to the agent system 102 (and/or components thereof). For example, the agent service 106 can provide the agent output 170 to the user interface module 104 for visualization by the user 150.

The agent output 170 can include, but is not limited to, context (e.g., tools and/or related information, tool calls, datasets, code repositories, prompts, functions, tasks, user queries, and/or the like), requests for additional information (e.g., additional context), LLM calls, LLM responses, data service queries, data service responses, notifications, other information, and/or the like.

### Example Database and Data Models

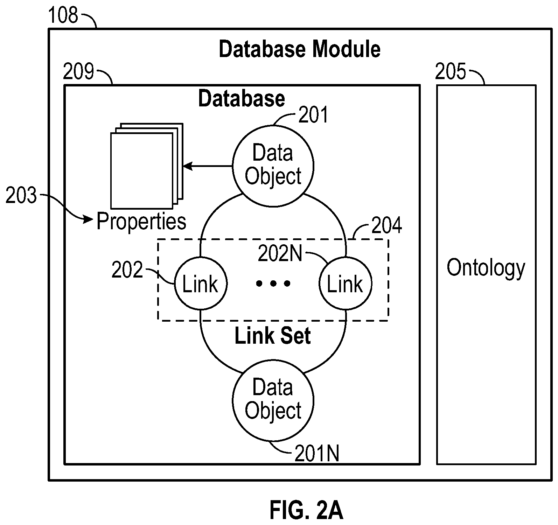

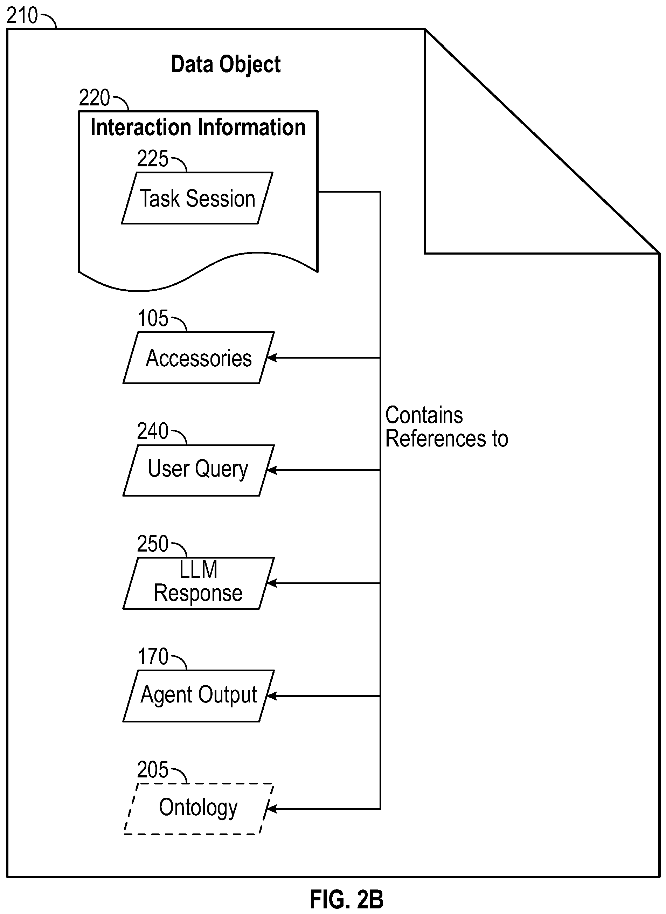

FIG. 2A illustrates an example embodiment of an object-centric conceptual data model, such as may be comprised by the database module 108, in various implementations. An ontology 205, as described hereinabove, may include stored information providing a data model for storage of data in the database 209. The ontology 205 may be defined by one or more object types, which may each be associated with one or more properties 203 or property types. Data objects 201 through 201N are containers for information representing things in the world. In various implementations, data object 201 (see FIG. 2B, for example) can represent information and/or data associated with a run of the user 150. In various implementations, data object 201 can represent a document or other unstructured data source such as an e-mail message, a news report, or a written paper or article. In various implementations, data object 201 can represent a query submitted by the user 150 or a response provided by the agent system 102 to the user 150. In various implementations, data object 201 can represent an entity such as a person, a place, an organization, a market instrument, or other noun. Data object 201, in various implementations, can represent an event that happens at a point in time and/or for a duration. Each data object 201 is associated with a unique identifier that uniquely identifies the data object within the database module 108.

FIG. 2B is a block diagram illustrating an example embodiment of a data object 210 that is optional with various implementations of the present disclosure. The data object 210 may be stored in the database 209 of the database module 108. In various implementations, the agent system 102 may utilize the data object 210 to store interaction information 220, which can include information and/or data associated with a run of a user 150. The data object 210 may include other data objects and/or may be linked (e.g., using the link 202 and/or 202N in link set 204) to other data object(s) that represent documents, data sources, timestamps of events (e.g., when one or more user queries of the user 150 are received and/or responded), profiles of the user 150, or the like that are associated with a user interaction of the user 150. For example, initial and subsequent user input from the user 150 and/or steps taken by one or more agents utilized to fulfill objectives of the user 150 can be stored by the agent system 102 using the data object 210 and/or data objects associated with the data object 210 for later evaluation. The agent system 102 may utilize the data object 210 and/or additional data objects 201 through 201N to automatically generate evaluation reports for various purposes, such as evaluating the performance (e.g., compute efficiency) of agents. Advantageously, data objects 201 through 201N stored in the database 209 may enable information associated with a user interaction to be easily reviewable. The information stored in the data object 210, as described, can also be stored in different components of the agent system 102 or an external system.

In various implementations, the interaction information 220 can include information and/or data associated with a task session 225. The interaction information 220, in various implementations, may include references to at least a portion of accessories 105, user query 240, LLM output 250, agent output 170, and/or ontology 205. For example, interaction information 220 may: (1) identify accessories 105 that are utilized by agents while processing tasks in a run of the user 150; (2) identify user query 240 that may be submitted by the user 150 in the run of the user 150; (3) identify LLM output 250 that may be generated by the LLM 130 in response to receiving (e.g., via agent service 106) a prompt; and/or (4) identify ontology 205 that the agent service 106 and/or LLM 130 may traverse in providing an agent output 170 to fulfill a user query 240 from the user 150. In various implementations, the LLM output 250 can include a search query and/or outputs for executing the search query. In various implementations, the LLM output 250 can include program code that is generated using ontology documentation.

It is to be noted that the example embodiment of data object 210 shown and/or described in FIG. 2B is not intended to limit the present disclosure and is optional. Accordingly, the interaction information 220 can also be optional, and at least a portion (if not all) the interaction information 220 and/or related information can be comprised, in whole or in part, in a different component of the agent system 102 or by an external system, or may not be included at all.

Additionally, while the data object 210 is an example of a particular type of data object 201 that may be stored by the system, in various implementations, and as described herein, the system may store any type of data object. Such data objects and associated links among data objects can include various information, data, and/or properties, that may be useful in various processes of the system. For example, such data objects can include information and data usable for enabling answering of prompts, queries, and/or the like.

### Example Process Relating to One or More Agents Performing a One or More Tasks and/or Sub-Tasks

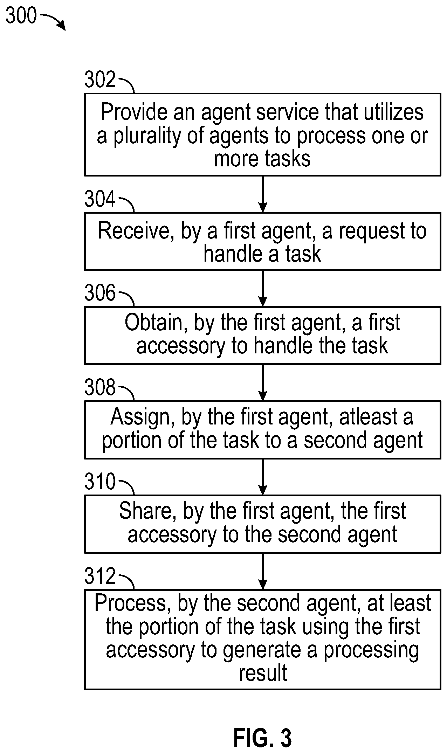

FIG. 3 is a flow diagram illustrating an example process 300 relating to example operations performed by the agent system 102 (and/or by various other aspects of the computing environment 100) using one or more agents to (automatically) solve problems (e.g., complex problems) through coordination among said agents. The process 300, or portions thereof, can be implemented by a computing device such as a hardware processor. The process 300, or portions thereof, can be executed by one or more hardware processors, whether they are associated with a singular or multiple computing devices like user device 150, agent system 102, and/or devices in remote or wireless communication. The implementation may vary. For example, the process may be controlled by processors related to a system, such as system 102, or can involve modifications like omitting blocks, adding blocks, rearranging the order of execution of the blocks, combining blocks, and/or separating blocks into additional blocks. The process 300 serves as an example and is not intended to restrict the present disclosure. In various implementations, one or more portions of example process 300 may or may not be performed in the ordinary course of performing tasks and/or sub-tasks by one or more agents. In various implementations, the process 300, or portions thereof, can be performed by a computing device associated with the system 102, such as the user interface module 104, agent service 106, database module 108, context module 110, prompt generation module 112, and/or one or more components thereof as described herein.

Beginning at block 302, the system (e.g., agent system 102) may provide an agent service (e.g., agent service 106) that utilizes one or more agents to process one or more tasks and/or sub-tasks. The tasks and/or sub-tasks may be associated with user input(s) provided by a user (e.g., user 150) via a user interface module (e.g., user interface module 104). As described hereinabove, agents can be configured to receive a request to perform a task and/or sub-task associated with the user input(s). The agents of the agent service may coordinate with each other to process tasks or requests from the user. Agents may share context and/or other information (e.g., accessories 105) for processing tasks, user requests, or problems, with each other according to security and/or permissioning defined by the system 102 and/or the user 150.

At block 304, the system 102 may receive a request to handle a task. For example, an agent may receive a request from the user 150 to handle the task. The request may instruct the agent to process various types of tasks, such as but not limited to generating texts to summarize a set of documents, conducting analysis based on data contained in articles, tables, spreadsheets, scheduling distribution of materials based on supply chain constraints and requirements from demand sides, and/or the like. In various implementations, the user 150 may submit the request to the agent via interacting with the user interface module 104.

At block 306, a first agent of the system 102 may obtain a first accessory to handle the task. The first accessory may be context and/or other information that are useful or necessary for the agent to process tasks, such as described hereinabove. The first accessory may be permissioned and/or subject to various security constraints such that the first accessory may be accessible to some agents but inaccessible to other agents.

The first accessory may be provided by the user 150. In various implementations, the first accessory may be generated, discovered, synthesized, or created by the first agent (or another agent) while processing the task or other tasks. In various implementations, the first agent may store the first accessory in a memory associated with the system (e.g., agent storage 118, database module 108, and/or data store 160). To access the first accessory, the first agent may utilize a pointer that points to a location in the memory that stores the first accessory.

At block 308, the first agent may assign (e.g., hand off) at least a portion of the task to a second agent. This may occur, in some implementations, while the first agent is processing the task. For example, if the first agent determines (e.g., based on a description, metadata, and/or code associated with the task, which may be in agent settings), that the task requires specialized capability that the first agent has not been trained to acquire (e.g., based on a configuration of the first agent), the first agent may handoff a portion of or all of the task to the second agent that has been trained or tested to efficiently solve the task (e.g., based on a configuration of the second agent). In various implementations, the second agent may be configured as a child agent of the first agent. The parent-child relationship between the first agent and the second agent may be explicitly specified in a configuration of the first agent and/or second agent, as described hereinabove.

At block 310, in response to determining to assign at least the portion of the task to the second agent, the first agent may share the first accessory with the second agent. For example, the first agent may share the first accessory with the second agent after assigning at least the portion of the task to the second agent. The first agent may share the first accessory with the second agent if sharing is permitted under the permissioning of the system 102, and grant the second agent access to the first accessory that is stored in the memory, for example by providing to the second agent a pointer that points to the first accessory in the memory. Advantageously, when utilized by the second agent, the first accessory may enrich the knowledge base of the second agent (e.g., provide the second agent with useful information to process the portion of the task or a sub-task of the task) and/or increase the potency and/or capabilities of the second agent. In various implementations, sharing the first accessory with the second agent may negate any need by the second agent to discover, generate, or obtain its own accessories (e.g., negate a need to search for information that may be required to perform the portion of the task or sub-task of the task). For example, if the first agent is tasked with performing image or audio processing on image or audio data, such as denoising or filtering, the first accessory can include information indicative of filter parameters for the first agent to use in processing the task. By sharing the first accessory (e.g., the filter parameters) with the second agent, the second agent may be able to perform the processing requested by the user 150.

At block 312, the second agent, using the first accessory, may process at least the portion of the task to generate a processing result (e.g., an agent output).

### Example Graphical User Interfaces and Functionality Relating with One or More Agents Performing One or More Tasks and/or Sub-Tasks

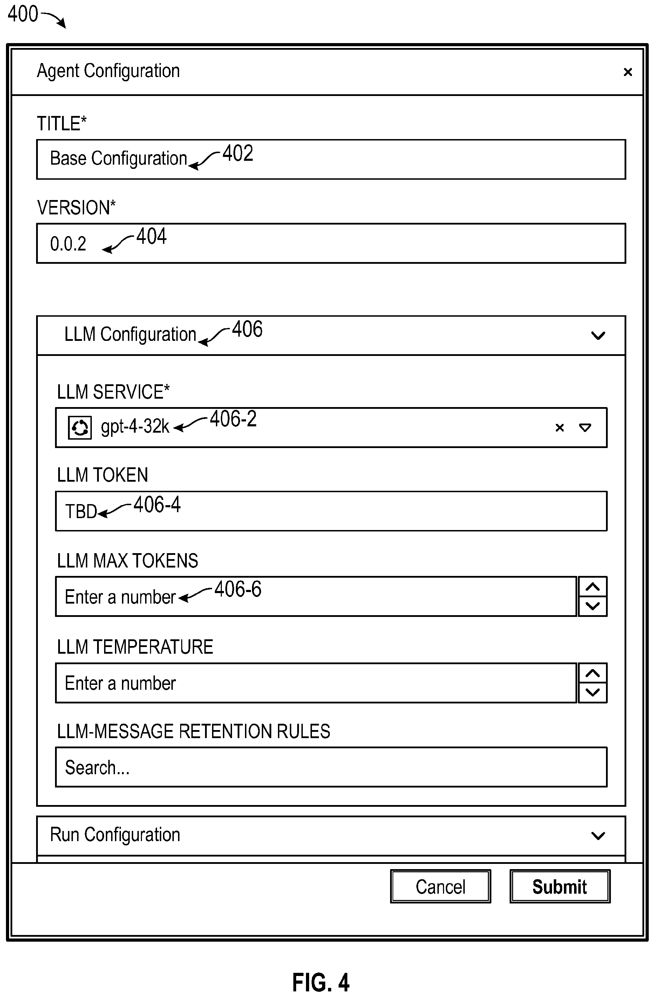

FIGS. 4-5 illustrate an example graphical user interface (GUI) 400. The GUI 400 may be an interactive GUI. The GUI 400 may be displayed by a computing device, such as user device 150 (see FIG. 1A, for example), which may comprise a computer, laptop, mobile device, tablet, phone, and/or the like. In various implementations, the GUI 400 can be displayed on the user device 150 as part of an extension or plug-in to a browser. In various implementations, the GUI 400 may be a native user interface such as a native user interface of the agent system 102 (e.g., agent service 106). The GUI 400 may be visualized by a user 150 as the user 150 interacts with the agent system 102, such as may be rendered by the user interface module 104.

The GUI 400 can receive one or more user inputs. In various implementations, the agent system 102 (e.g., via user interface module 104) may receive user input via GUI 400, which may then allow the system 102 to perform one or more operations based on the user input. The GUI 400 may allow the user 150 to interact with the agent system 102 for configuring agents, interacting with agents, and/or verifying results generated by agents. In some implementations, the GUI 400 may allow the user to select, deselect and/or create accessories (e.g., tools and/or related tool information) and/or other context or information, set permissions, select, deselect, and/or configure AI models for use by one or more agents, select and/or deselect child agents, configure handoff, and/or the like.

In various implementations, the GUI 400 may provide information for visualization by the user 150 that is associated with one or more runs. This may include any of the context and/or other information (e.g., accessories, prompts, and/or the like) provided to and/or used by one or more agents, parent-child relationships, task handoffs, time-stamped information relating to processing tasks and/or sub-tasks (e.g., timeline of processing events associated with one or more agents executing one or more tasks and/or sub-tasks), data service queries, LLM calls, LLM responses, LLMs and/or other available AI models useable by one or more agents, intermediate and/or final outputs, errors encountered and/or committed by agents, notifications, and/or the like.

The GUI 400, in various implementations, may present (interactive and/or non-interactive) graphical representation(s) of at least some of the accessories used by an agent. The graphical representation(s) may represent at least some of the accessories as nodes, and represent relationships of at least some of the accessories as edges. For example, a graphical representation may visualize a first accessory utilized by an agent to process a task as a first node, visualize a second accessory utilized by the agent to process the task as a second node, and show that the first node is connected to the second node through an edge, where the edge indicates that the second accessory is generated based on the first accessory. Advantageously, graphical representation(s) of the accessories can enable the user 150 to efficiently review and track what accessories are utilized by agents to process tasks, and how an accessory is related to another. In this way, the user 150 can modify one or more agent configurations, such as to improve the accuracy (e.g., relevancy) of agent outputs, and/or reduce computational load, storage requirements, and/or compute overhead associated with a task and/or sub-task to be performed by an agent.

As illustrated in the example embodiment of FIG. 4, the GUI 400 can include a display portion 402 that shows a title of a configuration of an agent. The title of the configuration of the agent can be editable by the user 150 to allow the user to manage (e.g., select, deselect, modify, and/or the like) configurations to configure the agent. As depicted in FIG. 4, the display portion 402 displays, "Base Configuration," which indicates the configuration of the agent that the user 150 is to configure. In various implementations, agent(s) 110may be configurable based on various settings or parameters, where the agent(s) may share one or more common building blocks (e.g., an agent logic that defines how agents operate and/or interact with each other, tools, and/or users).

The GUI 400 can include a display portion 404 that shows a version of the configuration of the agent. The version of the configuration of the agent can be editable by the user 150 to allow the user to manage configurations of the agent. As depicted in FIG. 4, the display portion 604 displays, "0.0.2," indicating the version number of the configuration of the agent. Advantageously, version-controlled configurations may allow the agent system 102 and/or the user 150 to track operations of agents, adapt agents among various configurations, and/or compare strengths and weakness of an agent when operating under disparate configurations.

The GUI 400 can include a display portion 406 that includes various configurations of an LLM utilized by an agent. As illustrated in FIG. 4, the display portion 406 displays, "LLM Configuration," indicating configurations of the LLM employed by the agent, which can be configured by the user 150 through operating on sub-portion(s) (e.g., a sub-portion 406-2, a sub-portion 406-4, or a sub-portion 406-6) of the display portion 406. The LLM may assist the agent to handle requests from the user 150 and/or process various types of tasks, such as (automatically) generating texts to summarize a set of documents, conducting analysis based on data contained in articles, tables, spreadsheets, or the like, scheduling distribution of materials based on supply chain constraints and requirements from demand sides, or the like. For example, the agent may query internal or third-party data using the LLM.

As shown in FIG. 4, the sub-portion 406-2 of the display portion 406 can allow the user 150 to switch a model of the LLM employed by the agent. In the example of FIG. 4, the sub-portion 406-2 displays, "gpt-4-32k," indicating the type of the model of the LLM. The sub-portion 406-2 may provide the user 150 the flexibility of swapping between various AI models employable by the agent to provide various services. For example, the user 150 may swap to an LLM useable for analyzing information to provide recommendations (e.g., to which distribution centers shipment orders should be placed) based on said analyses. Such model swapping flexibility provided by the sub-portion 606-2 may be advantageous in various aspects, such as experimentation and adaptation to different models based on specific use cases or requirements, providing versatility and scalability associated with services rendered by the agent system 102.

The display portion 406 can include the sub-portion 406-4 and the sub-portion 406-6 that allow the user 150 to configure various aspects of the LLM, such as tokens (e.g., token limits) for providing prompts to the LLM. As such, the user 150 may reconfigure the agent from one LLM configuration to another LLM configuration.

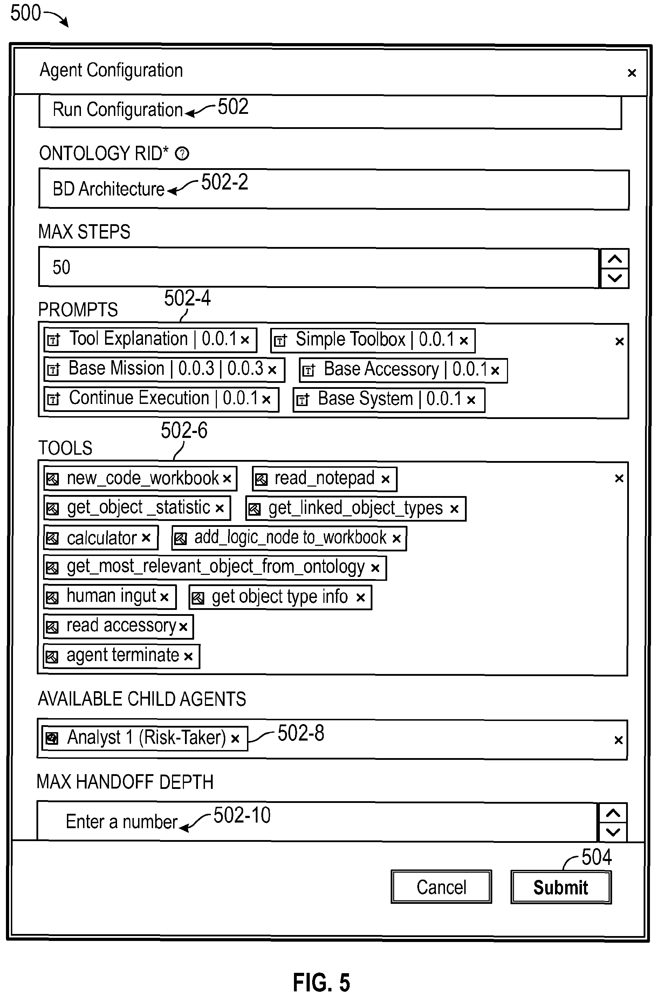

With reference to FIG. 5, the GUI 500 (which can be a portion of or continuation of GUI 400) can allow the user 150 to configure aspects of a run that is to be executed by an agent, such as an ontology, accessories (e.g., tools), prompts, other context, child-agents utilized by the agent for executing the run, and/or the like. As shown in FIG. 5, the GUI 500 can include a display portion 502 that displays various configurations of the agent for executing a run. Configurations associated with the run may be set by the user 150 through operating on sub-portions (e.g., a sub-portion 502-2, a sub-portion 502-4, a sub-portion 502-6, a sub-portion 502-8, or a sub-portion 502-10) of the display portion 502, and stored by the agent system 102 to facilitate automation orientation and/or co-pilot orientation. The configurations related to the run may include the initial prompt and subsequent prompts received by the agent from the user, other context provided to and/or used by the agent (e.g., tools and/or related tool information), start and end timestamps of the individual run, statuses (e.g., completed, succeeded, failed, or the like) of the individual run, timelines of occurrence of events while the agent executing the individual run, intermediate results generated by the agent, child-agents to which the agent handoffs tasks, handoff settings (e.g., number of permissible handoffs), errors committed by the agent (e.g., number of errors), or the like.

As illustrated in the example of FIG. 5, the sub-portion 502-2 of the display portion 502 can allow the user 150 to specify an ontology useable by the agent. As depicted in FIG. 5, the sub-portion 502-2 displays "BD Architecture," indicating the ontology associated with the agent. Advantageously, when the agent is tasked to solve a problem related to a new subject matter (e.g., business development) during the run, the user 150 may configure the agent to utilize the ontology that is created and/or updated based on the new subject matter.

The display portion 502 can include the sub-portion 502-4 that may allow the user 150 to manage the prompts that the agent is to receive for processing tasks during the run. As illustrated in the example of Fig. 5, the sub-portion 502-4 displays, "Tool Explanation | 0.01," "Simple Toolbox | 0.01," "Base Mission | 0.03 | 0.03," "Base Accessory | 0.01," "Continue Execution | 0.01," and "Base System | 0.01," indicating names (e.g., types) and versions of the prompts that the agent is to receive during execution of the run. For example, "Base Accessory | 0.01" indicates that the agent is to be provided with a prompt including an accessory and having a version number "0.01" for executing the run. 150

The display portion 502 can include the sub-portion 502-6 that may allow the user 150 to equip the agent with various tools useable when executing the run. As described hereinabove, the tools may allow the agent to interact with the agent system 102 (and/or components thereof), external systems, data services (e.g., data service 120), LLMs (e.g., LLM 130), databases, data stores, ontologies, and/or the like. The tools can be used by the agent to generate requests (that may be fulfilled by the agent system 102) to perform operations such as querying datasets, processing data including filtering or aggregating data, writing to datasets (e.g., adding or updating rows of a table, editing or updating an object type, updating parameter values for an object instance, generating a new object instance, and/or the like), implementing integrated applications (e.g., an email or SMS application), communicating with APIs, and/or any other functions that communicate with other external or internal components. As illustrated in the example embodiment of FIG. 5, tools displayed in the sub-portion 502-6 include "new_code_workbook," "read_notepad," "get_object_statistic," "get_linked_object_types," "calculator," "add_logic_node_to_workbook," "read_accessory," "get_most_relevant_object_from_ontology," "get_object_type_info," "agent_terminate," and "human_input."

The display portion 502 may include the sub-portion 502-8 that may allow the user 150 to configure available child-agent(s) to which the agent may handoff tasks or sub-tasks. As depicted in FIG. 5, the sub-portion 502-8 displays, "Analyst 1 [Risk-Taker]," indicating that the child agent may be specialized in risk taking analysis. For example, if the agent determines that a task to be performed and/or currently being performed by said agent requires specialized capability of analyzing risks, the agent may handoff some or all of the task to the child agent that has been trained and/or or tested to efficiently analyze risks. The child agent may have been configured by the user 150 using the GUI 400 and/or GUI 500 and/or by the agent system 102.

The display portion 502 may include the sub-portion 502-10 that may allow the user 150 to set a maximum number of handoffs for the agent. Advantageously, limiting the number of handoffs on some or all types of tasks may increase security of the agent system 102. In various implementations, the sub-portion 502-10 can allow the user 150 to configure the types of handoffs that can be employed by a user during a run. These can include, but are not limited to, blocking handoffs (e.g., where the agent may handoff a task to a child agent, pause until receiving a result from the child agent, and then proceed after receiving the result), parallel handoffs (e.g., where the agent may handoff tasks in parallel to multiple child agents, and, without waiting for results from the child agents, continue to process other tasks or sub-tasks), and/o the like. Advantageously, configuration of various handoffs schemes may enable the agent system 102 (e.g., agent service 106) to flexibly and efficiently utilize agents in the to process tasks based on characteristics of said tasks.

The GUI 400 and/or GUI 500 can also include an interactive graphical element 504 (e.g., a button or other control) that may allow the user 150 to submit any of the configurations described herein to configure the agent for processing tasks. By interacting with (e.g., clicking, tapping, pressing, and/or the like) the graphical element 504, the user 150 may cause the agent system 102 (e.g., the agent service 106) to configure the agent.

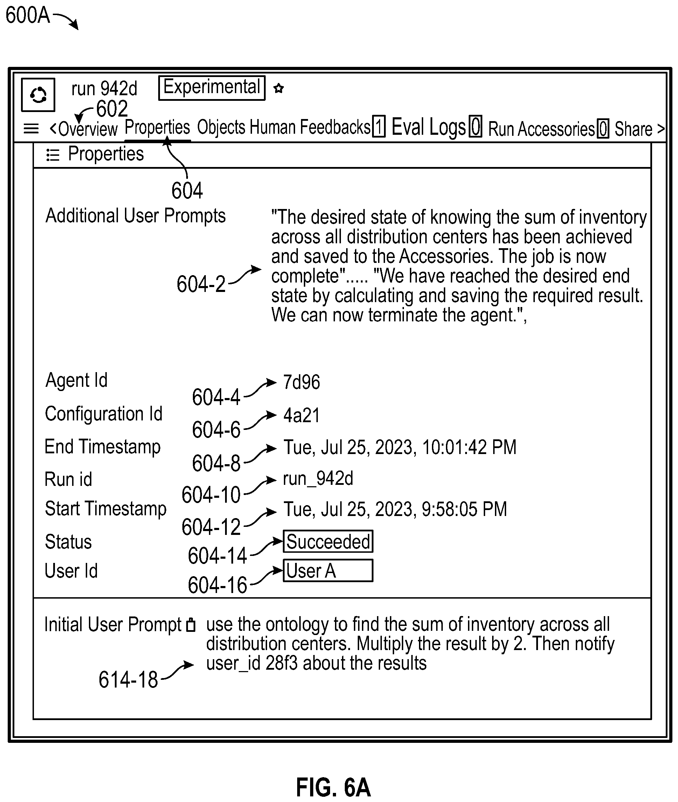

FIGS. 6A-6B illustrate example GUIs 600A and 600B, respectively. The GUIs 600A and 600B may be interactive GUIs. The GUIs 600A and 600B may be displayed by a computing device, such as user device 150. In various implementations, the GUIs 600A and 600B can be displayed on the user device 150 as part of an extension or plug-in to a browser. In various implementations, the GUIs 600A and 600B may be native user interfaces such as native user interfaces of the agent system 102 (e.g., agent service 106). The GUIs 600A and 600B may be visualized by a user 150 as the user 150 interacts with the agent system 102, such as may be rendered by the user interface module 104.

The GUIs 600A and 600B can receive one or more user inputs. In various implementations, the agent system 102 (e.g., via user interface module 104) may receive user input via GUIs 600A and 600B, which may then allow the system 102 to perform one or more operations based on the user input. The GUIs 600A and 600B may allow the user 150 to interact with the agent system 102 for monitoring tasks performed by agents. For example, in various implementations, the agent system 102 may capture and synchronize data and/or information associated with a run into an (e.g., ontology 205) associated with a database (e.g., database 209), which may be comprised, in whole or in part, by the database module 108 as described herein. As such, data utilized by the agent system 102 may be organized and linked to context and/or other information for providing the user 150 with a comprehensive knowledge base for evaluation, verification, and analysis, which said information may be surfaced in the GUIs 600A and/or 600B for visualization by the user 150.

As illustrated in the example embodiment of FIG. 6A, the GUI 600A can include a display portion 602 and a display portion 604 that can enable the user 150 to navigate information related to a run. As illustrated in FIG. 6A, the display portion 602 displays, "Overview," indicating that the user 150 can view an overview of the run, such as by navigating to the display portion 602. As depicted in the example of FIG. 6A, the display portion 604 displays, "Properties," indicating properties associated with the run that can be viewed by the user 150, such as by navigating to the display portion 604.

The GUI 600A can include a display portion 604-2, a display portion 604-4, a display portion 604-6, a display portion 604-8, a display portion 604-10, a display portion 604-12, a display portion 604-14, a display portion 604-16, and/or a display portion 614-18 that can display various properties associated with a run. The display portion 614-18 can show an initial user prompt from the user 150 to the agent system 102 (e.g., agent service 106) for the run. In the example of FIG. 6A, the display portion 614-18 may indicate to an agent to use an ontology (e.g., selected in the sub-portion 502-2) to process a task (e.g., find the sum of inventory across all distribution centers) specified by the initial user prompt.

The display portion 604-2 displays additional user prompts received by the agent system 102 from the user 150 during the run. In the example embodiment of FIG. 6A, the display portion 604-2 indicates that the user 150 has instructed the agent system 102 (e.g., the agent service 106) to terminate processing the task after the request from the user 150 is fulfilled.

The display portion 604-4 can display an agent identifier (e.g., agent ID) of an agent that is employed in the run to fulfill request(s) from the user 150. The display portion 604-4 may enable the user 150 to identify the agent that is utilized to execute the run such that the user 150 may associate the performance of the run with the agent that is responsible for executing the run.

The display portion 604-6 displays a configuration identifier (e.g., configuration ID) associated with the configuration used to configure the agent used to execute the run. Advantageously, the configuration ID may allow the user 150 and/or the agent system 102 to track operations of agents, adapt agents among various configurations, and/or compare strengths and weakness of an agent when operating under disparate configurations.

The display portion 604-8 displays an end time (e.g., an end timestamp) of the run indicating when the run began, and the display portion 604-12 displays a start time (e.g., a start timestamp) of the run indicating when the run completed. Advantageously, the display portions 604-8 and 604-12 allow the user 150 to gauge the amount of time the agent took to complete the run.

The display portion 604-10 displays a run identifier (e.g., run ID) associated with the run. The display portion 604-14 displays a status (e.g., successful completion, error, paused, stopped, terminated, request for additional information, and/or the like) of the run. In the example embodiment of FIG. 6A, the display portion 604-14 displays, "Succeeded," indicating that the run has been successfully completed and the request(s) of the user 150 for the run have been fulfilled. The display portion 604-16 displays a user identifier (e.g., user ID) associated with the user 150 that initiated the run.

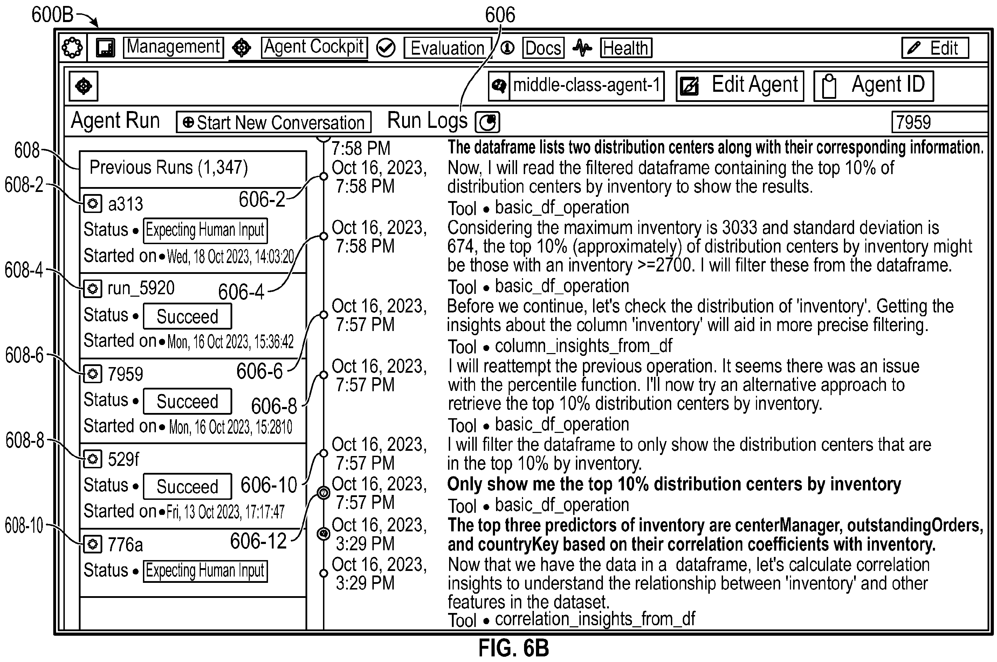

Moving to FIG. 6B, the GUI 600B displays a log 606 of a run to a user 150. The agent system 102 (e.g., agent service 106) may generate and maintain the log 606 to record events, timelines, received inputs, or generated outputs while an agent processes tasks during the run. The log 606 may describe events that occurred while the agent processed tasks and corresponding timestamps, inputs received from users and/or the system, and/or results generated by the agent. The log 606 may further record errors (e.g., a number of errors) committed by the agent in processing tasks. Advantageously, the log 606 may allow the user 150 to monitor and/or evaluate performances of agents in executing the run, such as for a variety of purposes (e.g., re-train an agent for processing a particular type of task in response to determining a certain number of errors committed by an agent in processing a particular type of task).

As illustrated in the example of FIG. 6B, the log 606 may include a portion 606-12 that may display a supplemental instruction (e.g., additional user input, prompts, and/or the like) provided by the user 150 to the agent system 102 via the user interface module 104. The portion 606-12 can allow the user 150 to view when user input(s) is(are) provided to the agent during the run.

The log 606 may include a portion 606-2, a portion 606-4, a portion 606-6, a portion 606-8, a portion 606-10, and a portion 606-12. Each of the portions 606-2, 606-4, 606-6, 606-8, and/or 606-10 can display an action taken by an agent during the run and a time that the action was taken, such as in response to receiving input(s) as indicated in the portion 606-12. For example, as depicted in FIG. 6B, the portion 606-2 displays a time when the agent read filtered dataframe containing the top 10% of distribution centers by inventory. In this way, the log 606 can allow the user 150 to view the action(s) taken by the, such as for monitoring and/or evaluating the soundness of steps taken or decisions made by the agent in executing a run.

The GUI 600B may include a display portion 608 that lists previous runs executed by one or more agents in fulfilling requests from the user 150. As illustrated in the example of Fig. 6B, the display portion 608 displays, "Previous Run (1,347)," indicating that the agent system 102 (e.g., agent service 106) may have executed 1,347 runs for the user 150. Located below the display portion 608 are a sub-portion 608-2, a sub-portion 608-4, a sub-portion 608-6, a sub-portion 608-8, and a sub-portion 608-10. Any of the sub-portions 608-2, 608-4, 608-6, 608-8, and/or 608-10 may summarize a previous run executed by the agent system 102 for the user 150.

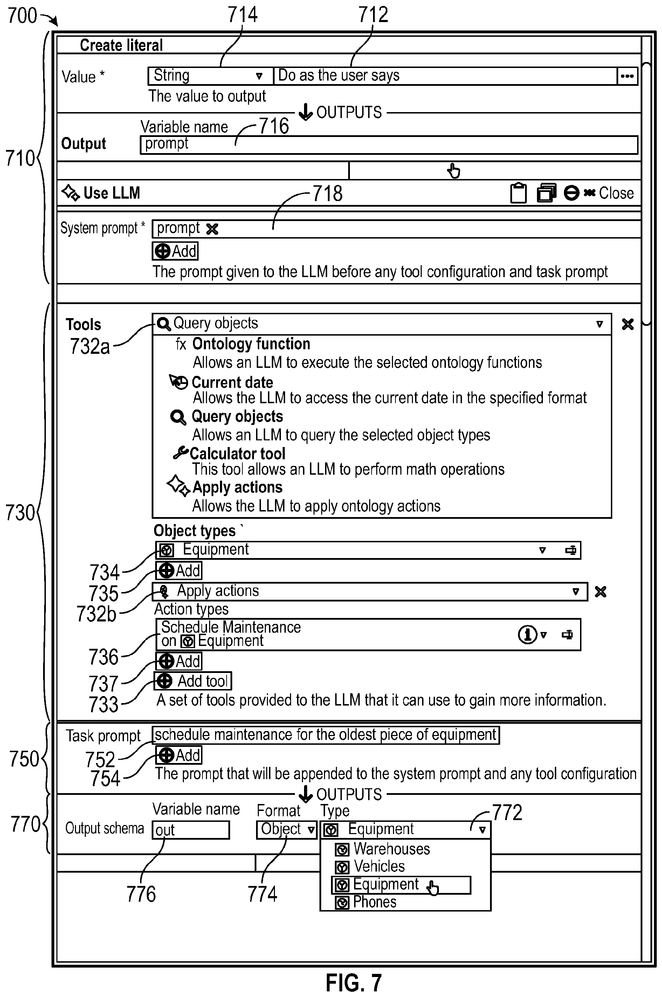

FIG. 7 illustrates an example GUI 700. The GUI 700 may be an interactive GUI. The GUI 700 may be displayed by a computing device, such as user device 150. In various implementations, the GUI 700 can be displayed on the user device 150 as part of an extension or plug-in to a browser. In various implementations, the GUI 700 may be a native user interface such as a native user interface of the agent system 102 (e.g., agent service 106). The GUI 700 may be visualized by a user 150 as the user 150 interacts with the agent system 102, such as may be rendered by the user interface module 104. In various implementations, the GUI 700 can include one or more features and/or functions similar or identical to any of GUIs 400, 500, 600A, and/or 600B.

The GUI700 can receive one or more user inputs. In various implementations, the agent system 102 (e.g., via user interface module 104) may receive user input via GUI 700, which may then allow the system 102 to perform one or more operations based on the user input. GUI 700 can facilitate a user 150 interacting with an agent and/or LLM, such as may be used by an agent. GUI 700 can facilitate generating a prompt for an agent and/or LLM to cause the agent and/or the LLM to generate a useful (e.g., accurate) response. GUI 700 can improve agent workflows and/or LLM workflows.

GUI 700 can include a system prompt pane 710, a tool pane 730, a task prompt pane 750, and an output schema pane 770.

System prompt pane 710 can include a value input field 712, a value format field 714, an output field 716, and a system prompt field 718. Value input field 712 can receive a user input, such as "do as the user says", as shown in FIG. 7. A user 150 can format a value entered via value input field 712 by selecting a format via value format field 714. Value format field 714 can comprise a drop-down menu displaying one or more options such as "string" or "object.". In the example illustrated in FIG. 7, a user 150 has selected to format the value of value input field 712 as a string.

A device or system (e.g., system 102 and/or components thereof) may store a value entered via the value input field 712 as a variable. The device or system may store the variable in memory associated with the agent system 102. The agent system 102 (e.g., agent service 106) may access the variable to provide to an agent and/or LLM. Output field 716 can receive a user input indicating a variable name as which to save a value entered via value input field 712. As depicted in FIG. 7, a user 150 has entered "prompt" via the output field 716 as the variable name to save the value inputted via value input field 712. Advantageously, the agent system 102 can receive variables via system prompt field 718. In some implementations, a variable may reference data. Providing a variable to the agent system 102 may be easier than providing data referenced by the variable (particularly where the variable references large amounts of data). Accordingly, a user 150 can pass large amounts of data to the agent system 102 (and subsequently to an agent and/or LLM) by simply inputting a variable via system prompt field 718. The agent system 102 (e.g., agent service 106) can generate a prompt to be fed to an agent and/or an LLM based on the variable provided via system prompt field 718. The agent system 102 can provide context for the variable, including what the variable is and how to use it.

System prompt field 718 can receive a system prompt, which can be part of the prompt provided to an agent and/or LLM and is typically included prior to information in the prompt about any tool or task information. The device or system can provide the system prompt to an agent and/or LLM. System prompt field 718 can receive a variable stored in memory. System prompt field 718 can receive a variable previously stored using value input field 712, value format field 714, and/or output field 716. In the example of FIG. 7, the system prompt field 718 includes the variable "Prompt," which is the variable assigned in input box 712 and named in output box 716. A user may enter a system prompt via system prompt field 718. The system prompt field 718 may autocomplete variable names of variables that are stored as the user enters characters into the system prompt field 718.

Tool pane 730 can include one or more tool input fields, such as tool input field 732a and an action type input field 732b. Tool pane 730 can include one or more object type input fields 734 and one or more action type input fields 736.

A user can configure one or more tools via tool pane 730. A device or system can generate a prompt based on at least tool(s) input by a user via tool pane 730. The prompt can include information associated with the tool(s), such as text that allows the agent and/or LLM to generate tool calls that are useable to obtain further information associated with the task. The device or system can provide the prompt (including tool information) to an agent and/or LLM which can implement the tool(s) selected by the user via tool pane 730 such as by generating a tool call for an agent to execute. A user can select or enter one or more tools via tool input field 732a. In the example of FIG. 7, a user 150 has selected a query object tool via tool input field 732a and an apply action tool via tool input field 732b. A user 150 may add additional tools via tool pane 730 such as by selecting the add tool selector 733.

Tool input fields 732a, 732b may comprise a drop-down menu. A user 150 may visualize a list of available tools via a drop-down menu of tool input field 732a. As shown, in response to selecting tool input field 732a, tool input field 732a displays a drop-down menu of available tools from which a user may select a tool. Tools available for input via tool input field 732a can include an ontology function tool, a date/time tool, a query objects tool, a calculator tool, an apply action tool, and/or any other tool. The example tools shown and/or discussed herein are not intended to be limiting of the present disclosure. An ontology function tool can allow an agent and/or LLM to execute one or more functions associated with an ontology. A user may select the ontology functions, such as via the tool pane 730. A date/time tool can allow an agent and/or LLM to access the current date, such as according to a specified format. A user 150 can select the format, such as via tool pane 730. A query objects tool can allow an agent and/or LLM to query selected object types. A user 150 can select object types, such as via the tool pane 730. A calculator tool can allow an agent and/or LLM to perform mathematical operations. An apply actions tool can allow an agent and/or LLM to apply one or more actions associated with an ontology. A user 150 may select the one or more actions, such as via the tool pane 730.

In response to selecting a query object tool via tool input field 732a, the tool pane 730 may automatically display an object type input field 734. Object type input field 734 can comprise a drop-down menu of various object types. A user may input or select an object type via object type input field 734 that is associated with the query object tool. A device or system, such as agent system 102 (e.g., agent service 106), may implement a query object tool on the one or more object types selected by a user such as via object type input field 734. For example, an agent may query the one or more object types selected by a user such as in response to a request from an LLM to implement the query objects tool. A user 150 may input or select additional object types associated with the query object tool such as by selecting the add object type selector 735. In some implementations, a user may input or select a plurality of object types associated with the query object tool. In this example, a user has selected an equipment object type via object type input field 734, which is not intended to be limiting of the present disclosure.

In some implementations, such as in response to a user 150 selecting an ontology function tool via the tool input field 732a, the tool pane 730 may automatically display a function input field (such as rather than object type input field 734). In some implementations, such as in response to a user 150 selecting a date/time tool via the tool input field 732a, the tool pane 730 may automatically display a format input field (such as rather than object type input field 734) for formatting a date and/or time.

In response to selecting an apply action tool via tool input field 732b, the tool pane 730 may automatically display an action type input field 736. Action type input field 736 can comprise a drop-down menu of various object types. A user may input or select an action type via action type input field 736 that is associated with the apply action tool. A device or system, such as agent system 102 (e.g., agent service 106), may implement an apply action tool, such as by applying the one or more action types selected by a user such as via action type input field 736. For example, an agent may apply an action selected by a user 150 such as in response to a request from an LLM to apply the action. For example, in response to tool information regarding an action that is included in an LLM prompt, the LLM may output text indicating an action call (e.g., a type of "tool call") that is to be initiated by the agent. For example, an action call may be text that can be directly (and/or after modification) transmitted to another software application or system to perform a task. In some implementations, the agent system 102 may apply an action according to an object type selected by a user via object type input field 734. For example, the agent system 102 may apply an action to an object having an object type selected by the user 150 via object type input field 734. A user 150 may input or select additional action types associated with the apply action tool such as by selecting the add action type selector 737. In some implementations, a user 150 may input or select a plurality of action types associated with the apply action tool. In the example of FIG. 7, a user 150 has selected a schedule maintenance action type via action type input field 736, which is not intended to be limiting of the present disclosure.

As shown, a user 150 may manually configure tool(s) associated with a task, request, or prompt to be provided to an agent and/or LLM. For example, a user 150 may select one or more tools and/or may select one or more types or formats associated with the selected tools, such as an object type, an action type, an ontology function, a date format, or the like. In some implementations, a device or system, such the agent system 102 (e.g., agent service 106), may automatically configure one or more tool(s) based on one or more user inputs, such as task prompt input. For example, an agent and/or LLM may determine one or more tools needed to perform a task requested by a user 150 and/or may automatically select one or more types or formats associated with the selected tools.

Task prompt pane 750 can include a task input field 752. A user 150 may enter a task prompt (also referred to herein as a "task") via task input field 752, which may be included in the prompt to the agent and/or LLM after the tool information. The task prompt may represent a request from a user 150 for an agent to perform a task. In the example embodiment of FIG. 7, a user 150 has inputted "schedule maintenance for the oldest piece of equipment" as the task prompt via task input field 752. In some implementations, a user 150 can input additional task prompts such as by selecting the add task selector 754. The device or system can generate a prompt based on at least the task prompt. The device or system can provide the task prompt to an agent and/or LLM.

Output schema pane 770 can include an output type field 772, an output format field 774, and an output name field 776. A user 150 can configure an agent output and/or LLM output using output pane 770. For example, a user 150 can configure a format of an agent output and/or LLM output. Existing LLMs may output data as a certain format, such as a string. Existing LLMs may lack the ability to output data in various types of formats. In some implementations, an LLM data output format or type may be incompatible with a system or workflow. For example, an agent may accept an LLM output as an input to a subsequent data processing services or system processes, but the formats may be incompatible. In some examples, a user 150 may desire to obtain an output from an agent and/or LLM in a certain format, such as a non-string format. A user 150 may select a desired data output format via output schema pane 770. A device or system, such agent system 102, can format an output from an agent and/or LLM such as configured by a user 150 via output schema pane 770. A device or system, such as agent system 102, can change an agent output and/or LLM output from one data format or type to another data format or type. Advantageously, the devices, systems, or processes described herein may improve the usefulness of agent outputs and/or LLM outputs, such as by parsing an agent output and/or LLM output to properly format an output as required or desired by the agent system 102 or user 150. Advantageously, the devices, systems, or processes described herein may improve the technical field of AI-powered agents such as by improving the usefulness of agent outputs and/or LLM responses, which can facilitate integrating agents and/or LLMs with various systems or workflows such as by rendering agent outputs and/or LLM outputs compatible with the systems or workflows.

A user 150 can select a data format for an output via output format field 774. As depicted in FIG. 7, the user 150 has selected "object" as the data format for an output. A user 150 can select a particular object type for an output via output type field 772. In the example of FIG. 7, a user 150 has selected an equipment object type as the data type for an output. In some implementations, a user 150 may select "primitive" as the data format for an output via output format field 774. In some implementations, output type field 772 may comprise a drop-down menu displaying one or more data types for selection by a user 150, which may include decimal, double, float, integer, long, map, ontology edit, short, string, or the like, which may correspond to a primitive data format.

A user 150 may input a variable name via output name field 776. A device or system, such as the agent system 102 (e.g., agent service 106), can store an agent output and/or LLM output as a variable having a variable name selected by a user 150. The agent system 102 can subsequently use the variable in or more processes, operations, or workflows, including providing the variable to an agent and/or LLM. A variable may serve as a reference to underlying data. For example, an agent and/or LLM may output a query configured to access large amounts of data and the agent system 102 (e.g., agent service 106) can store that output query as a variable. Advantageously, storing the agent output and/or LLM output as a variable can allow for rapidly passing the variable between workflows or processes and/or providing to a user 150, without having to also pass the underlying data (which may be very large in size). For example, accessing underlying data stored as or reference by a variable may require long processing times and/or may not be practical such as when displaying the data to a user at least because of the size of the data. In some implementations, the agent system 102 can access a variable to provide to an agent and/or LLM along with context explaining what the variable is or how to use the variable, and/or the like. For example, variable "out" can by input to system prompt field 718 as part of a prompt fed to an agent and/or LLM.

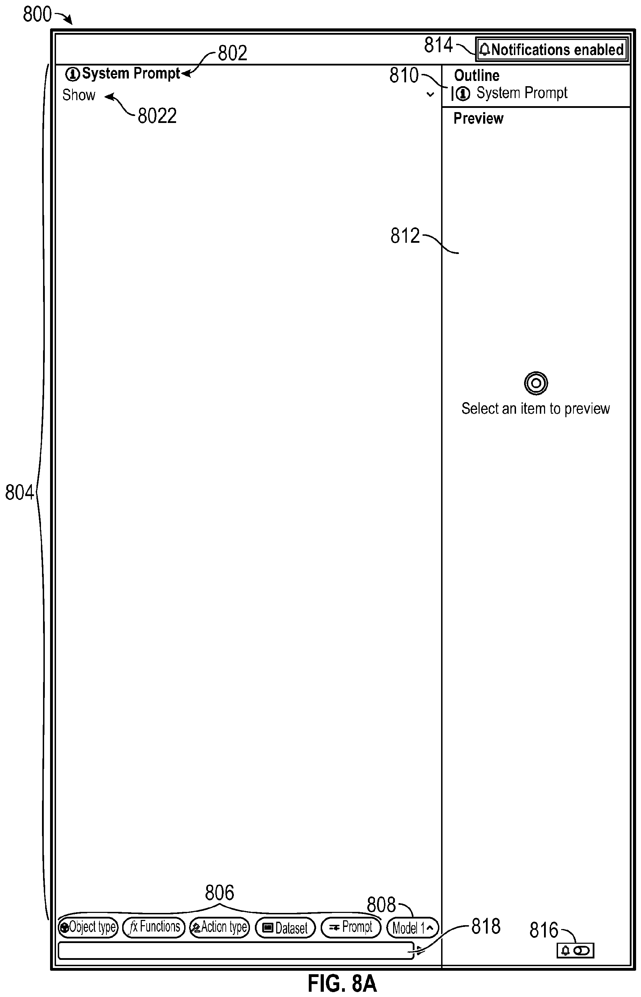

FIGS. 8A-8K illustrate example GUI 800 and related example GUIs 8062-2 and 8322, such as may be accessed via GUI 800. Any of GUIs 800, 8062-2, and/or 8322 may be interactive GUIs. The GUIs 800, 8062-2, and/or 8322 may be displayed by a computing device, such as user device 150. In various implementations, the GUIs 800, 8062-2, and/or 8322 can be displayed on the user device 150 as part of an extension or plug-in to a browser. In various implementations, the GUIs 800, 8062-2, and/or 8322 may be a native user interface such as a native user interface of the agent system 102 (e.g., agent service 106). The GUIs 800, 8062-2, and/or 8322 may be visualized by a user 150 as the user 150 interacts with the agent system 102, such as may be rendered by the user interface module 104. In various implementations, the GUIs 800, 8062-2, and/or 8322 can include one or more features and/or functions similar or identical to any of GUIs 400, 500, 600A, 600B, and/or 700.

Referring to FIG. 8A, the GUI 800 can receive one or more user inputs. In various implementations, the agent system 102 (e.g., via user interface module 104) may receive user input via GUI 800, which may then allow the system 102 to perform one or more operations based on the user input. GUI 800 can facilitate a user 150 interacting with an agent and/or LLM. GUI 800 can facilitate generating a prompt for an agent and/or LLM to cause the agent and/or the LLM to generate a useful (e.g., accurate) response. GUI 800 can improve agent workflows and/or LLM workflows.

The GUI 800 can include a context stream pane 804, one or more context item selectors 806, a configuration parameters selector 808, an outline pane 810, and an item preview pane 812.

The context stream pane 804 can receive user input. The context stream pane 804 can populate with one or more editable and/or non-editable representations of one or more context items fed to an agent and/or LLM. For example, as a user 150 and/or agent system 102 (e.g., agent service 106) provides context items to an agent and/or LLM, and/or as an agent (e.g., LLM-based agent) feeds context items to an LLM, the context stream pane 804 can dynamically populate with editable and/or non-editable representations of said context items. As described herein above, context items can include any of tools and/or related tool information, tool calls, prompts, user input(s) (e.g., user queries), tasks, intermediate and/or final agent outputs and/or LLM outputs, accessories, other context and/or other useful information such as described herein, and/or the like. In various implementations, the context stream pane 804 can populate with editable and/or non-editable representations of steps (e.g., tool calls) taken by an agent and/or LLM in performing one or more tasks, intermediate agent and/or LLM outputs generated in the course of performing one or more tasks, and/or final agent and/or LLM outputs generated upon completion of one or more tasks. The agent system 102 may transform these various steps, responses, and/or outputs into context items to be fed back to the agent and/or LLM, such as for further processing and/or subsequent execution of one or more tasks. As described herein, intermediate and/or final agent outputs may include intermediate and/or final LLM outputs generated by an LLM that is utilized by an agent in the course of performing a task.

Editable representations, in various implementations, may be interacted with by a user 150 via the context stream pane 804. For example, the user 150 may delete editable representations from the context stream pane 804, in response to which the agent and/or LLM may no longer have access to the associated context items. In some examples, the user 150 may edit (e.g., update, remove from, and/or add to) at least a portion of an editable representation via the context stream pane 804. Consequently, the agent system 102 (e.g., agent service 106) may automatically (e.g., without additional user interaction) modify the underlying context item (e.g., at least a portion of the content of the context item may be updated, removed, and/or added to) and provide the modified context item to an agent and/or LLM.

The user interface module 104 may generate user interface data associated with said context items, which may be rendered in the context stream pane 804. In this way, the context stream pane 804 can provide a human-friendly visualization (e.g., HTML format) to the user 150 representative of all input(s) that are being fed to the agent and/or LLM.

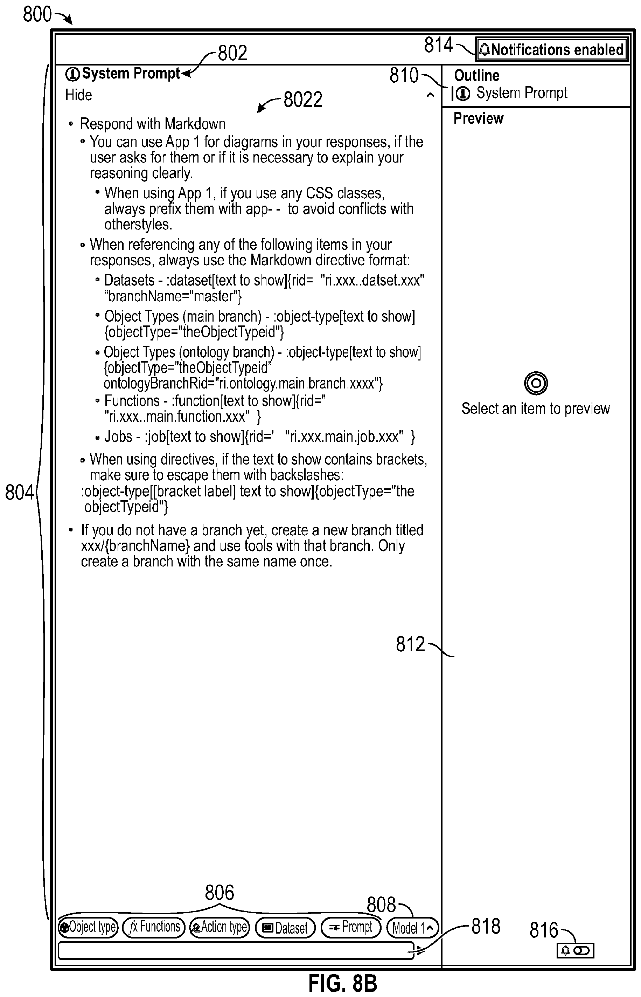

In the example embodiment of FIG. 8A, the context stream pane 804 displays an editable representation 802 of a system prompt, such as described hereinabove. The system prompt may be provided to an agent and/or LLM via the user 150 and/or agent system 102. The representation 802 of the system prompt can be associated with an interactive content selector that can comprise a drop-down menu that includes editable information relating to the system prompt (see FIG. 8B, for example).

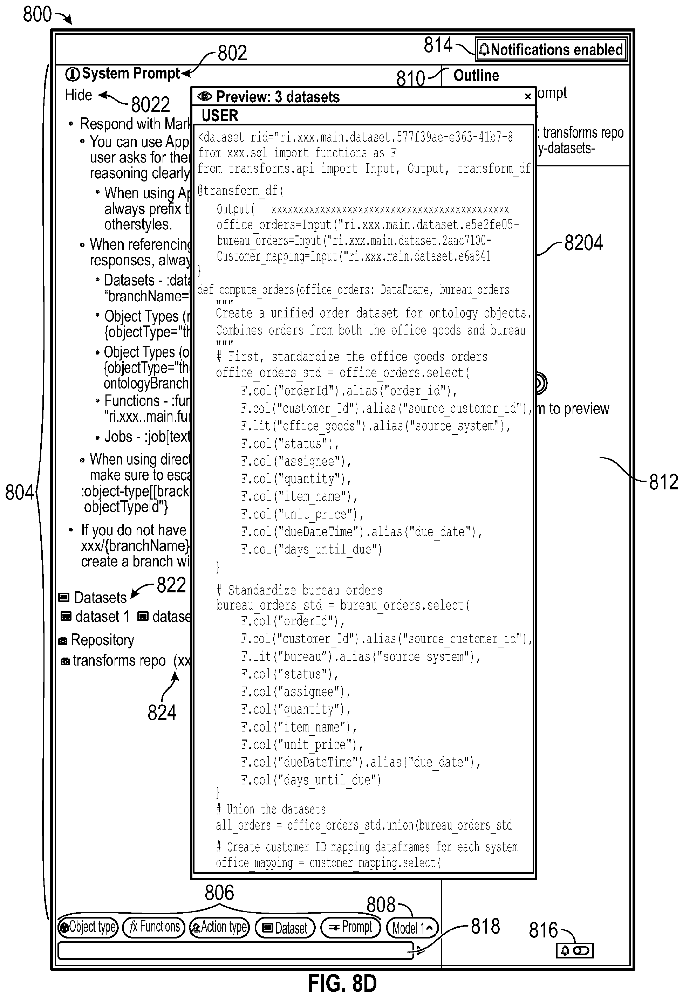

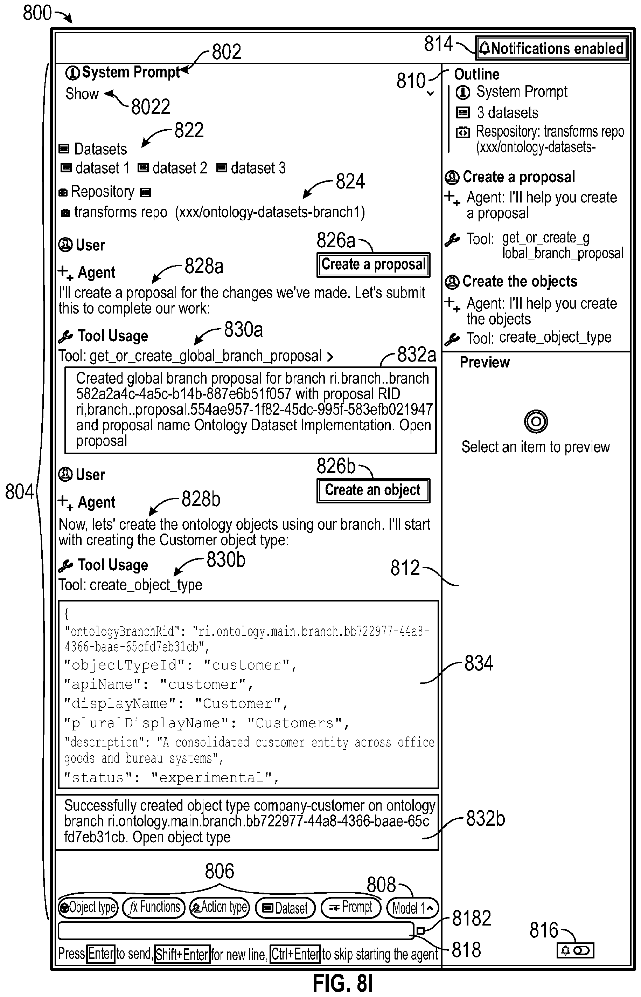

The context item selectors 806 can receive user input. The context item selectors 806 can comprise respective menus (e.g., drop-down menus, pop-up menus, and/or the like) that display available context items that may be selected by the user 150 and provided to the agent and/or LLM. In the example of FIG. 8A, the context item selectors 806 include "Object Type," "Functions," "Action Types," "Datasets," and "Prompt." However, this is not intended to be limiting. Other context items may be represented by the context item selectors 806. In various implementations, the context item selectors 806 can support drag-and-drop functionalities. For example, a user 150 may drag and drop a data object representative of a context item, a URL representative of a context items, and/or the like onto or near the context item selectors 806, upon which the context item(s) may be provided to the agent and/or LLM. As context items are selected and/or dragged and dropped, the context stream pane 804 may dynamically populate with editable and/or non-editable representations of said context items (see FIGS. 8D-8F, 8I-8J, for example).

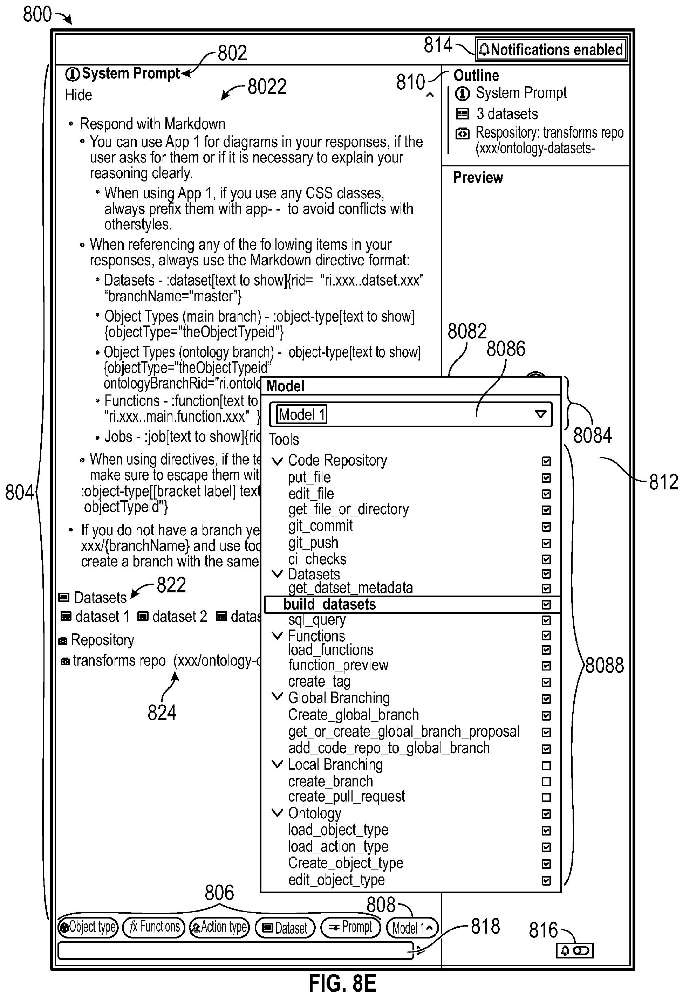

The configuration parameters selector 808 can receive user input. The configuration parameters selector 808 can include a menu (e.g., drop-down menu, pop-up menu, and/or the like) that displays available configuration parameters for an agent that may be selected and/or deselected by the user 150. For example, selected configuration parameters may make available for use by the agent certain of AI models and/or tools, such as further described herein (see FIG. 8E, for example). Deselected configuration parameters may prohibit and/or make unavailable for use by the agent certain of AI models and/or tools, such as further described herein (see FIG. 8E, for example). In this way, a user 150 can steer the processing of certain tasks by the agent, such as to improve the accuracy (e.g., relevancy) of generated agent outputs.

The outline pane 810 can provide a user with an overview of the processing workflow of the agent in performing one or more tasks. The outline pane 810 can dynamically populate with graphical representation of context items, other information, and/or other inputs fed to the agent and/or LLM, steps taken by an agent and/or LLM in the course of performing one or more tasks (e.g., outputting and/or executing a tool call), and/or intermediate and/or final responses by an LLM and/or agent. The representations surfaced in the outline pane 810 can mirror the representation surfaced in the context stream pane 804. In the example embodiment of FIG. 8A, the outline pane displays a representation of the system prompt, mirroring the representation 802 of the system prompt displayed in the context stream pane 804.

In various implementations, the GUI 800 can include a user query field 818. The user query field 818 can receive user input from the user 150. Upon the user 150 providing a user query (e.g., natural language request) in the user query field 818, the agent system 102 (e.g., agent service 106) may provide the user query (e.g., in a prompt, along with other context) to the agent and/or LLM. In response, the context stream pane 804 and/or outline pane 810 can populate with editable and/or non-editable representations of the user query that has been fed to the agent and/or LLM (see FIG. 8I, for example).

In various implementations, the GUI 800 can include an item preview pane 812. The item preview pane 812 can receive user input and/or can support a drag and drop functionality. The item preview pane 812 can display information (e.g., graphical icons, text phrases, other visual indicia, and/or the like) representative of the contents of a context item (e.g., data items in a dataset, properties of said data items, and/or the like) for visualization by the user 150. In this way, the user 150 can readily inspect the contents of context items that are fed to the agent and/or LLM.

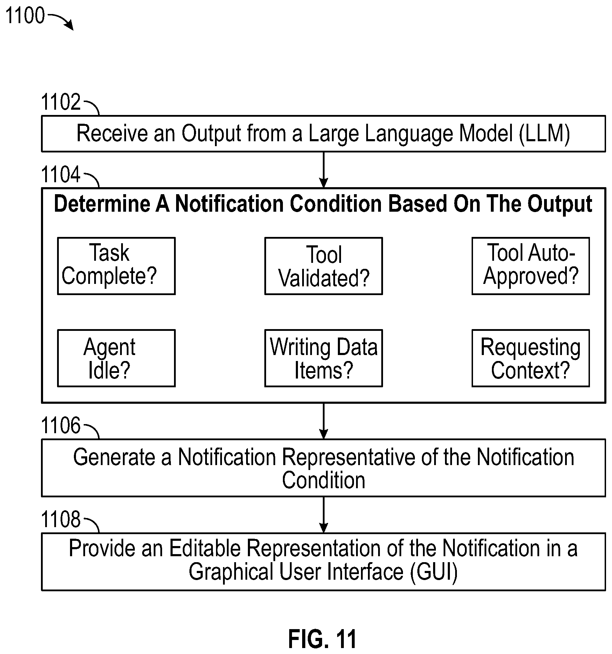

The GUI 800, in various implementations, can include a notification selector 816 and a notification icon 814. The notification selector 816 can be interactive such that the user 150 can toggle the selector 816 to turn on or off notifications associated with tasks performed by the agent. If a user 150 toggles the selector 816 to turn on notifications, the notification icon 814 may be presented in the GUI 800 for visualization by the user 150. In this way, the user 150 can be informed that the agent system 102 may provide the user 150 with any variety of notifications associated with the agent performing one or more tasks (e.g., such as any step that may require user attention). In various implementations, notifications may be generated in response to a variety of notification conditions, including but not limited to, completion of a task, non-validation of a tool, approval for execution of a tool call, requests for additional information, writing to datasets, an idle agent, and/or other situations that may require user attention before the agent proceeds with performing a task and/or sub-task. The notification icon 814 can include an editable and/or non-editable representation of the notification condition such that the user 150 is made aware of why the notification has been generated. Generation of notifications are further described with reference to FIG. 11.

Moving to the example of FIG. 8B, a user 150 has selected the interactive content selector to view the contents of the system prompt. Consequently, the context stream pane 804 can provide an editable and/or non-editable representation 8022 of the content of the system prompt. In the example embodiment of FIG. 8B, the context stream pane 804 displays text phrases indicative of the system prompt contents in a human-friendly format that can be readily understood by the user 150. The representation 8022 of the system prompt content can facilitate the user 150 to know the details of the system prompt that have been fed to the agent and/or LLM. In various implementations, the user 150 can modify the contents of the system prompt via interaction with the associated graphical representation 8022 displayed in the context stream pane 804. For example, the user 150 can delete, edit, update, add to, and/or remove at least a portion of the content of the system prompt. Responsive to user input to modify the system prompt via the context stream pane 804, the agent system 102 (e.g., agent service 106) may automatically (e.g., without additional user interaction) feed the modified system prompt to the agent and/or LLM.

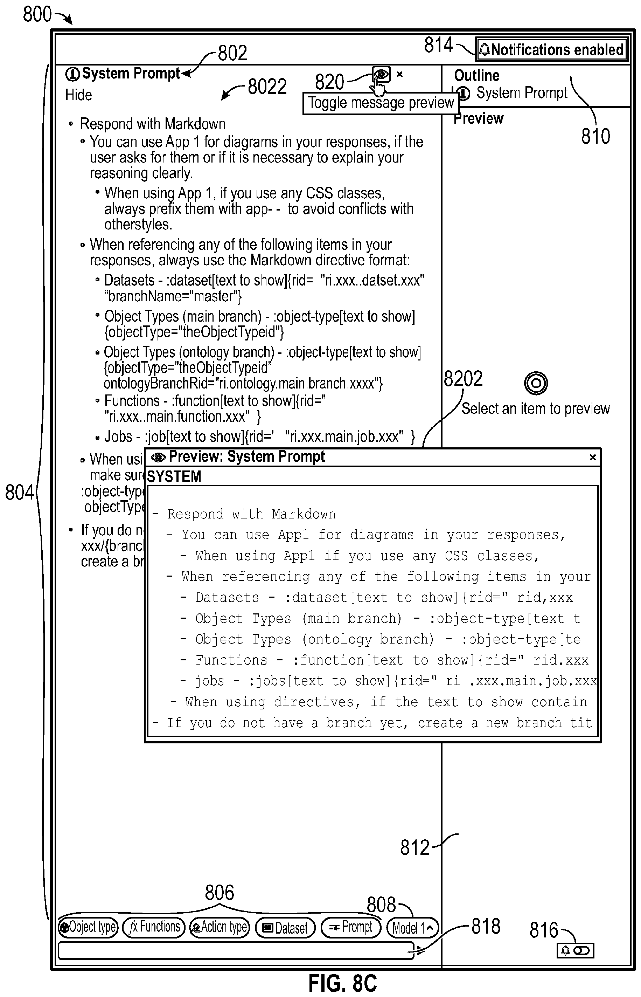

Moving to FIG. 8C, the GUI 800 can include a preview selector 820 associated with the graphical representation 802 of the system prompt. The preview selector 820 can receive user input. The preview selector 820, when selected via the user 150, can display a preview window 8202 that includes a graphical representation of the system prompt as actually provided to the agent and/or LLM. For example, the graphical representation displayed in the window 8202 can be indicative of the message or text (e.g., plain English) that is provided to the agent and/or the LLM. In various implementations, the graphical representation displayed in window 8202 may be representative of a text-based file format (e.g., XML, JSON, and/or the like) of the message or text provided to the agent and/or LLM. The preview window 8202 can receive user input and can be traversed by the user 150. For example, the window 8202 may be too small for the user 150 to visualize the entirety of the contents of the text file, and thus may include a scroll functionality (or other navigation functionality) to allow the user 150 to navigate to different portions of the text file to view different portions of the text file content. In this way, the GUI 800 can provide the user 150 with dual representations of the context items that are fed to the agent and/or LLM. This can include a first representation (e.g., as displayed in the context stream pane 804) that is human-friendly and readily understood by the user 150, and a second representation indicative of the actual text files provided to the agent and/or LLM (e.g., as displayed via the preview window 8202). In various implementations, preview windows may be generated for any of the context items displayed in the context stream pane 804.

Moving to example embodiment of FIG. 8D, the user 150 and/or agent system 102 (e.g., agent service 106) has provided additional context items to the agent and/or LLM. As depicted in FIG. 8D, three datasets and a corresponding code repository to support said datasets have been provided to the agent and/or LLM as context items. As such, the user interface module 104 can surface editable and/or non-editable representations 822 and 824 of the datasets and code repository, respectively, in the context stream pane 804. The outline pane 810 has also updated with graphical representations that are similar or identical to those provided in the context stream pane 804. The representations 822 and/or 824 can be associated with respective interactive content selectors that can comprise drop-down menus that include editable information relating to the datasets and/or code repository, respectively.

The user 150 may select content selectors associated with the representations 822 and/or 824 to view the contents (e.g., data items, properties, code, metadata, and/or the like) of said datasets and/or code repository, respectively. For example, upon selecting a selector associated with the representation 822 of the datasets, the context stream pane 804 may populate with editable and/or non-editable representations of the contents of the datasets. For example, the context stream pane 804 can display text phrases indicative of the dataset contents in a human-friendly format that can be readily understood by the user 150. The representation 822 of the dataset content can facilitate the user 150 to know the details of the datasets that have been fed to the agent and/or LLM. In various implementations, the user 150 can modify the contents of the datasets via interaction with the associated graphical representation displayed in the context stream pane 804. For example, the user 150 can delete, edit, update, add to, and/or remove at least a portion of the content of the datasets, such as one or more data items, resource identifiers, other properties, and/or the like. Accordingly, context stream pane 804 can facilitate the user 150 to ensure that the datasets include all content that may be required for processing by the agent and/or LLM. In response to user input to modify one or more datasets via the context stream pane 804, the agent system 102 (e.g., agent service 106) may automatically feed the modified dataset(s) to the agent and/or LLM.

As further illustrated in the example embodiment of FIG. 8D, the user 150 has selected a preview selector associated with the representation 822 of the datasets, in response to which the user interface module 104 has generated a preview window 8204 in the GUI 800 for visualization by the user 150. The preview window 8204 can include a graphical representation of the datasets and/or dataset content as actually provided to the agent and/or LLM. For example, the graphical representation displayed in the window 8204 can be indicative of the message or text (e.g., plain English) that is provided to the agent and/or the LLM. In various implementations, the graphical representation displayed in window 8204 may be representative of a text-based file format (e.g., XML, JSON, and/or the like) of the message or text provided to the agent and/or LLM. The preview window 8204 can receive user input and can be traversed by the user 150. For example, the window 8204 may be too small for the user 150 to visualize the entirety of the contents of the datasets, and thus may include a scroll functionality (or other navigation functionality) to allow the user 150 to navigate to different portions of the text file to view different portions of the text file content.

The example embodiment of FIG. 8E illustrates a configuration parameters menu 8082. As depicted in FIG. 8E, the user 150 has selected the configuration parameters selector 808, upon which the user interface module 104 has generated the menu 8082 for display in the GUI 800. The menu 8082 can include a model pane 8084. The model pane 8084 can include a model field 8086 that can receive user input. The model field 8086 can include a drop-down menu from which the user 150 can select any AI model (e.g., LLM) accessible by the agent system 102 (e.g., agent service 106) for use by the agent in performing one or more tasks. In the example embodiment of FIG. 8E, the user 150 has selected "Model 1" to be used by the agent. Additionally, the menu 8082 can include a tool pane 8088 include one or more tool fields. The tool fields can receive user input. Upon selection of a tool field by the user 150 (as indicated by a checked box), the associated tool may be available to the agent and/or LLM in the course of performing one or more tasks. Deselected and/or unselected tools (as indicated by an unchecked box) are not available to the agent and/or LLM in the course of performing one or more tasks. As illustrated in the example of FIG. 8E, non-limiting examples of tools accessible by the agent system 102 (e.g., agent service) 106 can include "Code Repository" tools, "Datasets" tools, "Functions" tools, "Global Branching" tools, "Local Branching" tools, and "Ontology" tools, among other tools described herein. In this way, the user 150 can steer the processing workflow of the agent and/or LLM to improve the accuracy (e.g., relevancy) of the agent and/or LLM outputs. For example, a user 150 may desire to disable the ability of an agent and/or LLM to write to an ontology when the agent is performing tasks associated with a user query to build datasets. This can reduce the risk of the agent and/or LLM making unwanted changes to a database (e.g., unwantedly committing new data items and/or datasets to a database), such as may result from a hallucination.

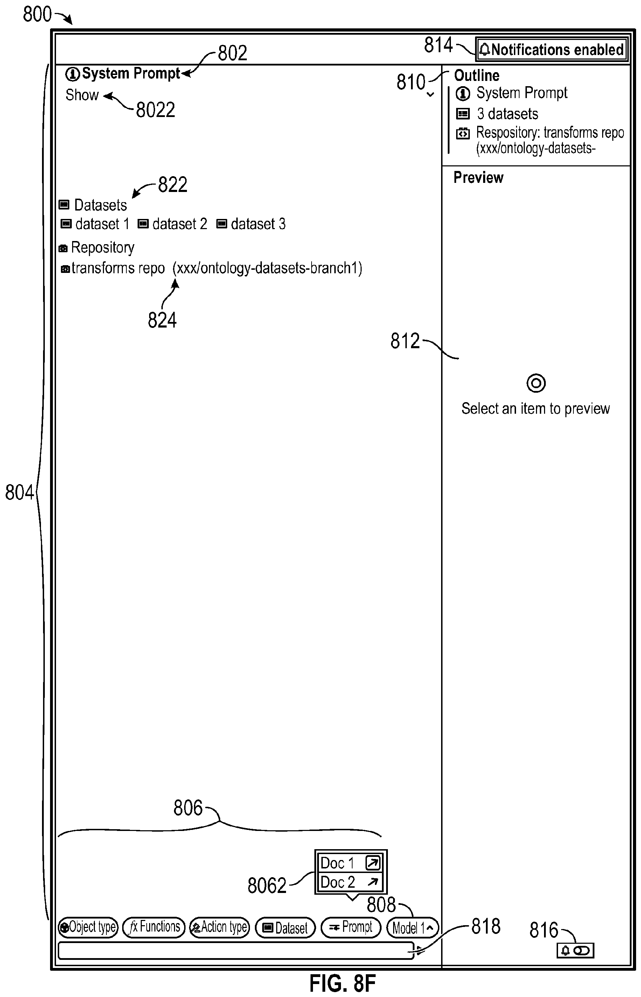

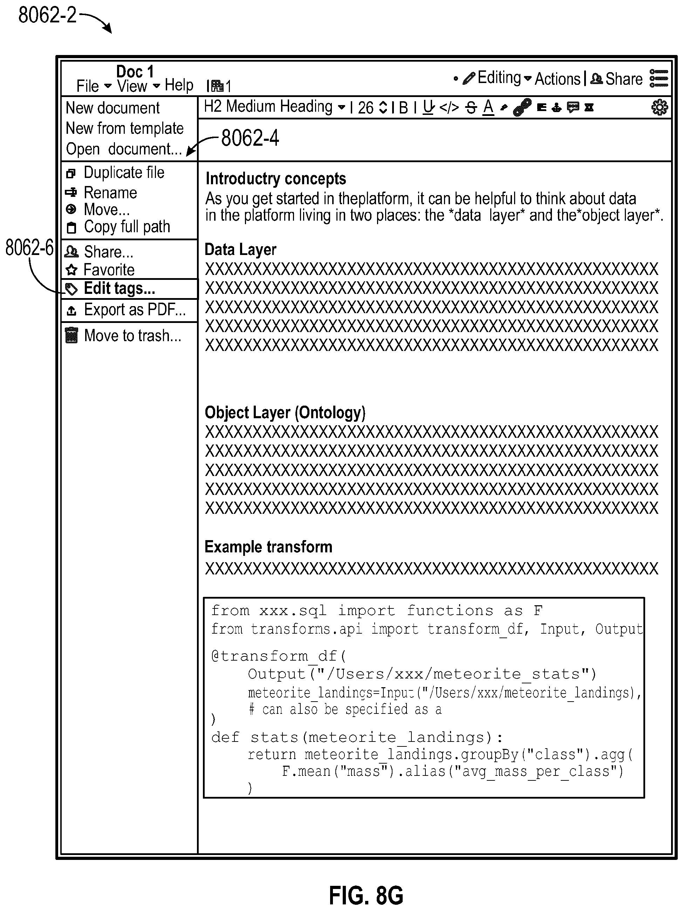

Moving to FIG. 8F, as illustrated, the user 150 has selected a context selector 806 corresponding to "Prompt." The prompt context selector 806 can include a menu 8062 (e.g., drop-down menu, pop-up menu, and/or the like), such as may be displayed in the GUI 800 in response to user selection of the prompt context selector 806. The menu 8062 can include one or more prompt fields that can receive user input. The prompt fields may be associated with saved prompts that can be fed to the agent and/or LLM to provide said agent and/or LLM with additional context and/or supplemental information in performing one or more tasks. Saved prompts can include, but are not limited to, pre-prepared prompts (e.g., created by a developer of the agent system 102), memory prompts, user-created prompts (e.g., created by the user 150), combinations thereof, and/or the like. The saved prompts can include electronic information, such as documentation and/or other useful information. Upon selection of a saved prompt via the menu 8062, the agent system 102 (e.g., the agent service 106) may automatically feed said prompt to the agent and/or LLM. For example, an agent (e.g., LLM-based agent) may feed the selected saved prompt to an LLM. As such, the context stream pane 804 and/or outline pane 810 can automatically populate with editable and/or non-editable representations of the saved prompt, which can permit the user 150 to view the contents of said prompt. In the example embodiment of FIG. 8F, the user 150 has selected to preview the saved prompt labeled "Doc 1," as further described with reference to FIGS. 8G-8H.

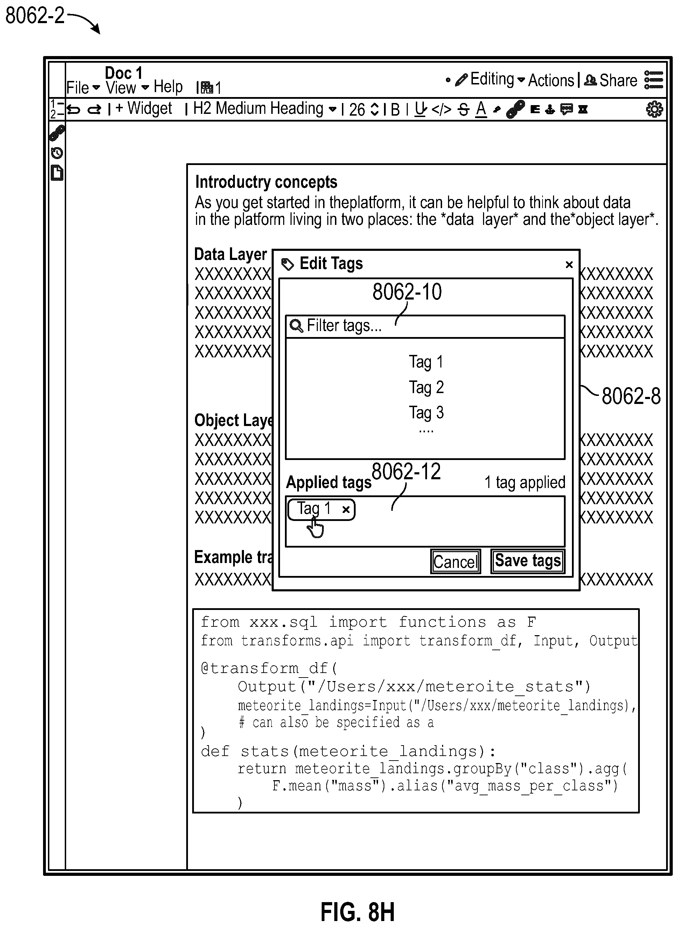

As depicted in FIG. 8G, in response to user selection to preview "Doc 1," the user interface module 104 can render the GUI 8062-2 to display the saved prompt "Doc 1." In various implementations, the GUI 8062-2 may be accessed only via GUI 800. As illustrated in the example embodiment of FIG. 8G, the saved prompt includes documentation relating to introductory concepts such as data layers, object layers, and example transforms, certain of which information may be utilized by the agent and/or LLM in the course of performing one or more tasks. Further illustrated, the GUI 8062-2 can include a drop-down menu 8062-4 having one or more fields that can receive user input. For example, the menu 8062-4 can include an edit tags field 8062-6 that can receive user input. Upon selection of the edit tags field by the user 150, the GUI 8062-2 may display the edit tags menu 8062-8, such as illustrated in the example embodiment of FIG. 8H.

The menu 8062-8 can include a filter tags field 8062-10 and an applied tags field 8062-12, each of which can receive user input. The filter tags field 8062-10 can include a drop-down menu comprising one or more tag fields selectable and/or deselectable by the user 150. A tag field may correspond to a tag that is to be applied to a saved prompt (e.g., to the documentation) to identify said prompt as useable by an agent and/or LLM in performing one or more tasks. In various implementations, different tags may be associated with different agent systems, agent services, agents, LLMs, and/or tasks to be performed by said systems and/or components thereof. Tags may be pre-prepared and made available to the agent system 102 (e.g., such as by developers of the agent system 102), and/or may be created (and saved) by the user 150. For example, a user 150 may create custom tags for various documentation. In various implementations, tags may be edited by the user 150.

Saved prompts labeled with appropriate tags (e.g., tags identifying the saved prompts for use by agents and/or LLMs) may be accessible by the agent system 102 (e.g., the agent service 106). In this way, graphical representations of the tagged prompts may automatically be surfaced in the GUI 800 (see FIG. 8F, for example). The graphical representation can indicate to the user 150 that the associated prompt is available to be provided to the agent and/or LLM. In some implementations, the prompt may be stored in memory associated with the agent system 102 (e.g., agent storage 118, database module 108, and/or data store 160), and/or may be stored in memory associated with another device or system (e.g., outside of the agent system 102) but accessible by the agent system 102.

The applied tags field 8062-12 can include one or more graphical representations of the tag(s) that have been applied to the prompt. The representations can be deselected by the user 150 so as to remove an applied tag from the prompt. In the example embodiment illustrated in FIG. 8H, the user 150 has applied "Tag 1" to the prompt "Doc 1."

Returning to the discussion of GUI 800, as further illustrated in the example embodiment of FIG. 8I, the context stream pane 804 and/or outline pane 810 can automatically populate with editable and/or non-editable representations of additional context items generated by the agent (and/or generated by an LLM utilized by the agent) as the agent performs one or more tasks and/or sub-tasks associated with user queries. For example, as the agent performs one or more tasks, the agent and/or LLM can utilize one or more tools, and/or execute one or more tool calls associated with said tools. For example, in various implementations, an agent may determine that one or more tools are required to perform one or more tasks associated with a user query. The resulting agent output(s) and/or LLM output(s) can include one or more tool calls for executing the respective tools, which may be fed back to the agent, the LLM, another agent, and/or another LLM to execute the tool call. In this way, the agent output(s) and/or LLM output(s), including the tools calls, may be provided as additional context items useable by the agent system 102 (e.g., agent service 106) for fulfilling requests by the user 150. In various implementations, the outputs resulting from a tool call (e.g., a new dataset) may be provided to the agent, the LLM, another agent, and/or another LLM as additional context items useable by the agent system 102 in fulling requests by the user 150.

As depicted in the example embodiment of FIG. 8I, the user 150 has provided the user query "Create a proposal," via the user query field 818. In response, the agent system 102 (e.g., agent service 106) has generated a prompt including the user query, which has been provided to an agent. The agent has provided an intermediate output stating that the agent will create the proposal. Subsequently, the agent determines that the tool labeled "get_or_create_global_branch_proposal" is required to perform one or more tasks associated with creating the proposal. The agent executes the tool call associated with the tool to generate another agent output, which is the proposal. The context stream pane 804 and/or outline pane 810 can dynamically populate with editable and/or non-editable representations of the above-mentioned steps performed by the agent. For example, as illustrated in FIG. 8I, the context stream pane 804 populates, sequentially, with a representation 826a of the first user query, a representation 828a of the agent's initial response, a representation 830a of the first tool call (e.g., associated with "get_or_create_global_branch_proposal"), and a representation 832a of the generated agent output (e.g., the generated proposal). The sequence of presentation of the representations in the context stream pane 804 can mirror the sequence in which context items are provided to the agent and/or LLM. In various implementations, this order may follow the order in which various steps in the agent processing workflow are performed. Additionally, representations associated with the above context items may be displayed in the outline pane 810. The representations presented in the outline pane can be similar or identical to those presented in the context stream pane 804. Additionally, the sequence in which representations are presented in the outline pane 810 can mirror the sequence of the corresponding representations in the context stream pane 804.

As noted above, the editable and/or non-editable representations 826a, 828a, 830a, and/or 832a can be presented in a human-friendly format to facilitate the user 150 to readily understand what context items are being provided to the agent and/or LLM, when said context items are being fed to the agent and/or LLM, and/or in what order. Additionally, the graphical representations 826a, 828a, 830a, and/or 832a can be associated with respective content selectors. The content selectors can include drop-down menus displaying editable information relating to the respective context items. Upon selection by the user 150 of a content selector, the context stream pane 804 can provide editable and/or non-editable representations (e.g., text phrases) of the content of the respective context items. These representations can facilitate the user 150 to know the details of the context items that have been fed to the agent and/or LLM. In various implementations, the user 150 can modify the contents of the context items (e.g., the first user query, the first initial agent response, the first tool call, and/or the proposal) via interaction with the associated graphical representation displayed in the context stream pane 804. For example, the user 150 can delete, edit, update, add to, and/or remove at least a portion of the content of the respective context items. Responsive to user input to modify the context items via the context stream pane 804, the agent system 102 (e.g., agent service 106) may automatically feed the modified context items to the agent and/or LLM.

Further illustrated in the example embodiment of FIG. 8I, the user 150 has provided the user query "Create the objects," via the user query field 818. In response, the agent system 102 (e.g., agent service 106) has generated a prompt including the user query, which has been provided to an agent. The agent has provided an intermediate output stating that the agent will create the data objects. Subsequently, the agent determines that the tool labeled "create_object_type" is required to perform one or more tasks associated with creating the data objects. The agent executes the tool call associated with the tool to generate another agent output, which is the new object type. The context stream pane 804 and/or outline pane 810 can dynamically populate with editable and/or non-editable representations of the above-mentioned steps performed by the agent. For example, as illustrated in FIG. 8I, the context stream pane 804 populates, sequentially, with a representation 826b of the second user query, a representation 828b of the agent's initial response, a representation 830b of the second tool call (e.g., associated with "create_object_type"), and a representation 832b of the generated agent output (e.g., the object type). The sequence of presentation of the representations in the context stream pane 804 can mirror the sequence in which context items are provided to the agent and/or LLM. In various implementations, this order may follow the order in which various steps in the agent processing workflow are performed. Additionally, representations associated with the above context items may be displayed in the outline pane 810. The representations presented in the outline pane can be similar or identical to those presented in the context stream pane 804. Additionally, the sequence in which representations are presented in the outline pane 810 can mirror the sequence of the corresponding representations in the context stream pane 804.

As noted above, the editable and/or non-editable representations 826b, 828b, 830b, and/or 832b can be presented in a human-friendly format to facilitate the user 150 to readily understand what context items are being provided to the agent and/or LLM, when said context items are being fed to the agent and/or LLM, and/or in what order. Additionally, the graphical representations 826b, 828b, 830b, and/or 832b can be associated with respective content selectors. The content selectors can include drop-down menus displaying editable information relating to the respective context items. Upon selection by the user 150 of a content selector, the context stream pane 804 can provide editable and/or non-editable representations (e.g., text phrases) of the content of the respective context items. These representations can facilitate the user 150 to know the details of the context items that have been fed to the agent and/or LLM. In various implementations, the user 150 can modify the contents of the context items (e.g., the second user query, the second initial agent response, the second tool call, and/or the object type) via interaction with the associated graphical representation displayed in the context stream pane 804. For example, the user 150 can delete, edit, update, add to, and/or remove at least a portion of the content of the respective context items. Responsive to user input to modify the context items via the context stream pane 804, the agent system 102 (e.g., agent service 106) may automatically feed the modified context items to the agent and/or LLM.

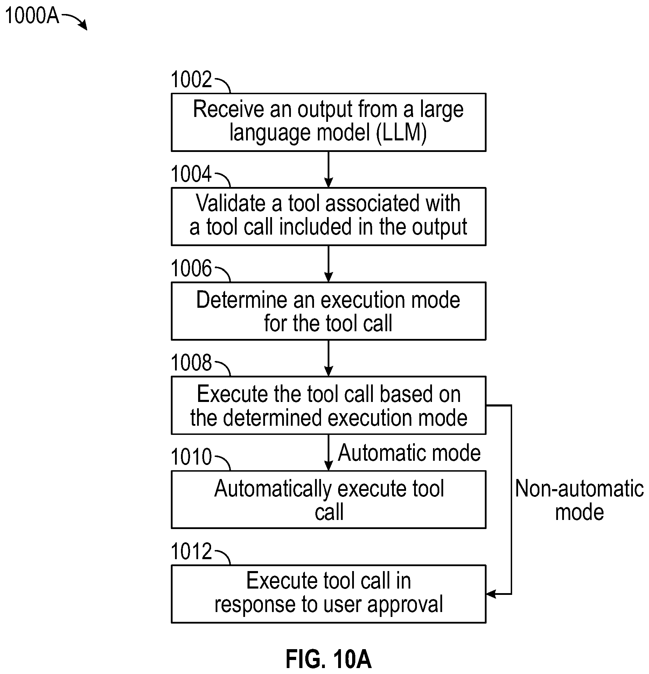

In the example embodiment of FIG. 8I, the user has selected the content selector associated with the graphical representation 830b of the second tool call. Consequently, the context stream pane 804 can provide an editable and/or non-editable representation 834 of the content of the second tool call. In the example embodiment of FIG. 8I, the context stream pane 804 displays text phrases indicative of the tool call contents in a human-friendly format that can be readily understood by the user 150. The representation 834 of the tool call content can facilitate the user 150 to know the details of the tool call that have been fed to the agent and/or LLM. For example, the representation 834 can be indicative of various tool information, such as tool definitions and/or tool parameters. As described hereinabove, tool definitions can describe the function of the tool and how it is to be executed, among other things. This may include the inputs (e.g., datasets) required to execute the tool call. Tool parameters (e.g., settings) can define how the tool behaves. For example, in various implementations, tool parameters can include tool parameter values indicative of various settings, such as whether a tool is auto-approved to be executed by an agent and/or LLM or requires user approval prior to execution. Approval for executing a tool may be defined on a per-tool basis such that different tools are associated with different approval types (e.g., automatic approval, user-required approval, and/or the like). In this way, approvals for tools that are useable by the agent system 102 may be user-configured. For example, the user 150 may define which tools require user-approval to execute a related tool call, and which tools may be automatically executed. Validation and execution of tools and tool calls are further described with reference to FIGS. 10A-10C.

In various implementations, the user 150 can modify the contents of the system prompt via interaction with the associated graphical representation 834 displayed in the context stream pane 804. For example, the user 150 can delete, edit, update, add to, and/or remove at least a portion of the content of the tool call. Accordingly, context stream pane 804 can facilitate the user 150 to ensure that the tool definition includes all tool inputs that may be required for executing the tool by the agent and/or LLM, and/or that tool parameters are correctly set. Responsive to user input to modify the tool call via the context stream pane 804, the agent system 102 (e.g., agent service 106) may automatically feed the modified tool call to the agent and/or LLM.

Further depicted in the example of FIG. 8I, the user query field 818 can include a toggle 8182. The toggle 8182 can receive user input. The toggle 8182 can facilitate a user 150 to pause, interrupt, or stop execution of a task such that the user 150 can intervene in the task execution pipeline of an agent and/or LLM. In this way, if the user 150 identifies that the agent and/or LLM is committing errors in performing a task, the user 150 can intervene in the task execution pipeline of the agent and/or LLM to provide additional context, modify previously provided context, and/or remove context to steer the agent and/or LLM toward a desired (e.g., accurate) output. In various implementations, upon selecting the toggle 8182 after having paused, interrupted, or stopped a task execution, the agent and/or LLM may resume execution of its task pipeline or initiate a new task (e.g., a new task pipeline).

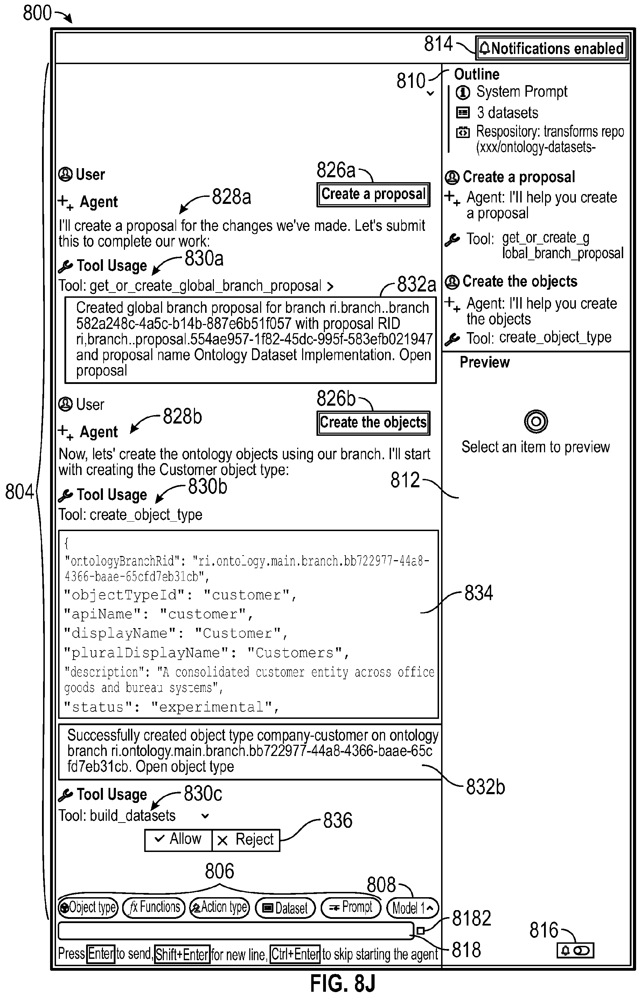

Moving to FIG. 8J, the example embodiment of GUI 800 further illustrates a third tool call. For example, the agent has determined that the tool labeled "build_datasets" is required to perform one or more tasks associated with creating the data objects. As depicted in FIG. 8J, an editable or non-editable representation 830c of the third tool call is surfaced in the context stream pane 804. However, based on analysis of tool parameters (e.g., tool parameter values) associated with the tool to be called, the agent has determined that user authorization is required to execute the tool call. As such, the agent system 102 (e.g., agent service 106) determines that a notification condition is satisfied, and the user interface module 104 generates user interface data to render a notification 836 in the GUI 800. In various implementations, notifications associated with context items may be displayed in the context stream pane 804, such as in proximity to the representation associated with the context item that triggered said notification. As depicted in FIG. 8J, the notification 836 prompts the user 150 for user input (e.g., to select "allow" or "reject") to either permit the agent and/or LLM to execute the tool call or to prohibit the agent and/or LLM from executing the tool call.

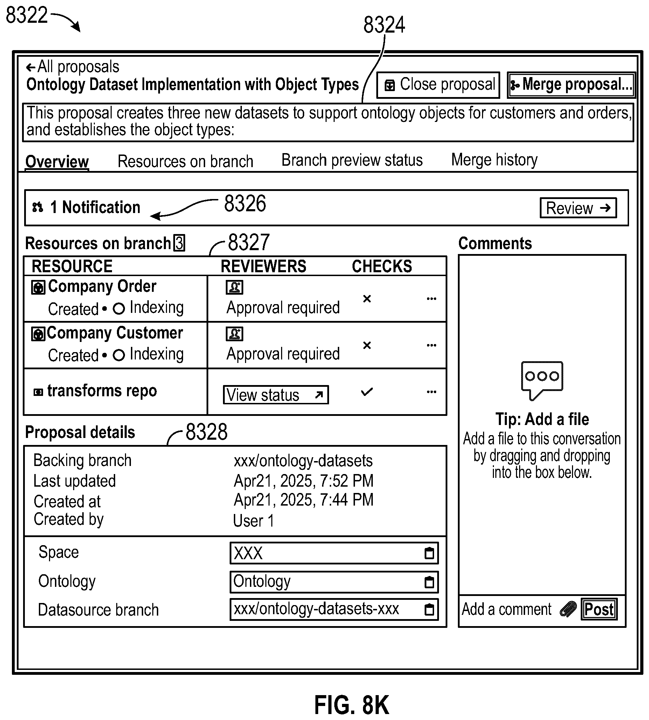

In various implementations, graphical representations associated with agent outputs and/or LLM outputs (e.g., representations 832a and/or 832b) can include interactive links that permit the user 150 to view, for example, documentation associated with the outputs. For example, as illustrated in FIG. 8K, a user 150 has selected the link "View proposal" in the graphical representation 832a to view documentation relating to the generated proposal. The generated documentation for the proposal is provided in the GUI 8322. In some implementations, the GUI 8322 can be accessed only via the GUI 800. In the example embodiment of FIG. 8J, the GUI 8322 can include a documentation description field 8324, a notification field 8326, a resources pane 8327, and a details pane 8328.

The documentation description field 8324 can provide a description of the proposal. In the example embodiment of FIG. 8K, the documentation description field 8324 includes text phrases indicating that the proposal relates to creating new datasets to support new ontology data objects. In some implementations, the documentation description field 8324 can receive user input. For example, the user 150 can modify at least a portion of the description included in the documentation description field 8324. In various implementations, in response to user modification of the documentation description, the agent system 102 (e.g., agent service 106) may automatically provide the modified documentation to the agent and/or LLM.

The notification field 8326 can include graphical representations of notifications (and/or a number of notifications) that were generated during the course of performing one or more tasks to produce the agent and/or LLM output (e.g., in producing the proposal). The notification field 8326 may receive user input. For example, the user 150 may select the graphical icon labeled "Review" to view details regarding the notifications (e.g., what triggered the notification, when the notification was triggered, and/or the like).

The resources pane 8327 can include information indicative of the resources used and/or created in the course of performing one or more tasks to produce an agent and/or LLM output. In the example of FIG. 8K, the resources pane 8327 includes graphical representations (e.g., icons and text phrases) indicative of the datasets created (or currently being created or to be created) to support the new ontology data objects, as well as the code repository to support said datasets. In various implementations, the resources pane 8327 can receive user input. For example, the user 150 may interact with graphical representations included in the resources pane 8327, such as to approve the execution of tool calls required to generate said resources.

The details pane 8328 can include information related to where the tasks are being completed (e.g., which processing workflow(s)), when the task(s) were initiated and/or completed, who requested performance of the task(s), the computing environment, system, and/or software application used to perform the tasks, and/or the ontology (or other database) being used and/or created. In the example embodiment of FIG. 8K, the details pane 8328 includes text phrases representative of the processing workflow(s) responsive for generating the ontology datasets, when the datasets were created and/or updated, who requested creation of the datasets, the computing environment, system, and/or software application used to create the datasets, and/or the ontology used and/or created in associated with creating the datasets.

It is to be noted that GUIs shown and/or described herein are exemplary and are not intended to limit the present disclosure. In various implementations, the GUIs 400, 500, 600A, 600B, 800, 8062-2, and/or 8322 may include additional features, aspects, components, and/or functionality.

### Example Processes Relating to One or More Agents Performing One or More Tasks, Related User Interfaces, and Associated Functionality

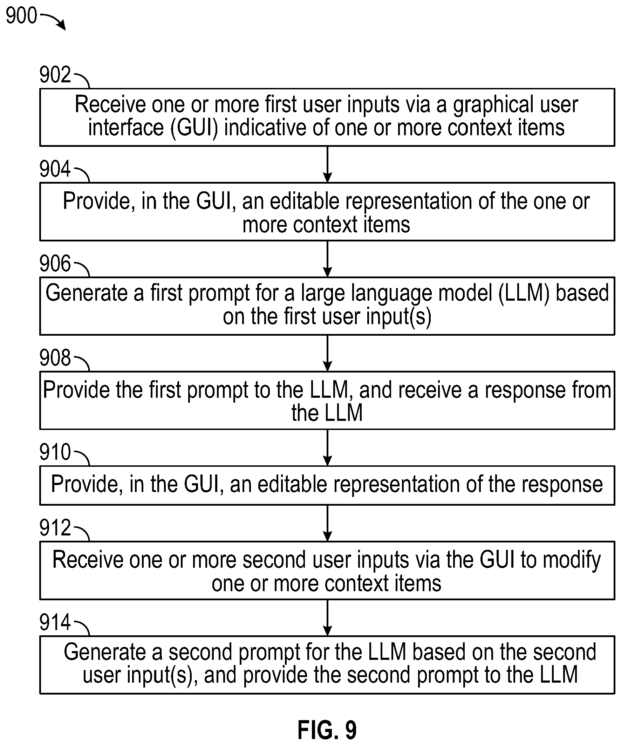

FIG. 9 is a flow diagram illustrating an example process 900 relating to computer-based agent context editing. The process 900, or portions thereof, can be implemented by a computing device such as a hardware processor. The process 900, or portions thereof, can be executed by one or more hardware processors, whether they are associated with a singular or multiple computing devices like user device 150, agent system 102, and/or devices in remote or wireless communication. The implementation may vary. For example, the process may be controlled by processors related to a system, such as system 102, or can involve modifications like omitting blocks, adding blocks, rearranging the order of execution of the blocks, combining blocks, and/or separating blocks into additional blocks. The process 900 serves as an example and is not intended to restrict the present disclosure. In various implementations, one or more portions of example process 900 may or may not be performed in the ordinary course of modifying context. In various implementations, the process 900, or portions thereof, can be performed by a computing device associated with the system 102, such as the user interface module 104, agent service 106, database module 108, context module 110, prompt generation module 112, and/or one or more components thereof as described herein.

Beginning at block 902, the system (e.g., agent system 102) receives one or more first user inputs via a graphical user interface (GUI). For example, an agent may receive a request from a user 150 to handle a task. The user input(s) can indicate or define one or more context items, such as described herein, to be fed to an agent and/or LLM. For example, the context item(s) can include any of a task to be completed by an agent and/or LLM, one or more datasets available to the system, one or more tools available to the system and accessible by the system in response to a tool call from an agent and/or LLM, other context, and/or other useful information (e.g., accessories). In various implementations, the context items may be associated with editable or non-editable graphical representations (see FIGS. 8A-8K, for example). An editable representation may be interacted with by a user, such as to delete the representation, to update at least a portion of the representation, to add to at least a portion of the representation, and/or to remove at least a portion of the representation.

At block 904, the system (e.g., via user interface module 104) provides, in the GUI, editable representations of the one or more context items. For example, the system can generate user interface data associated with the context item(s) indicated in the user input, and render said user interface data in the GUI.

At block 906, the system generates a first prompt for an agent and/or an LLM. For example, an agent can generate the first prompt based on at least the first user input(s). In various implementations, the agent may use a prompt generator (e.g., prompt generation module 112) to generate the first prompt. The first prompt can include indications of the context item(s), and optionally, other context and/or useful information.

At block 908, the system provides the first prompt to an agent and/or LLM. For example, the agent can feed the first prompt to an LLM. In various implementations, at block 908, the system can receive a response from the LLM and/or agent, such as may be generated in response to the first prompt. For example, the agent can receive the response from the LLM.

At block 910, the system provides an editable representation of the response provided by the LLM and/or by the agent. In various implementations, the response can include at least one additional context item. The at least one context item may not have been provided by the user 150. For example, during the course of performing a task included in the prompt, the agent and/or LLM may determine that one or more tools are required to fulfill the request(s) of the user. Accordingly, the LLM output and/or agent output can include indications of one or more tool calls, which may be provided to the agent and/or the LLM as additional context items. In some examples, intermediate and/or final LLM outputs and/or agent outputs may be provided as additional context item. This can include, but is not limited to, output data items, output datasets, documentation, additional prompts, other electronic information, and/or the like such as described herein.

At block 912, the system receives one or more second inputs via the GUI. The second user input(s) may be indicative of modification(s) to the one or more context items. For example, a user may interact with an editable representation associated with a context item, and displayed in the GUI, to modify the underlying context item. In response, an agent may modify the one or more context items. The agent may be configured to receive a request to perform a task associated with modifying the one or more context items. In some implementations, a first agent may handoff the context modification task to a second agent or a child agent that has been configured, trained, and/or tested to modify context items, such as described hereinabove. The first agent, second agent, or child agent may modify the context item(s) as indicated via the user interaction with the associated editable representation(s).

In various implementations, user interaction with the editable representations may cause the system (e.g., one or more agents) to automatically (e.g., without additional user interaction) to modify the underlying context items. In some implementations, user interaction with the editable representations can retroactively modify context items fed to an agent and/or LLM. For example, an agent may modify one or more context items previously fed to an LLM. In this way, the agent can modify the conversation history of the LLM, such that one or more portions of the conversation history are different or no longer exist. For example, a portion of the LLM history that existed at a time T1 prior to modification of context may later be modified at a time T2 such that the portion of LLM history is different at time T2 or no longer exists as time T2. In some implementations, retroactive modification of context items can alter the state that is passed into the LLM, such as for subsequent calls of the LLM by the agent.

At block 914, the system generates a second prompt for an agent and/or an LLM. For example, an agent can generate the prompt based on at least the second user input(s) and/or the first user input(s). In various implementations, the agent may use a prompt generator to generate the second prompt. The second prompt can include indications of the modified context item(s), and optionally, other context and/or useful information. In various implementations, at block 914, the system provides the second prompt to an agent and/or LLM. For example, the agent can feed the second prompt to the LLM.

FIG. 10A is a flow diagram illustrating an example process 1000A relating to computer-based agent tool validation and approval. The process 1000A, or portions thereof, can be implemented by a computing device such as a hardware processor. The process 1000A, or portions thereof, can be executed by one or more hardware processors, whether they are associated with a singular or multiple computing devices like user device 150, agent system 102, and/or devices in remote or wireless communication. The implementation may vary. For example, the process may be controlled by processors related to a system, such as system 102, or can involve modifications like omitting blocks, adding blocks, rearranging the order of execution of the blocks, combining blocks, and/or separating blocks into additional blocks. The process 1000A serves as an example and is not intended to restrict the present disclosure. In various implementations, one or more portions of example process 1000A may or may not be performed in the ordinary course of validating tools and/or executing tool calls. In various implementations, the process 1000A, or portions thereof, can be performed by a computing device associated with the system 102, such as the user interface module 104, agent service 106, database module 108, context module 110, prompt generation module 112, and/or one or more components thereof as described herein.

In various implementations, the process 1000A, or portions thereof, may be performed as a background process or subprocess. For example, the system may perform one or more portions of process 1000A while performing one or more portions of process 900. In some examples, the system may perform one or more portions of process 1000A while performing one or more portions of process 1100 (see FIG. 11, for example). In various implementations, the process 1000A, or portions thereof, may be performed independently of other processes, such as independently of process 900 and/or process 1100.

Beginning at block 1002, a system (e.g., agent system 102) receives an output from an LLM and/or an agent. For example, an agent can receive an output from an LLM. The output may be responsive to a prompt that includes context, such as one or more context items. In various implementations, the output can include indications of one or more tool calls, such as may be associated with one or more tools accessible by the system in response to the tool call(s). As described hereinabove, tools can include tool definitions, which may themselves include tool parameters. Tool definitions can describe the function of the tool and how the tool is to be executed, among other things. This may include the inputs (e.g., datasets) required to execute the tool call. Tool parameters (e.g., settings) can define how the tool behaves. For example, in various implementations, tool parameters can include tool parameter values indicative of various settings, such as whether a tool is auto-approved to be executed by an agent and/or LLM or requires user approval prior to execution.

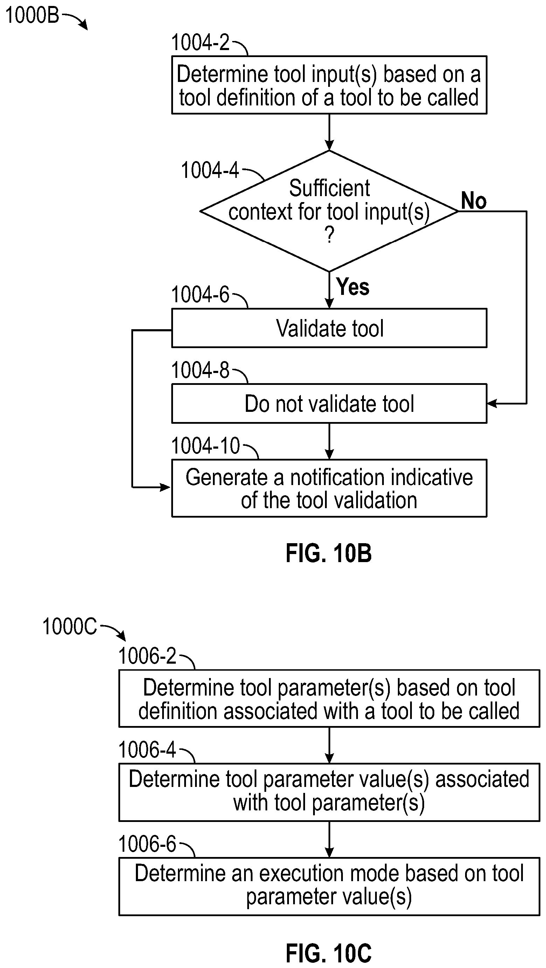

At block 1004, the system validates one or more tool calls indicated in the output from the agent and/or LLM. For example, the agent can validate tool call(s) included in the LLM output. As further described herein (see FIG. 10B, for example), the agent can validate a tool call based at least on the tool definition of said tool and/or the context provided to the agent and/or to the LLM.

At block 1006, the system determines an execution mode of a tool call indicated in the agent output and/or LLM output. Execution modes can include an automatic execution mode (e.g., an agent and/or LLM automatically, and without additional user interaction, executes a tool call) and a non-automatic execution mode (e.g., an agent and/or LLM requires user approval for executing a tool call prior to executing said tool call). As further described herein (see FIG. 10C, for example), the agent can determine the execution mode based at least on the tool definition and/or the context provided to the agent and/or LLM.

At block 1008, the system executes the tool call based on the determined execution mode. For example, the agent and/or LLM can execute the tool call based on the determined execution mode.

At block 1010, in various implementations, in response to a determination that the execution mode is the automatic execution mode, the system automatically (e.g., without additional user interaction) executes the tool call. For example, the agent and/or LLM can automatically execute the tool call. The agent and/or LLM can execute an executable associated with the tool (e.g., executable code, program instructions, and/or the like) to execute the tool call.

At block 1012, alternatively, in various implementations, in response to a determination that the execution mode is the non-automatic execution mode, the system may request that the user approve execution of the tool call. For example, the agent can generate a notification requesting user approval for the tool call. The user can interact with the notification to either approve or reject the tool call. In response to receiving user approval, the agent may execute the tool call. In some implementations, in response to receiving user rejection, the agent may not perform the tool call.

FIG. 10B is a flow diagram illustrating an example process 1000B relating to computer-based agent tool validation and approval. The process 1000B, or portions thereof, can be implemented by a computing device such as a hardware processor. The process 1000B, or portions thereof, can be executed by one or more hardware processors, whether they are associated with a singular or multiple computing devices like user device 150, agent system 102, and/or devices in remote or wireless communication. The implementation may vary. For example, the process may be controlled by processors related to a system, such as system 102, or can involve modifications like omitting blocks, adding blocks, rearranging the order of execution of the blocks, combining blocks, and/or separating blocks into additional blocks. The process 1000B serves as an example and is not intended to restrict the present disclosure. In various implementations, one or more portions of example process 1000B may or may not be performed in the ordinary course of validating tools and/or executing tool calls. In various implementations, the process 1000B, or portions thereof, can be performed by a computing device associated with the system 102, such as the user interface module 104, agent service 106, database module 108, context module 110, prompt generation module 112, and/or one or more components thereof as described herein.

In various implementations, the process 1000B, or portions thereof, may be performed as a background process or subprocess. For example, the system may perform one or more portions of process 1000B while performing one or more portions of process 1000A. In some examples, the system may perform one or more portions of process 1000B while performing one or more portions of process 1000C (see FIG. 10C, for example). In some examples, the system may perform one or more portions of process 1000B while performing one or more portions of process 900. In some examples, the system may perform one or more portions of process 1000B while performing one or more portions of process 1100 (see FIG. 11, for example). In various implementations, the process 1000B, or portions thereof, may be performed independently of other processes, such as independently of process 900 and/or process 1100.

Beginning at block 1004-2, a system (e.g., agent system 102) determines tool inputs based on the tool definition of a tool to be called, such as by an agent and/or LLM. For example, as describe hereinabove, the tool definition can include indications of one or more tools inputs that may be required to execute the tool. These can include indications of datasets, resource identifiers, ontologies, object types, APIs, code repositories, functions, and/or other inputs, as non-limiting examples. An agent may parse the tool definition of the tool to identify the various inputs required to call the tool.

At block 1004-4, the system determines whether the context available to the system supports the inputs required to execute the tool call. For example, an agent may analyze the context items previously fed to the agent and/or LLM, the context items indicated in the LLM output, and/or the context items generally available to the system to determine whether there is sufficient context to use when executing the tool call. In various implementations, the agent can determine whether various datasets, resource identifiers, ontologies, object types, APIs, code repositions, functions, and/or other context is accessible by the system for executing the tool call.

At block 1004-6, in response to a determination that there is sufficient context to support the tool call, the system validates the tool. For example, if the agent determines that all tool inputs indicated in a tool definition are supported by available or accessible context, the agent may validate the tool. When a tool is validated, the agent proceeds to determine the execution mode (e.g., auto-approval, user-required approval, and/or the like) for executing the tool call (see FIG. 10A, for example). In various implementations, when a tool is validated, the agent may be permitted to execute the associated tool call (conditioned on the agent having the appropriate approval for executing the tool call).

At block 1004-8, in response to a determination that there is insufficient context to support the tool call, the system does not validate the tool. For example, if the agent determines that one or more tool inputs indicated in a tool definition are not supported by available or accessible context (e.g., a tool input requires a dataset that is not presently available to or accessibly by the system), the agent may not validate the tool. When a tool is not validated, the agent rejects execution of the associated tool call. In various implementations, when a tool is not validated, the agent may be prohibited from executing (or otherwise made unable to execute) the associated tool call (regardless of the agent having the necessary approval for tool call execution). The agent may be prohibited from executing a tool call until the associated tool is validated, such as until the agent obtains necessary context information for executing the tool call. In various implementations, if the agent obtains the needed context information and re-validates the tool (e.g., determines that the tool is now validated), and/or the user overrides the non-validation, the agent may be permitted to execute the associated tool call (provided the agent has the necessary approval for the tool call execution).

In various implementations, the process 1000B may optionally proceed to block 1004-10. At block 1004-10, the system may generate a notification indicative of the validation or lack thereof for a tool. For example, in various implementations, in response to validating a tool, the agent may generate a notification indicative of the tool having been validated. The notification may be provided in a graphical user interface (GUI) for visualization by a user such that the user may be made aware of the tool validation.

In various implementations, in response to not validating the tool, the agent may generate a notification indicating that the tool was not validated. The notification may be provided in a GUI for visualization by a user such that the user may be made aware that the tool was not validated. The notification can indicate a request by, for example, the agent for the user to provide additional context that may be required to execute the tool call associated with the tool. In some examples, the notification can indicate a warning relating to incorrect tool usage.

FIG. 10C is a flow diagram illustrating an example process 1000C relating to computer-based agent tool validation and approval. The process 1000C, or portions thereof, can be implemented by a computing device such as a hardware processor. The process 1000C, or portions thereof, can be executed by one or more hardware processors, whether they are associated with a singular or multiple computing devices like user device 150, agent system 102, and/or devices in remote or wireless communication. The implementation may vary. For example, the process may be controlled by processors related to a system, such as system 102, or can involve modifications like omitting blocks, adding blocks, rearranging the order of execution of the blocks, combining blocks, and/or separating blocks into additional blocks. The process 1000C serves as an example and is not intended to restrict the present disclosure. In various implementations, one or more portions of example process 1000C may or may not be performed in the ordinary course of validating tools and/or executing tool calls. In various implementations, the process 1000C, or portions thereof, can be performed by a computing device associated with the system 102, such as the user interface module 104, agent service 106, database module 108, context module 110, prompt generation module 112, and/or one or more components thereof as described herein.

In various implementations, the process 1000C, or portions thereof, may be performed as a background process or subprocess. For example, the system may perform one or more portions of process 1000C while performing one or more portions of process 1000A. In some examples, the system may perform one or more portions of process 1000C while performing one or more portions of process 1000B. In some examples, the system may perform one or more portions of process 1000C while performing one or more portions of process 900. In some examples, the system may perform one or more portions of process 1000C while performing one or more portions of process 1100 (see FIG. 11, for example). In various implementations, the process 1000C, or portions thereof, may be performed independently of other processes, such as independently of process 900 and/or process 1100.

Beginning at block 1006-2, a system (e.g., agent system 102) determines one or more tool parameters based on a tool definition of a tool to be called (e.g., a tool accessible by the system in response to a tool call). For example, the tool definition can include indications of one or more tool parameters (e.g., settings), as described hereinabove. An agent may parse the tool definition to identify the one or more tool parameters. The tool and/or related tool information (e.g., the tool parameters) can be included as a context item that is fed to the agent and/or LLM, and/or that is indicated in an agent output and/or LLM output.

At block 1006-4, the system determines one or more tool parameter values associated with one or more tool parameters. For example, each tool parameter may be assigned a value indicative of the tool parameter. In various implementations, tool parameter values can be associated with an execution mode. For example, certain of tool parameter values may be indicative of the tool being configured for automatic execution. In some examples, certain of tool parameter values may be indicative of the tool being configured for non-automatic execution.

In various implementations, when configuring tools, a user may select which tool parameters to apply and/or not apply to a tool. For example, when configuring a tool, a user may select to apply a tool parameter that permits the tool to be automatically executed when called by an agent and/or LLM. In some examples, when configuring a tool, a user may select to apply a tool parameter that requires user approval before an agent and/or LLM can execute a tool call associated with the tool.

At block 1006-6, the system determines the execution mode based on the one or more tool parameters values. For example, an agent may parse the tool parameters included in the tool definition to identify one or more tool parameter values. The agent may analyze the values to determine the associated tool parameter. In various implementations, in response to analysis of the tool parameter value(s), the agent may determine that the tool is configured for automatic execution. In various implementations, in response to analysis of the tool parameter value(s), the agent may determine that the tool is configured for non-automatic execution.

FIG. 11 is a flow diagram illustrating an example process 1100 relating to computer-based agent task management. The process 1100, or portions thereof, can be implemented by a computing device such as a hardware processor. The process 1100, or portions thereof, can be executed by one or more hardware processors, whether they are associated with a singular or multiple computing devices like user device 150, agent system 102, and/or devices in remote or wireless communication. The implementation may vary. For example, the process may be controlled by processors related to a system, such as system 102, or can involve modifications like omitting blocks, adding blocks, rearranging the order of execution of the blocks, combining blocks, and/or separating blocks into additional blocks. The process 1100 serves as an example and is not intended to restrict the present disclosure. In various implementations, one or more portions of example process 1100 may or may not be performed in the ordinary course of validating tools and/or executing tool calls. In various implementations, the process 1100, or portions thereof, can be performed by a computing device associated with the system 102, such as the user interface module 104, agent service 106, database module 108, context module 110, prompt generation module 112, and/or one or more components thereof as described herein.

In various implementations, the process 1100, or portions thereof, may be performed as a background process or subprocess. For example, the system may perform one or more portions of process 1100 while performing one or more portions of process 1000A. In some examples, the system may perform one or more portions of process 1100 while performing one or more portions of process 1000B. In some examples, the system may perform one or more portions of process 1100 while performing one or more portions of process 1000C. In some examples, the system may perform one or more portions of process 1100 while performing one or more portions of process 900. In various implementations, the process 1100, or portions thereof, may be performed independently of other processes, such as independently of process 900 and/or processes 1000A-1000C.

Beginning at block 1102, a system (e.g., agent system 102) receives an output from an LLM and/or an agent. For example, an agent can receive an output from an LLM. The output may be responsive to a prompt that includes context, such as one or more context items. In various implementations, the prompt can include a task to be completed, such as a request by a user.

At block 1104, the system determines a notification condition based on the output. For example, the agent may parse the LLM output to determine whether a notification condition is satisfied. Notification conditions may be associated with agent task milestones and/or LLM task milestones. A "milestone" in task execution may refer to a designated checkpoint representing a logical or functional completion of a task, sub-task, or phase of processing. A milestone may represent a significant intermediate or final state in an agent's or LLM's task execution pipeline. In various implementations, notification conditions can be associated with deterministic triggers (e.g., a specific condition is satisfied), validation opportunities (e.g., human-in-the-loop), and/or decision gateways (e.g., branching logic, such as to continue, modify, or rollback).

Upon reaching a milestone, the system (e.g., an agent and/or LLM) may pause to await user input, validation, or approval before initiating subsequent operations. This can help ensure output accuracy, alignment with user goals, and/or compliance with compute resource constraints.

Nonlimiting examples of notification conditions can include generation of document summarization (e.g., initial summary draft generated), code generation (e.g., verify logic structure before implementation), legal contract review (review extracted clauses for legal accuracy), workflow automation (e.g., review of builds, dependencies, and/or the like), data labeling (e.g., initial annotations completed), completion of a task, non-validation of a tool, user approval to execute a tool call (e.g., a tool configured to non-automatic execution), writing to databases (e.g., updating data objects in an ontology), processing of a certain number of tokens by an LLM, completion of a predefined step in an execution pipeline, requests for additional information (e.g., requests for additional context), idle agents, and/or the like.

In various implementations, notification conditions can be indicative of hallucinations by the LLM, such as when the LLM generates text that is factually incorrect, logically inconsistent, and/or not grounded in the inputs provided to the LLM or real-world knowledge. A hallucination may appear as a coherent and plausible response, but is not supported by the data and/or instructions provided to the LLM. These errors can arise from gaps in training data, misinterpretation of a prompt, a model's tendency to favor fluent over accurate responses, and/or due to various other reasons. For example, if an agent and/or LLM outputs a tool call for a tool that is unrelated to a user query and/or outputs a request for additional context that is unrelated to a user query, this may indicate a possible hallucination by the LLM.

At block 1106, the system generates a notification indicative of the determined notification condition. For example, the user interface module 104 may generate user interface data to render visual indicia representative of the notification in a GUI. In various implementations, notifications can include visual alerts, auditory alerts (e.g., output by a speaker), and/or haptic alerts (e.g., vibration of a device or component thereof).

In various implementations, the process 1100 may optionally proceed to block 1108. At block 1108, the system may provide an editable representation of the notification. For example, the user interface module 104 may generate an editable representation to be rendered in the GUI. Accordingly, the user may delete the notification or otherwise interact with the notification, such as to review the underlying notification condition, and, optionally, permit further processing by the agent and/or LLM.

### Additional Example Implementations and Details

In various implementations, the systems or devices described herein (e.g., one or more aspects of the agent system 102, data services 120, LLM 130, user device 150, and/or the like) may comprise, or be implemented in, a "virtual computing environment". As used herein, the term "virtual computing environment" should be construed broadly to include, for example, computer-readable program instructions executed by one or more processors to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may comprise a modification of the operation of the virtual computing environment in response to inputs and according to various rules. Other functionality implemented by the virtual computing environment (as described throughout this disclosure) may further comprise modifications of the operation of the virtual computing environment, for example, the operation of the virtual computing environment may change depending on the information gathered by the system. Initial operation of the virtual computing environment may be understood as an establishment of the virtual computing environment. In some implementations the virtual computing environment may comprise one or more virtual machines, containers, and/or other types of emulations of computing systems or environments. In some implementations the virtual computing environment may comprise a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in some implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

For example, FIG. 12 shows a block diagram that illustrates a computer system 1200 upon which various implementations and/or aspects (e.g., one or more aspects of the agent system 102, data services 120, LLM 130, user device 150, and/or the like) may be implemented. Multiple such computer systems 1200 may be used in various implementations of the present disclosure. Computer system 1200 includes a bus 1202 or other communication mechanism for communicating information, and a hardware processor, or multiple processors, 1204 coupled with bus 1202 for processing information. Hardware processor(s) 1204 may be, for example, one or more general purpose microprocessors.

Computer system 1200 also includes a main memory 1206, such as a random-access memory (RAM), cache and/or other dynamic storage devices, coupled to bus 1202 for storing information and instructions to be executed by processor 1204. Main memory 1206 also may be used for storing temporary variables or other intermediate information during execution of instructions to be executed by processor 1204. Such instructions, when stored in storage media accessible to processor 1204, render computer system 1200 into a special-purpose machine that is customized to perform the operations specified in the instructions. The main memory 1206 may, for example, include instructions to implement server instances, queuing modules, memory queues, storage queues, user interfaces, and/or other aspects of functionality of the present disclosure, according to various implementations.

Computer system 1200 further includes a read only memory (ROM) 1208 or other static storage device coupled to bus 1202 for storing static information and instructions for processor 1204. A storage device 1210, such as a magnetic disk, optical disk, or USB thumb drive (Flash drive), and/or the like, is provided and coupled to bus 1202 for storing information and instructions.

Computer system 1200 may be coupled via bus 1202 to a display 1212, such as a cathode ray tube (CRT) or LCD display (or touch screen), for displaying information to a computer user. An input device 1214, including alphanumeric and other keys, is coupled to bus 1202 for communicating information and command selections to processor 1204. Another type of user input device is cursor control 1216, such as a mouse, a trackball, or cursor direction keys for communicating direction information and command selections to processor 1204 and for controlling cursor movement on display 1212. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computing system 1200 may include a user interface module to implement a GUI that may be stored in a mass storage device as computer executable program instructions that are executed by the computing device(s). Computer system 1200 may further, as described below, implement the techniques described herein using customized hard-wired logic, one or more ASICs or FPGAs, firmware, and/or program logic which in combination with the computer system causes or programs computer system 1200 to be a special-purpose machine. According to one implementation, the techniques herein are performed by computer system 1200 in response to processor(s) 1204 executing one or more sequences of one or more computer-readable program instructions contained in main memory 1206. Such instructions may be read into main memory 1206 from another storage medium, such as storage device 1210. Execution of the sequences of instructions contained in main memory 1206 causes processor(s) 1204 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 1204 for execution. For example, the instructions may initially be carried on a magnetic disk or solid-state drive of a remote computer. The remote computer can load the instructions into its dynamic memory and send the instructions over a telephone line using a modem. A modem local to computer system 1200 can receive the data on the telephone line and use an infra-red transmitter to convert the data to an infra-red signal. An infra-red detector can receive the data carried in the infra-red signal and appropriate circuitry can place the data on bus 1202. Bus 1202 carries the data to main memory 1206, from which processor 1204 retrieves and executes the instructions. The instructions received by main memory 1206 may optionally be stored on storage device 1210 either before or after execution by processor 1204.

Computer system 1200 also includes a communication interface 1218 coupled to bus 1202. Communication interface 1218 provides a two-way data communication coupling to a network link 1220 that is connected to a local network 1222. For example, communication interface 1218 may be an integrated services digital network (ISDN) card, cable modem, satellite modem, or a modem to provide a data communication connection to a corresponding type of telephone line. As another example, communication interface 1218 may be a local area network (LAN) card to provide a data communication connection to a compatible LAN (or WAN component to communicate with a WAN). Wireless links may also be implemented. In any such implementation, communication interface 1218 sends and receives electrical, electromagnetic, or optical signals that carry digital data streams representing various types of information.

Network link 1220 typically provides data communication through one or more networks to other data devices. For example, network link 1220 may provide a connection through local network 1222 to a host computer 1224 or to data equipment operated by an Internet Service Provider (ISP) 1226. ISP 1226 in turn provides data communication services through the worldwide packet data communication network now commonly referred to as the "Internet" 1228. Local network 1222 and Internet 1228 both use electrical, electromagnetic, or optical signals that carry digital data streams. The signals through the various networks and the signals on network link 1220 and through communication interface 1218, which carry the digital data to and from computer system 1200, are example forms of transmission media.

Computer system 1200 can send messages and receive data, including program code, through the network(s), network link 1220 and communication interface 1218. In the Internet example, a server 1230 might transmit a requested code for an application program through Internet 1228, ISP 1226, local network 1222 and communication interface 1218.

The received code may be executed by processor 1204 as it is received, and/or stored in storage device 1210, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds at which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Aspects or Clauses

Examples of implementations of the present disclosure can be described in view of the following example aspects or clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1. A computer-implemented method performed by a computing system having one or more hardware computer processors in communication with one or more non-transitory computer readable storage devices storing software instructions executable by the hardware computer processors, the method comprising: receiving one or more first user inputs via a graphical user interface (GUI), wherein the one or more first user inputs defines one or more context items, wherein a context item of the one or more context items comprises either an editable representation or a non-editable representation; providing, in the GUI, editable representations of the one or more context items; generating a first prompt for a large language model (LLM) that includes indications of the one or more context items; providing the first prompt to the LLM; receiving a response from the LLM based on the first prompt; providing, in the GUI, an editable representation of the response, wherein the response comprises an additional context item of the one or more context items; receiving one or more second user inputs via the GUI, wherein the one or more second user inputs indicates a modification to at least one context item of the one or more context items via an associated editable representation, and wherein the at least one context item comprises a modified context item; generating a second prompt for the LLM that includes indications of the one or more context items including the modified context item; and providing the second prompt to the LLM.

Clause 2. The computer-implemented method of Clause 1, wherein the editable representation is at least one of: deletable by the user; updateable by the user; or addable by the user.

Clause 3. The computer-implemented method of Clause 1 or Clause 2, wherein the one or more context items include at least one of: a task to be completed by the LLM; one or more datasets that are available to the system; or one or more tools that are available to the system, the one or more tools accessible by the system in response to a tool call from the LLM.

Clause 4. The computer-implemented method of any preceding Clause, wherein user interaction with the GUI automatically, and without additional user interaction, modifies the one or more context items fed to the LLM.

Clause 5. The computer-implemented method of any preceding Clause, wherein user modification of the one or more context items is configured to retroactively modify the one or more context items previously fed to the LLM.

Clause 6. The computer-implemented method of any preceding Clause, further comprising, by one or more processors executing program instructions: generating one or more subagents to modify the one or more context items, wherein each subagent of the one or more subagents is configured to receive a request to perform a task associated with modifying said one or more context items.

Clause 7. A computer-implemented method performed by a computing system having one or more hardware computer processors in communication with one or more non-transitory computer readable storage devices storing software instructions executable by the hardware computer processors, the method comprising: receiving an output from a large language model (LLM), wherein: the output is responsive to a prompt including context, the output comprises a tool call that is associated with a tool accessible by the system in response to the tool call, and the tool comprises a tool definition having one or more tool parameters; determining an execution mode of the tool call based on at least the tool definition and the context, wherein: determining the execution mode comprises determining a value of a first tool parameter of the one or more tool parameters based on the context, the first tool parameter value is indicative of the execution mode, and the execution mode comprises either an automatic execution mode or a non-automatic execution mode; and executing the tool call based on the determined execution mode.

Clause 8. The computer-implemented method of Clause 7, further comprising, by the one or more processors executing program instructions: responsive to determining that the execution mode is the automatic execution mode, automatically, and without additional user interaction, executing the tool call.

Clause 9. The computer-implemented method of Clause 7 or Clause 8, further comprising, by the one or more processors executing program instructions: responsive to determining that the execution mode is the non-automatic execution mode, generating a notification for visualization by a user indicative of a request to execute the tool call.

Clause 10. The computer-implemented method of any preceding Clause, further comprising, by the one or more processors executing program instructions: executing the tool call in response to user input to execute said tool call.

Clause 11. The computer-implemented method of any preceding Clause, further comprising, by the one or more processors executing program instructions: receiving user input to select an execution mode; and executing the tool call based on the user input.

Clause 12. The computer-implemented method of any preceding Clause, further comprising, by the one or more processors executing program instructions: validating the tool call based on at least the tool definition and the context.

Clause 13. A computer-implemented method performed by a computing system having one or more hardware computer processors in communication with one or more non-transitory computer readable storage devices storing software instructions executable by the hardware computer processors, the method comprising: receiving an output from a large language model (LLM), wherein the output is responsive to a prompt including a task to be completed and context; determining a notification condition based on the output, wherein the notification condition comprises at least one of: completion of the task; non-validation of a tool that is included in the context; user approval for execution of a tool call indicated in the output, wherein the tool call is associated with a tool that is accessible by the system; detection that an agent is idle; writing data items to a database or ontology; or a request for additional context; and responsive to detecting the notification condition, generating a notification for visualization by a user.

Clause 14. The computer-implemented method of Clause 13, further comprising, by the one or more processors executing program instructions: providing an editable representation of the notification in a graphical user interface (GUI).

Clause 15. The computer-implemented method of Clause 13 or Clause 14, wherein the notification comprises an auditory alert.

Clause 16. The computer-implemented method of any preceding Clause, wherein the notification comprises a haptic alert.

Clause 17. The computer-implemented method of any preceding Clause, wherein the notification comprises a visual alert.

Clause 18. The computer-implemented method of any preceding Clause, wherein the notification condition is indicative of a hallucination by the LLM.

Clause 19. A system comprising: one or more computer-readable storage mediums or devices comprising, configured to store, and/or storing program instructions; and one or more processors configured to execute the program instructions to cause the system to perform the computer-implemented method of any of Clauses 1-18.

Clause 20. One or more computer-readable storage mediums or devices comprising, configured to store, and/or storing program instructions, the program instructions executable by one or more processors to cause the one or more processors to perform the computer-implemented method of any of Clauses 1-18.

## Claims

1. A computer-implemented method performed by a computing system having one or more hardware computer processors in communication with one or more non-transitory computer readable storage devices storing software instructions executable by the hardware computer processors, the method comprising:
receiving one or more first user inputs via a graphical user interface ("GUI"), wherein the one or more first user inputs defines one or more context items, wherein a context item of the one or more context items comprises either an editable representation or a non-editable representation;
providing, in the GUI, editable representations of the one or more context items;
generating a first prompt for a large language model ("LLM") that includes indications of the one or more context items;
providing the first prompt to the LLM;
receiving a response from the LLM based on the first prompt;
providing, in the GUI, an editable representation of the response, wherein the response comprises an additional context item of the one or more context items;
receiving one or more second user inputs via the GUI, wherein the one or more second user inputs indicates a modification to at least one context item of the one or more context items via an associated editable representation, and wherein the at least one context item comprises a modified context item;
generating a second prompt for the LLM that includes indications of the one or more context items including the modified context item; and
providing the second prompt to the LLM.

2. The computer-implemented method of Claim 1, wherein the editable representation is deletable by the user.

3. The computer-implemented method of Claim 1 or Claim 2, wherein the editable representation is updateable by the user.

4. The computer-implemented method of any preceding Claim, wherein the editable representation is addable by the user.

5. The computer-implemented method of any preceding Claim, wherein the one or more context items includes a task to be completed by the LLM.

6. The computer-implemented method of any preceding Claim, wherein the one or more context items includes one or more datasets that are available to the system.

7. The computer-implemented method of any preceding Claim, wherein the one or more context items includes one or more tools that are available to the system, the one or more tools accessible by the system in response to a tool call from the LLM.

8. The computer-implemented method of any preceding Claim, wherein user interaction with the GUI automatically, and without additional user interaction, modifies the one or more context items fed to the LLM.

9. The computer-implemented method of any preceding Claim, wherein user modification of the one or more context items is configured to retroactively modify the one or more context items previously fed to the LLM.

10. The computer-implemented method of any preceding Claim, further comprising, by one or more processors executing program instructions:
generating one or more subagents to modify the one or more context items, wherein each subagent of the one or more subagents is configured to receive a request to perform a task associated with modifying said one or more context items.

11. A system comprising:
one or more computer-readable storage mediums or devices comprising, configured to store, and/or storing program instructions; and
one or more processors configured to execute the program instructions to cause the system to perform the computer-implemented method of any of Claims 1-10.

12. One or more computer-readable storage mediums or devices comprising, configured to store, and/or storing program instructions, the program instructions executable by one or more processors to cause the one or more processors to perform the computer-implemented method of any of Claims 1-10.
